# EUROPÄISCHE PATENTSCHRIFT

(11) **EP 3 791 465 B1**
(45) Veröffentlichungstag und Bekanntmachung des Hinweises auf die Patenterteilung: **20.10.2021**
(21) Anmeldenummer: 19736710.5
(22) Anmeldetag: 05.07.2019
(51) Int. Cl.: H02K 41/03, H02K 3/47

(54) **STATOR FÜR EINEN PLANARMOTOR**
STATOR FOR A PLANAR MOTOR
STATOR POUR UN MOTEUR PLANAIRE

(30) Priorität: 25.07.2018 DE 102018117981
(43) Veröffentlichungstag der Anmeldung: 17.03.2021
(73) Patentinhaber: Beckhoff Automation GmbH, 33415 Verl (DE)
(72) Erfinder: BRINKMANN, Rolf, 32107 Bad Salzuflen (DE); BENTFELD, Lukas, 33098 Paderborn (DE); PRUESSMEIER, Uwe, 32657 Lemgo (DE)
(74) Vertreter: Patentanwaltskanzlei WILHELM & BECK
(86) Internationale Anmeldenummer: PCT/EP2019/068142
(87) Internationale Veröffentlichungsnummer: WO 2020/020605

(56) Entgegenhaltungen:
- US-A1- 2005 253 463
- US-A1- 2017 317 569

## Beschreibung

Die Erfindung betrifft Statoreinheiten für einen elektrischen Planarmotor .

Planarantriebssysteme mit elektrischen Planarmotoren können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Spulenleiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Spulenleiter des Planarmotors in einem ortsfest angeordneten planaren Stator angeordnet sind.

Bei einem derartigen Antriebssystem umfasst der Läufer mindestens eine erste Magneteinheit und eine zweite Magneteinheit und der Stator umfasst mindestens eine Gruppe bestrombarer erster Spulenleiter und eine Gruppe bestrombarer zweiter Spulenleiter. Für das Antreiben des Läufers wirken die ersten Spulenleiter mit den ersten Antriebsmagneten und die zweiten Spulenleiter mit den zweiten Antriebsmagneten zusammen. Dabei können die ersten Spulenleiter in einer ersten Richtung länglich ausgedehnt und dazu ausgebildet sein, den Läufer in Wechselwirkung mit den ersten Antriebsmagneten in einer zu der ersten Richtung senkrechten Richtung anzutreiben. Die zweiten Spulenleiter können in einer von der ersten Richtung verschiedenen zweiten Richtung länglich ausgedehnt und dazu ausgebildet sein, den Läufer in Wechselwirkung mit den zweiten Antriebsmagneten in einer zu der zweiten Richtung senkrechten Richtung anzutreiben.

Bei derartigen Planarantriebssystemen können die mit dem Antriebsstrom beaufschlagbaren Spulenleiter in einer Statoreinheit des Stators angeordnet sein. Die Spulenleiter können dabei in mehreren Statorlagen angeordnet sein, wobei die Statorlagen in einer zu der ersten und der zweiten Richtung senkrecht orientierten dritten Richtung übereinander angeordnet sind.

Die Antriebsströme werden als Wechselströme in die Spulenleiter des Stators eingespeist. Beim Antreiben des Läufers der genannten Planarantriebssysteme werden die Antriebsströme also moduliert oder umgepolt. Zusätzlich können die Antriebsströme pulsweitenmoduliert werden. Insbesondere die Frequenz der Pulsweitenmodulation wird einerseits hoch genug gewählt, um eine geringe Restwelligkeit des Antriebsstroms zu gewährleisten, andererseits niedrig genug, um Wechselstromverluste in den die Antriebsströme erzeugenden Stromregeleinheiten und den die Antriebsströme leitenden Spulenleitern zu begrenzen.

Die Druckschriften WO 2013/059934 A1, WO 2015/017933 A1, WO 2015/179962 A1, WO 2015/184553 A1, WO 2015/188281 A1, WO 2017/004716 A1 und US 2017/3175669 A1 beschreiben jeweils Planarantriebssysteme *(displacement devices),* welche einen elektromagnetischen Planarmotor mit einem permanenterregten Läufer und einem mehrere bestrombare Leiter umfassenden Stator umfassen.

Die Druckschrift US 2005 025 34 63 A1 offenbart eine Statoreinheit gemäß dem jeweiligen Oberbegriff der Ansprüche 1 und 15.

Aufgabe der vorliegenden Erfindung ist es, Statoreinheiten anzugeben, bei dem sich die Antriebsströme in den Spulenleitern schnell und verlustarm modulieren oder umpolen lassen.

Diese Aufgabe wird durch Statoreinheiten gemäß den unabhängigen Ansprüchen gelöst. Weiterbildungen sind jeweils in den abhängigen Ansprüchen angeben.

Die Erfindung betrifft insbesondere Statoreinheiten für einen Planarmotor, die mehrere Statorlängslagen mit in einer ersten Richtung länglich ausgedehnten ersten Spulenleitern und mehrere Statorschräg- oder -querlagen mit in einer von der ersten Richtung verschiedenen zweiten Richtung länglich ausgedehnten zweiten Spulenleitern umfassen und bei denen die Statorlängslagen und die Statorschräg- oder -querlagen in einer zu der ersten und zweiten Richtung senkrecht orientierten dritten Richtung übereinander angeordnet sind.

Die Erfindung basiert auf der Erkenntnis, dass sich bei einer derartigen Statoreinheit unter Umständen hohe parasitäre Kapazitäten oder Blindwiderstände ausbilden können und dass diese parasitären Kapazitäten bei einer Beaufschlagung der Spulenleiter mit Wechselströmen zu hohen Verlusten führen und die maximale Schaltfrequenz limitieren können.

Im Rahmen der Erfindung wurde erkannt, dass die parasitäre Kapazitanz der Statorschräg- oder -querlagen oder der Statorlängslagen umso höher ist, je mehr Statorlängslagen in der dritten Richtung neben einer Statorschräg- oder -querlage platziert werden und umgekehrt. Daraus wurde im Rahmen der Erfindung gefolgert, dass eine besonders niedrige Kapazitanz der Anordnung aus Statorschräg- oder -querlagen und Statorlängslagen dadurch erzielt werden kann, dass möglichst wenig Statorlängslagen neben einer Statorschräg- oder -querlage platziert werden und umgekehrt. Inwieweit dies möglich ist, kann jedoch von weiteren Randbedingungen an die Anordnung der Statorschräg- oder -querlagen und der Statorlängslagen abhängen.

Eine Statoreinheit zum Antreiben eines Läufers eines elektrischen Planarmotors umfasst Statorlängslagen mit ersten Spulenleitern zur Wechselwirkung mit ersten Antriebsmagneten des Läufers und Statorschräg- oder -querlagen mit zweiten Spulenleitern zur Wechselwirkung mit zweiten Antriebsmagneten des Läufers. Die ersten Spulenleiter sind in einer ersten Richtung länglich ausgedehnt und die zweiten Spulenleiter sind in einer von der ersten Richtung verschiedenen zweiten Richtung länglich ausgedehnt. Die Statorlängslagen und die Statorschräg- oder -querlagen sind in einer zu der ersten und zweiten Richtung senkrecht orientierten dritten Richtung übereinander angeordnet. Dabei ist eine oberste Statorlage der Statoreinheit und eine unterste Statorlage der Statoreinheit jeweils als Statorlängslage mit ersten Spulenleitern ausgebildet. Die Statorlängslagen sind in der dritten Richtung höchstens auf einer Seite neben einer Statorschräg- oder -querlage angeordnet und die Statorschräg- oder - querlagen sind in der dritten Richtung höchstens auf einer Seite neben einer Statorlängslage angeordnet.

Die Statoreinheit weist in der dritten Richtung eine besonders geringe Anzahl von Statorlagenwechseln auf, bei denen sich die Orientierung der Spulenleiter ändert. Insbesondere grenzen Innenlagen der Statoreinheit, die in der dritten Richtung zwischen der obersten und der untersten Statorlage angeordnet sind, in der dritten Richtung jeweils höchstens an einer Seite an eine Statorlage an, deren Spulenleiter eine andere Ausrichtung aufweisen als die Spulenleiter der betreffenden Innenlage. Zumindest auf der anderen Seite grenzen die Innenlagen an eine Statorlage an, deren Spulenleiter die gleiche Ausrichtung aufweisen wie die Spulenleiter der betreffenden Innenlage. Dies führt zu einer besonders niedrigen Kapazitanz der Anordnung erster und zweiter Spulenleiter.

Bei der Statoreinheit können die als Statorlängslagen ausgebildeten Innenlagen paarweise nebeneinander und jeweils zwischen zwei Statorschräg- oder -querlagen angeordnet sein und die als Statorschräg- oder -querlagen ausgebildeten Innenlagen können jeweils paarweise nebeneinander und jeweils zwischen zwei Statorlängslagen angeordnet sein.

Bei der Statoreinheit kann insbesondere in der dritten Richtung neben jeder als Statorlängslage ausgebildeten Statorlage eine Statorschräg- oder -querlage angeordnet sein und neben jeder als Statorschräg- oder -querlage ausgebildeten Statorlage kann in der dritten Richtung eine Statorlängslage angeordnet sein. Dadurch kann die Statoreinheit insbesondere mehrere, in der dritten Richtung übereinander angeordnete Trägerplatten aufweisen, auf deren einer Seite eine Statorlängslage und auf deren anderer Seite eine Statorschräg- oder -querlage angeordnet ist. Da bei der Statoreinheit die oberste Statorlage und die unterste Statorlage als Statorlängslage ausgebildet sind, kann bei der Statoreinheit die Anordnung der Statorlängslagen und der Statorschräg- oder -querlagen in der dritten Richtung symmetrisch um eine gemeinsame Mittenebene der Statorlängslagen und Statorschräg- oder -querlagen angeordnet sein. Außerdem können die Statorlängslagen und die Statorschräg- oder -querlagen den gleichen mittleren Abstand von einer Statorfläche der Statoreinheit aufweisen. Insgesamt löst die Statoreinheit daher die eingangs genannte Aufgabe insbesondere unter den Randbedingungen, dass neben jeder Statorschräg- oder -querlage eine Statorlängslage und neben jeder Statorlängslage eine Statorschräg- oder -querlage angeordnet ist und/oder dass die Anordnung der Statorlängslagen und der Statorschräg- oder -querlagen in der dritten Richtung symmetrisch um eine gemeinsame Mittenebene ist und/oder dass die Statorlängslagen und die Statorschräg- oder -querlagen den gleichen mittleren Abstand von der Statorfläche der Statoreinheit aufweisen.

Bei einer Weiterbildung der Statoreinheit sind eine zweitoberste Statorlage der Statoreinheit und eine zweitunterste Statorlage der Statoreinheit jeweils als Statorschräg- oder -querlagen mit zweiten Spulenleitern ausgebildet. Dadurch ist in der dritten Richtung neben der als Statorlängslage ausgebildeten obersten Statorlage und neben der als Statorlängslage ausgebildeten untersten Statorlage jeweils eine Statorschräg- oder -querlage angeordnet. Dadurch können die oberste und die zweitoberste Statorlage auf einander gegenüberliegenden Seiten einer zweilagigen Trägerplatte angeordnet sein, so dass die Trägerplatte auf der einen Seite in der ersten Richtung ausgedehnte erste Spulenleiter und auf der gegenüberliegenden Seite in der zweiten Richtung ausgedehnte zweite Spulenleiter aufweist.

Bei einer derartigen Trägerplatte können die ersten Spulenleiter auf einfache Weise mittels Horizontalverbindungsstrukturen, die auf der den ersten Spulenleitern gegenüberliegenden Seite der Trägerplatte angeordnet sind, elektrisch leitend miteinander verbunden werden. Außerdem können die zweiten Spulenleiter auf einfache Weise mittels Horizontalverbindungsstrukturen, die auf der den zweiten Spulenleitern gegenüberliegenden Seite der Trägerplatte angeordnet sind, elektrisch leitend miteinander verbunden werden.

Bei einer Weiterbildung umfasst die Statoreinheit eine erste Statorlängslage und eine zweite Statorlängslage, sowie eine erste Statorschräg- oder -querlage und eine zweite Statorschräg- oder -querlage. Die Statoreinheit umfasst weiter eine in der ersten und zweiten Richtung ausgedehnte erste Trägerplatte und eine in der ersten und zweiten Richtung ausgedehnte zweite Trägerplatte. Auf einer ersten Seite der ersten Trägerplatte ist die erste Statorlängslage und auf einer der ersten Seite der ersten Trägerplatte in der dritten Richtung gegenüberliegenden zweiten Seite der ersten Trägerplatte ist die erste Statorschräg- oder -querlage angeordnet. Auf einer ersten Seite der zweiten Trägerplatte ist die zweite Statorlängslage und auf einer der ersten Seite der zweiten Trägerplatte in der dritten Richtung gegenüberliegenden zweiten Seite der zweiten Trägerplatte ist die zweite Statorschräg- oder -querlage angeordnet. Die zweite Trägerplatte ist in der dritten Richtung neben der ersten Trägerplatte angeordnet und parallel zu der ersten Trägerplatte ausgerichtet und die zweite Seite der ersten Trägerplatte ist der zweiten Seite der zweiten Trägerplatte zugewandt angeordnet.

Eine Statoreinheit, deren Statorlagen auf zweiseitigen Trägerplatten angeordnet sind, kann besonders einfach und kostengünstig hergestellt werden. Indem die auf der zweiten Seite der zweiten Trägerplatte angeordneten zweiten Spulenleiter neben den auf der zweiten Seite der ersten Trägerplatte angeordneten zweiten Spulenleitern angeordnet werden, grenzen die in der zweiten Richtung länglich ausgedehnten zweiten Spulenleiter in der dritten Richtung lediglich auf einer Seite an in der ersten Richtung länglich ausgedehnte erste Spulenleiter. Dadurch weist die Anordnung zweiter Spulenleiter eine besonders niedrige Kapazitanz auf.

Die erste Trägerplatte und die zweite Trägerplatte weisen jeweils auf ihren ersten Seiten eine Statorlängslage und auf ihren zweiten Seiten eine Statorschräg- oder -querlage auf. Dadurch können die ersten Spulenleiter der Statorlängslagen auf einfache Weise mittels Horizontalverbindungsstrukturen, die auf den Statorschräg- oder -querlagen angeordnet sind, miteinander verbunden werden. Außerdem können die Statorschräg- oder -querlagen auf einfache Weise mittels Horizontalverbindungsstrukturen, die auf den Statorlängslagen angeordnet sind, elektrisch leitend miteinander verbunden werden.

Bei einer Weiterbildung der Statoreinheit umfasst die erste Trägerplatte eine erste Vertikalverbindungsstruktur und die zweite Trägerplatte umfasst eine zweite Vertikalverbindungsstruktur. Die erste Vertikalverbindungsstruktur erstreckt sich in der dritten Richtung von der ersten Seite der ersten Trägerplatte bis zu der zweiten Seite der ersten Trägerplatte und verbindet einen auf der ersten Seite der ersten Trägerplatte angeordneten ersten Spulenleiter elektrisch leitend mit einer auf der zweiten Seite der ersten Trägerplatte angeordneten ersten Leiterstruktur. Die zweite Vertikalverbindungsstruktur erstreckt sich in der dritten Richtung von der zweiten Seite der zweiten Trägerplatte bis zu der ersten Seite der zweiten Trägerplatte und verbindet einen auf der ersten Seite der zweiten Trägerplatte angeordneten ersten Spulenleiter elektrisch leitend mit einer auf der zweiten Seite der zweiten Trägerplatte angeordneten zweiten Leiterstruktur.

Über die erste Vertikalverbindungsstruktur und die zweite Vertikalverbindungsstruktur können die erste und zweite Seite der ersten Trägerplatte und die erste und zweite Seite der zweiten Trägerplatte besonders platzsparend miteinander verbunden sein. Die erste Vertikalverbindungsstruktur und die zweite Vertikalverbindungsstruktur können insbesondere in der dritten Richtung übereinander angeordnet sein. Die erste Vertikalverbindungsstruktur kann in der dritten Richtung insbesondere jeweils auf der ersten Seite der ersten Trägerplatte und auf der zweiten Seite der ersten Trägerplatte enden. Außerdem kann die zweite Vertikalverbindungsstruktur in der dritten Richtung insbesondere jeweils auf der ersten Seite der zweiten Trägerplatte und auf der zweiten Seite der zweiten Trägerplatte enden. Insbesondere ragt die erste Vertikalverbindungsstruktur in der dritten Richtung nicht über die erste Trägerplatte hinaus und die zweite Vertikalverbindungsstruktur ragt in der dritten Richtung insbesondere nicht über die zweite Trägerplatte hinaus. Die erste und die zweite Vertikalverbindungsstruktur können insbesondere als *buried vias* oder als *blind vias* ausgebildet sein.

Die erste und zweite Leiterstruktur können in der zweiten Richtung länglich ausgedehnt sein und auf der zweiten Seite der ersten und zweiten Trägerplatte jeweils parallel zu den zweiten Spulenleitern ausgerichtet sein. Dadurch können die erste und die zweite Horizontalverbindungsstruktur besonders platzsparend auf den zweiten Seiten der ersten und zweiten Trägerplatte angeordnet werden.

Bei einer Weiterbildung der Statoreinheit umfasst die Statoreinheit eine dritte Vertikalverbindungsstruktur,
wobei die dritte Vertikalverbindungsstruktur einen auf der ersten Seite der ersten Trägerplatte angeordneten ersten Spulenleiter mit einer auf der zweiten Seite der zweiten Trägerplatte angeordneten dritten Leiterstruktur elektrisch leitend verbindet. Über die dritte Vertikalverbindungsstruktur können die auf der ersten Trägerplatte angeordneten Spulenleiter auf einfache Weise mit den auf der zweiten Trägerplatte angeordneten Spulenleitern elektrisch leitend verbunden sein.

Bei einer Weiterbildung der Statoreinheit umfasst die dritte Vertikalverbindungsstruktur eine Durchgangsöffnung, die sich in der dritten Richtung von einer Oberseite der Statoreinheit bis zu einer Unterseite der Statoreinheit erstreckt. Eine derartige Vertikalverbindungsstruktur kann besonders einfach hergestellt werden. Beispielsweise kann die Durchgangsöffnung nach dem Anordnen der ersten und der zweiten Trägerplatte in einem die gesamte Statoreinheit durchdringenden Bohrvorgang gebohrt werden. Die Durchgangsöffnung kann eine leitend beschichtete Wandung aufweisen und/oder mit einem elektrisch leitfähigen Material verfüllt sein.

Bei einer Weiterbildung der Statoreinheit umfasst die Statoreinheit in der ersten und zweiten Richtung ausgedehnte weitere Trägerplatten, wobei die weiteren Trägerplatten jeweils eine erste Seite und eine der ersten Seite in der dritten Richtung gegenüberliegende zweite Seite aufweisen. An der ersten Seite der weiteren Trägerplatten ist jeweils eine Statorlängslage und an der zweiten Seite der weiteren Trägerplatten ist jeweils eine Statorschräg- oder -querlage angeordnet. Die erste Trägerplatte, die zweite Trägerplatte und die weiteren Trägerplatten sind in der dritten Richtung nebeneinander angeordnet und parallel zueinander ausgerichtet. Dabei sind einander zugewandte Seiten der nebeneinander angeordneten Trägerplatten in der dritten Richtung abwechselnd als einander zugewandte erste Seiten oder als einander zugewandte zweite Seiten ausgebildet.

Durch einen Aufbau der Statoreinheit aus in der dritten Richtung übereinander angeordneten Trägerplatten mit jeweils einer ersten Statorlage und einer zweiten Statorlage kann die Statoreinheit auf einfache Weise hergestellt werden. Indem einander zugewandte Seiten der nebeneinander angeordneter Trägerplatten in der dritten Richtung abwechselnd als einander zugewandte erste Seiten oder als einander zugewandte zweite Seiten ausgebildet sind, tragen die Grenzflächen der einander zugewandten ersten Seiten der Trägerplatten und die Grenzflächen der einander zugewandten zweiten Seiten der Trägerplatten nicht zur Kapazitanz der Statorlagenanordnung bei und die Statorlagenanordnung weist eine besonders geringe Kapazitanz auf.

Die ersten Spulenleiter auf den ersten Seiten der Trägerplatten können jeweils mittels auf den zweiten Seiten der Trägerplatten angeordneter Horizontalverbindungsstrukturen elektrisch leitend miteinander verbunden sein. Die Horizontalverbindungsstrukturen auf den zweiten Seiten der Trägerplatten können in der zweiten Richtung länglich ausgedehnt sein und auf der zweiten Seite der Trägerplatten parallel zu den zweiten Spulenleitern verlaufen. Umgekehrt können die zweiten Spulenleiter auf den zweiten Seiten der Trägerplatten jeweils mittels auf den ersten Seiten der Trägerplatten angeordneter Horizontalverbindungsstrukturen elektrisch leitend miteinander verbunden sein. Die Horizontalverbindungsstrukturen auf den ersten Seiten der Trägerplatten können in der ersten Richtung länglich ausgedehnt sein und auf der ersten Seite der Trägerplatten parallel zu den ersten Spulenleitern verlaufen.

Eine Weiterbildung der Statoreinheit umfasst mindestens zwei Statorlängslagen mit ersten Spulenleitern und mindestens drei Statorschräg- oder -querlagen mit zweiten Spulenleitern. Dabei sind alle Statorschräg- oder -querlagen in der dritten Richtung nebeneinander angeordnet. Ein erster Teil der Statorlängslagen ist in der dritten Richtung oberhalb der Statorschräg- oder - querlagen und ein zweiter Teil der Statorlängslagen ist in der dritten Richtung unterhalb der Statorschräg- oder -querlagen angeordnet, so dass lediglich zwei der Statorschräg- oder -querlagen neben einer Statorlängslage angeordnet sind.

Eine derartige Statoreinheit weist lediglich zwei Grenzflächen auf, an denen in der zweiten Richtung ausgedehnte zweite Spulenleiter in der dritten Richtung neben in der ersten Richtung ausgedehnten ersten Spulenleitern angeordnet sind. Damit tragen auch nur diese beiden Grenzflächen zur Kapazitanz der Anordnung zweiter Spulenleiter und zur Kapazitanz der Anordnung erster Spulenleiter bei. Dadurch kann eine besonders niedrige Kapazitanz der ersten und zweiten Spulenleiter erreicht werden und die Antriebsströme in den ersten und zweiten Spulenleitern können besonders schnell und verlustarm geschaltet werden.

Die Statoreinheit, bei der mindestens drei Statorschräg- oder - querlagen in der dritten Richtung nebeneinander und zwischen einem ersten Teil und einem zweiten Teil der Statorlängslagen angeordnet sind, ermöglicht es, die Statorlagen in der dritten Richtung derart anzuordnen, dass die Statorlängslagen und die Statorschräg- oder -querlagen den gleichen mittleren Abstand von einer Statorfläche der Statoreinheit aufweisen. Insbesondere können die Statorlängslagen und die Statorschräg- oder -querlagen symmetrisch um eine gemeinsame Mittenebene der Statorlängslagen und der Statorschräg- oder -querlagen angeordnet werden. Bei einer Statoreinheit, bei der mindestens drei Statorschräg- oder -querlagen in der dritten Richtung nebeneinander angeordnet werden, kann die Statoreinheit nicht ausschließlich aus Trägerplatten aufgebaut sein, bei denen auf einer Seite der Trägerplatten jeweils eine Statorschräg- oder -querlage und auf einer gegenüberliegenden Seite der Trägerplatten jeweils eine Statorlängslage angeordnet ist. Eine derartige Statoreinheit löst daher die eingangs genannte Aufgabe insbesondere unter der Randbedingung, dass die Statorlängslagen und die Statorschräg- oder - querlagen zwar den gleichen mittleren Abstand von einer Statorfläche der Statoreinheit aufweisen, die Statoreinheit jedoch nicht ausschließlich aus Trägerplatten aufgebaut sein muss, auf deren einer Seite einer Statorlängslage und auf deren anderer Seite eine Statorschräg- oder -querlage angeordnet ist.

Bei einer Weiterbildung der Statoreinheit umfasst der erste Teil der Statorlängslagen und der zweite Teil der Statorlängslagen eine gleiche Anzahl von Statorlängslagen. Dadurch können die Statorlängslagen in der dritten Richtung symmetrisch um eine Mittenebene der Statorlängslagen angeordnet werden, so dass die Statoreinheit einen besonders einfachen Aufbau aufweist.

Bei einer Weiterbildung der Statoreinheit sind die erste Richtung und die zweite Richtung senkrecht zueinander orientiert. Daraus ergibt sich eine besonders einfache Anordnung der ersten und zweiten Spulenleiter der Statoreinheit. Insbesondere können die in der ersten Richtung länglich ausgedehnten ersten Spulenleiter in der zweiten Richtung nebeneinander angeordnet und dazu ausgebildet sein, den Läufer des Planarmotors in der zweiten Richtung anzutreiben. Die in der zweiten Richtung länglich ausgedehnten zweiten Spulenleiter können in der ersten Richtung nebeneinander angeordnet und dazu ausgebildet sein, den Läufer in der ersten Richtung anzutreiben.

Bei einer Weiterbildung der Statoreinheit weisen die Statorlängslagen und die Statorschräg- oder -querlagen in der dritten Richtung den gleichen mittleren Abstand von einer Statorfläche der Statoreinheit auf. Dadurch üben gleiche Antriebsströme in den ersten und zweiten Spulenleitern auf den Läufer auch gleiche Antriebskräfte in der ersten und zweiten Richtung aus und der Läufer kann besonders effizient und stromsparend in sowohl die erste, als auch die zweite Richtung angetrieben werden. Eine derartige Statoreinheit ist besonders flexibel einsetzbar und deckt eine große Bandbreite möglicher Anwendungen ab.

Bei einer Weiterbildung der Statoreinheit entspricht eine erste Gesamtzahl von Statorlängslagen einer zweiten Gesamtzahl von Statorschräg- oder -querlagen. Dies ermöglicht es, die ersten Spulenleiter der Statorlängslagen und die zweiten Spulenleiter der Statorschräg- oder -querlagen besonders gleichmäßig zu bestromen.

Bei einer Weiterbildung der Statoreinheit sind die ersten Spulenleiter in der dritten Richtung übereinanderliegend und parallel zueinander angeordnet und die zweiten Spulenleiter sind in der dritten Richtung übereinanderliegend und parallel zueinander angeordnet. Insbesondere sind die Außenkanten übereinander angeordneter erster Spulenleiter in einer zu der ersten Richtung senkrechten Richtung fluchtend übereinander angeordnet und die Außenkanten übereinander angeordneter zweiter Spulenleiter sind in einer zu der zweiten Richtung senkrechten Richtung fluchtend übereinander angeordnet. Dadurch weist die Anordnung zweiter Spulenleiter eine besonders niedrige Kapazitanz auf.

Bei einer Weiterbildung der Statoreinheit sind in der dritten Richtung übereinanderliegende erste Spulenleiter jeweils derart miteinander elektrisch leitend verbunden, dass in den übereinanderliegenden ersten Spulenleitern ein gleicher Spulenstrom fließt. Außerdem sind in der dritten Richtung übereinanderliegende zweite Spulenleiter jeweils derart miteinander elektrisch leitend verbunden, dass in den übereinanderliegenden zweiten Spulenleitern ein gleicher Spulenstrom fließt. Dadurch liegen die übereinanderliegenden ersten Spulenleiter und die übereinanderliegenden zweiten Spulenleiter jeweils auf dem gleichen Potential und die Grenzflächen zwischen nebeneinander angeordneten Statorlängslagen und die Grenzflächen zwischen nebeneinander angeordneten Statorschräg- oder -querlagen tragen nicht zur Kapazitanz der Anordnung zweiter Spulenleiter bei. Die Spulenströme in übereinanderliegenden ersten Spulenleitern und die Spulenströme in übereinanderliegenden zweiten Spulenleitern können verschieden sein.

Bei einer Weiterbildung der Statoreinheit sind die übereinanderliegenden ersten Spulenleiter und die übereinanderliegenden zweiten Spulenleiter jeweils elektrisch in Reihe geschaltet. Die ermöglicht es, die ersten Spulenleiter auf einfache Art und Weise mit dem gleichen Spulenstrom zu beaufschlagen und die zweiten Spulenleiter auf einfache Art und Weise mit dem gleichen Spulenstrom zu beaufschlagen.

Es wird außerdem eine Statoreinheit zum Antreiben eines Läufers eines elektrischen Planarmotors angegeben, wobei die Statoreinheit mindestens zwei Statorlängslagen mit ersten Spulenleitern und mindestens drei Statorschräg- oder -querlagen mit zweiten Spulenleitern umfasst. Dabei sind die ersten Spulenleiter in einer ersten Richtung länglich ausgedehnt und die zweiten Spulenleiter sind in einer von der ersten Richtung verschiedenen zweiten Richtung länglich ausgedehnt. Die Statorlängslagen und die Statorschräg- oder -querlagen sind in einer zu der ersten und zweiten Richtung senkrecht orientierten dritten Richtung übereinander angeordnet. Dabei sind alle Statorlängslagen in der dritten Richtung nebeneinander angeordnet und alle Statorschräg- oder -querlagen sind in der dritten Richtung nebeneinander angeordnet, so dass lediglich eine der Statorlängslagen neben einer der Statorschräg- oder -querlagen angeordnet ist.

Eine derartige Statoreinheit weist in der dritten Richtung lediglich eine einzige Grenzfläche auf, an der die ersten Spulenleiter der Statorlängslagen und die zweiten Spulenleiter der Statorschräg- oder -querlagen nebeneinanderliegen. Dadurch weist die Anordnung erster Spulenleiter und die Anordnung zweiter Spulenleiter eine besonders niedrige Kapazitanz auf.

Bei einer Statoreinheit, bei der in der dritten Richtung alle Statorlängslagen und alle Statorschräg- oder -querlagen jeweils nebeneinander angeordnet sind, weisen die Statorlängslagen und die Statorschräg- oder -querlagen keine gemeinsame Mittenebene und auch nicht den gleichen mittleren Abstand von einer Statorfläche der Statoreinheit auf. Außerdem kann die Statoreinheit nicht aus Trägerplatten aufgebaut werden, auf deren einer Seite eine Statorlängslage und auf deren anderer Seite eine Statorschräg- oder -querlage angeordnet ist. Daher löst die Statoreinheit, bei der in der dritten Richtung alle Statorlängslagen und alle Statorschräg- oder -querlagen jeweils nebeneinander angeordnet sind, die eingangs genannte Aufgabe, falls die Statorlängslagen und die Statorschräg- oder -querlagen nicht den gleichen mittleren Abstand von einer Statorfläche der Statoreinheit aufweisen müssen und die Statoreinheit nicht aus Trägerplatten aufgebaut sein muss, auf deren einer Seite eine Statorlängslage und auf deren andere Seite eine Statorschräg- oder -querlage angeordnet ist.

Ein Statormodul für einen elektrischen Planarmotor weist eine Statoreinheit auf, wobei die Statoreinheit Statorlängslagen mit ersten Spulenleitern zur Wechselwirkung mit ersten Antriebsmagneten des Läufers und Statorschräg- oder -querlagen mit zweiten Spulenleitern zur Wechselwirkung mit zweiten Antriebsmagneten des Läufers umfasst. Die ersten Spulenleiter sind in einer ersten Richtung länglich ausgedehnt und die zweiten Spulenleiter sind in einer von der ersten Richtung verschiedenen zweiten Richtung länglich ausgedehnt. Die Statorlängslagen und die Statorschräg- oder -querlagen sind in einer zu der ersten und zweiten Richtung senkrecht orientierten dritten Richtung übereinander angeordnet. Dabei ist eine oberste Statorlage der Statoreinheit und eine unterste Statorlage der Statoreinheit jeweils als Statorlängslage mit ersten Spulenleitern ausgebildet. Die Statorlängslagen sind in der dritten Richtung höchstens auf einer Seite neben einer Statorschräg- oder -querlage angeordnet und die Statorschräg- oder -querlagen sind in der dritten Richtung höchstens auf einer Seite neben einer Statorlängslage angeordnet.

Die Statoreinheit des Statormoduls weist in der dritten Richtung eine besonders geringe Anzahl von Statorlagenwechseln auf, bei denen sich die Orientierung der Spulenleiter ändert. Insbesondere grenzen Innenlagen der Statoreinheit, die in der dritten Richtung zwischen der obersten und der untersten Statorlage angeordnet sind, in der dritten Richtung jeweils höchstens an einer Seite an eine Statorlage mit einer anderen Ausrichtung der Spulenleiter an, während sie zumindest auf der anderen Seite an eine Statorlage mit der gleichen Ausrichtung der Spulenleiter angrenzen. Dies führt zu einer besonders niedrigen Kapazitanz der Anordnung erster und zweiter Spulenleiter.

Die Erfindung wird nachfolgend anhand von Ausführungsbeispielen und unter Bezugnahme auf Figuren näher erläutert. Dabei zeigen jeweils in schematischer Darstellung
- Fig. 1: eine perspektivische Ansicht von oben auf ein Planarantriebssystem mit einem Statormodul und einem Läufer;
- Fig. 2: eine perspektivische Ansicht von unten auf den Läufer des Planarantriebssystems mit einer Magnetanordnung;
- Fig. 3: eine perspektivische Ansicht von oben des Statormoduls des Planarantriebssystems;
- Fig. 4: eine Explosionsansicht einer Statoreinheit des Statormoduls mit einer ersten, zweiten, dritten und vierten Statorlage;
- Fig. 5: die Statorlagen eines ersten Statorsektors der Statoreinheit mit einzelnen Statorsegmenten;
- Fig. 6: die Statoreinheit in einer Schnittansicht;
- Fig. 7: eine erste Trägerplatte und eine zweite Trägerplatte der Statoreinheit in einer Schnittansicht;
- Fig. 8: die Trägerplatten der Statoreinheit in einer weiteren Schnittansicht mit Verbindungsstrukturen;
- Fig. 9: eine erste weitere Statoreinheit für das Statormodul in einer Schnittansicht;
- Fig. 10: die Trägerplatten der ersten weiteren Statoreinheit in einer Schnittansicht;
- Fig. 11: die Trägerplatten der ersten weiteren Statoreinheit in einer weiteren Schnittansicht mit Vertikalverbindungsstrukturen und Horizontalverbindungsstrukturen;
- Fig. 12: eine zweite weitere Statoreinheit für das Statormodul in einer Schnittansicht;
- Fig. 13: Trägerplatten der zweiten weiteren Statoreinheit in einer Schnittansicht;
- Fig. 14: eine dritte weitere Statoreinheit für das Statormodul in einer Schnittansicht;
- Fig. 15: Trägerplatten der dritten weiteren Statoreinheit in einer Schnittansicht;
- Fig. 16: eine vierte weitere Statoreinheit für das Statormodul in einer Schnittansicht;
- Fig. 17: eine fünfte weitere Statoreinheit für das Statormodul in einer Schnittansicht; und
- Fig. 18: eine sechste weitere Statoreinheit für das Statormodul in einer Schnittansicht.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme.

Außerdem betrifft die Erfindung Weiterentwicklungen der in den deutschen Patentanmeldungen 10 2017 131 304.4, 10 2017 131 314.1, 10 2017 131 320.6, 10 2017 131 321.4, 10 2017 131 324.9, 10 2017 131 326.5 und 10 2018 117 953.7 offenbarten Planarantriebssysteme.

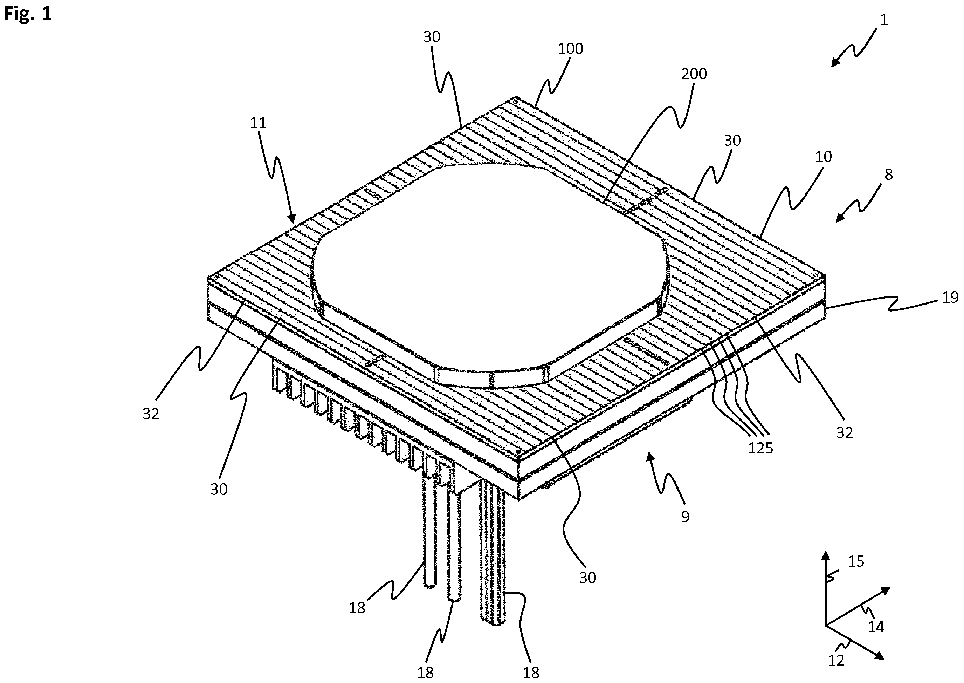

Fig. 1 zeigt eine perspektivische Ansicht von oben auf ein Planarantriebssystem 1 mit einem Statormodul 10 und einem Läufer 200. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten dritten oder vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu der dritten Richtung 15 orientiert und erstreckt sich über die gesamte Oberseite 8 der Statoreinheit 100 und des Statormoduls 10. Die Statoreinheit 100 umfasst an der Statorfläche 11 mindestens einen mit einem Antriebsstrom beaufschlagbaren ersten Spulenleiter 125. Die Statoreinheit 100 kann, wie dargestellt, an der Statorfläche 11 eine Mehrzahl der ersten Spulenleiter 125 aufweisen. Die ersten Spulenleiter 125 können jeweils mit einem Antriebsstrom beaufschlagt werden. Mittels der Antriebsströme in den ersten Spulenleitern 125 kann ein Magnetfeld erzeugt werden, welches den Läufer 200 in Wechselwirkung mit in Fig. 1 nicht dargestellten Antriebsmagneten des Läufers 200 antreibt. Der Läufer 200 und die Statoreinheit 100 mit den stromdurchflossenen ersten Spulenleitern 125 bilden einen elektromagnetischen Planarmotor.

Der Läufer 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste 12 Richtung und die zweite Richtung 14 sind voneinander verschieden und linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der dritten Richtung 15 orientiert. Indem der Läufer 200 zugleich in der ersten Richtung 12, als auch in der zweiten Richtung 14 angetrieben wird, kann der Läufer 200 über der Statorfläche 11 in einer beliebigen Richtung angetrieben werden. Der Läufer 200 kann im Betrieb in der dritten Richtung 15 schwebend über der Statorfläche 11 gehalten werden, beispielsweise durch eine magnetische Wechselwirkung zwischen den Antriebsmagneten und geeigneten Antriebsströmen in den ersten Spulenleitern 125. Neben einem Antreiben des Läufers 200 in der ersten und zweiten Richtung 12, 14 ist auch ein Antreiben in der dritten, vertikalen Richtung 15 möglich.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der dritten Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte. Zwischen der Statorfläche 11 und einer der Statorfläche 11 gegenüberliegenden Unterseite der Statoreinheit 100 weist die Statoreinheit 100 vier jeweils ebene Seitenflächen 32 auf, die an der Statorfläche 11 mit den Außenkanten 30 der Statorfläche 11 bündig abschließen. Die Seitenflächen 32 der Statoreinheit 100 sind senkrecht zu der Statorfläche 11 orientiert.

Das Modulgehäuse 19 ist wie die Statorfläche 11 und die Statoreinheit 100 in einer Aufsicht auf die Statorfläche 11 rechteckig ausgebildet. Das Modulgehäuse 19 ist insbesondere in der Aufsicht auf die Statorfläche 11 quadratisch ausgebildet. Das Modulgehäuse 19 ist als ein flacher Quader bzw. als eine Platte ausgebildet, wobei die Ausdehnung des Modulgehäuse 19 in der dritten Richtung 15 kleiner ist als in der ersten und zweiten Richtung 12, 14. Eine der Statoreinheit 100 zugewandte Oberseite des Modulgehäuses 19 ist an die Unterseite der Statoreinheit 100 anschließend angeordnet. In der ersten und zweiten Richtung 12, 14 weisen die Statoreinheit 100 und das Modulgehäuse 19 im Wesentlichen die gleichen Abmessungen auf.

Während das Statormodul 10 an seiner durch die Statorfläche 11 gebildeten Oberfläche eben ausgebildet ist, kann das Statormodul 10 an der der Statorfläche 11 gegenüberliegenden Unterseite 9 des Statormoduls 10 nicht eben bzw. uneben ausgebildet sein. Insbesondere können an der Unterseite 9 des Statormoduls 10 oder an der Unterseite des Modulgehäuses 19 weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems 1 verbunden sein und Steuerdaten zum Steuern des Läufers 200 mit der Steuereinheit austauschen.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 14 eine Ausdehnung zwischen 100mm und 500mm, insbesondere zwischen 120mm und 350mm, insbesondere von 240mm aufweisen. Das Statormodul 10 kann in der dritten Richtung 15 eine Ausdehnung zwischen 10mm und 100mm, insbesondere zwischen 15mm und 60mm, insbesondere von 30mm aufweisen. Das Modulgehäuse 19 kann in der dritten Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11. Die Statoreinheit 100 kann in der dritten Richtung 15 eine Ausdehnung von 1mm bis 10mm, insbesondere von 2mm bis 5mm, insbesondere von 3,5mm bis 4,5mm, insbesondere von 3,7mm bis 4mm aufweisen.

Mehrere Exemplare des Statormoduls 10 können derart nebeneinander angeordnet werden, dass die Außenkanten 30 benachbarter Statormodule 10 aneinanderliegen und die Statorflächen 11 der Statormodule 10 eine zusammenhängende Arbeitsfläche bilden, über die der Läufer 200 unterbrechungsfrei bewegt werden kann.

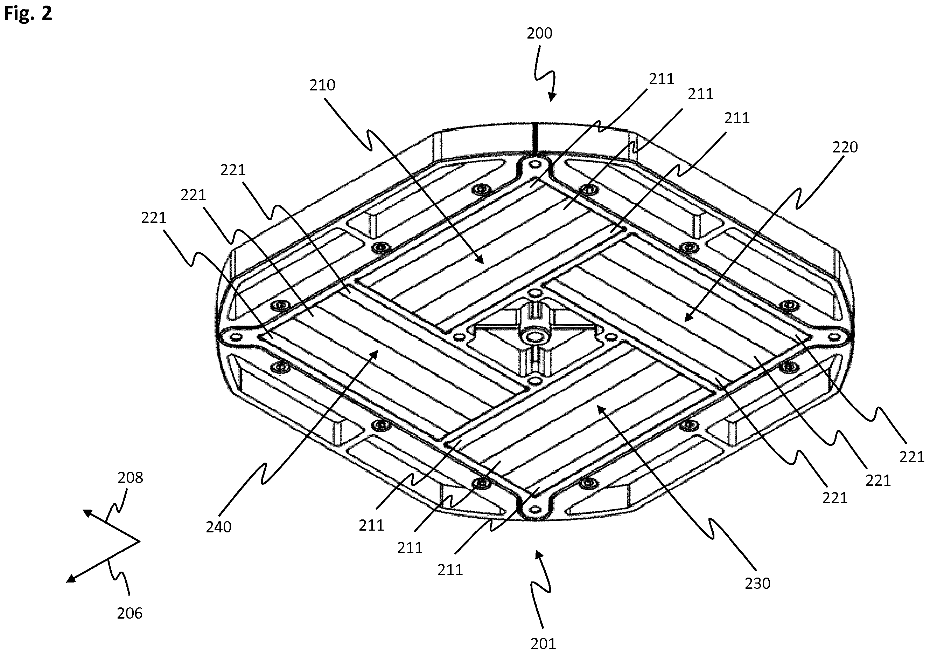

**Fig. 2** zeigt den Läufer 200 des Planarantriebssystems 1 in einer perspektivischen Ansicht von unten auf eine Unterseite des Läufers 200. Im Betrieb des Planarantriebssystem 1 ist die Unterseite des Läufers 200 der Statorfläche 11 des Statormoduls 10 zugewandt angeordnet. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete erste Antriebsmagnete 211 auf. Insbesondere können die erste und die dritte Magneteinheit 210, 230 jeweils drei erste Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte zweite Antriebsmagnete 221 auf. Insbesondere können die zweite und die vierte Magneteinheit 220, 240 jeweils drei zweite Antriebsmagnete 221 aufweisen.

Die erste und dritte Magneteinheit 210, 230 dient im Betrieb einem Antreiben des Läufers 200 in der zweiten Läuferrichtung 208 und die zweite und vierte Magneteinheit 220, 240 dient im Betrieb einem Antreiben des Läufers 200 in der ersten Läuferrichtung 206. Die ersten Antriebsmagneten 211 der ersten und dritten Magneteinheit 210, 230 und die zweiten Antriebsmagneten 221 der zweiten und vierten Magneteinheit 220, 240 sind jeweils senkrecht zu der ersten und der zweiten Läuferrichtung 206, 208 magnetisiert. Dabei weisen benachbarte Antriebsmagnete 211, 221 der Magneteinheiten 210, 220, 230, 240 jeweils entgegengesetzte Magnetisierungen auf.

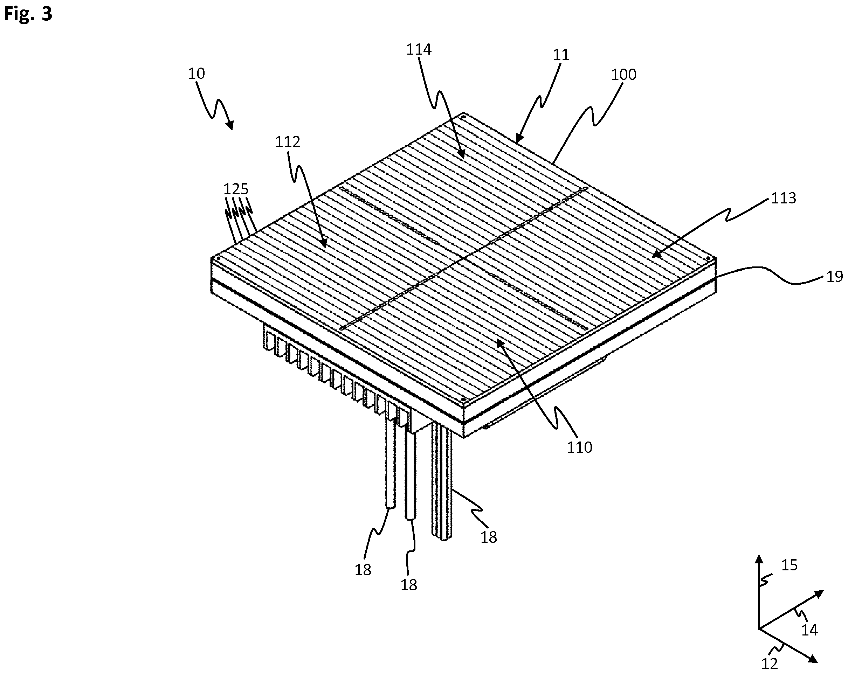

**Fig. 3** zeigt das Statormodul 10 des Planarantriebssystems 1 in einer perspektivischen Ansicht von oben ohne den Läufer 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten ersten Spulenleiter 125. Jeder der ersten Spulenleiter 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem zweiten Statorsektor 112 und dem ersten Statorsektor 110 und eine weitere Reihe mit dem vierten Statorsektor 114 und dem dritten Statorsektor 113. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie die Ausdehnung der Statoreinheit 100 bzw. die Ausdehnung des Statormoduls 10 in der entsprechenden Richtung 12, 14. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

Bei der in Fig. 3 dargestellten Statoreinheit 100 des Statormoduls 10 umfasst die Statorlage an der Statorfläche 11 lediglich erste Spulenleiter 125, welche entlang der ersten Richtung 12 länglich ausgedehnt und entlang einer zu der ersten Richtung 12 senkrechten Richtung nebeneinander und aneinander anschließend angeordnet sind. Sind die erste Richtung 12 und die zweite Richtung 14, wie in Fig. 3 dargestellt, senkrecht zueinander orientiert, so sind die ersten Spulenleiter 125 entlang der zweiten Richtung 14 nebeneinander und aneinander anschließend angeordnet.

Neben den in Fig. 3 dargestellten ersten Spulenleitern 125 umfasst die Statoreinheit 100 in Fig. 3 nicht dargestellte zweite Spulenleiter. Die zweiten Spulenleiter sind entlang der zweiten Richtung 14 länglich ausgedehnt und in einer zu der zweiten Richtung 14 senkrechten Richtung nebeneinander und aneinander anschließend angeordnet. Sind die zweite Richtung 14 und die erste Richtung 12 senkrecht zueinander orientiert, so sind die zweiten Spulenleiter entlang der ersten Richtung 12 nebeneinander und aneinander anschließend angeordnet.

Innerhalb der Statorsektoren 110, 112, 113, 114 sind die ersten Spulenleiter 125 und die zweiten Spulenleiter in mehreren übereinanderliegenden Statorlagen oder Statorebenen angeordnet, wobei jede der Statorlagen entweder erste Spulenleiter 125 oder zweite Spulenleiter umfasst, nicht jedoch sowohl erste Spulenleiter 125, als auch zweite Spulenleiter 126. Von der Ausdehnung der ersten Spulenleiter 125 und der zweiten Spulenleiter abgesehen und soweit im Folgenden keine Unterschiede beschrieben werden, sind die Statorsektoren 110, 112, 113, 114 auf den unterschiedlichen Statorlagen identisch ausgebildet.

Die in Fig. 3 sichtbare Statorlage an der Statorfläche 11 bildet eine erste Statorlage der Statoreinheit 100. In der dritten Richtung 15 unterhalb der ersten Statorlage umfasst die Statoreinheit 100 mindestens noch eine zweite Statorlage, eine dritte Statorlage und eine vierte Statorlage.

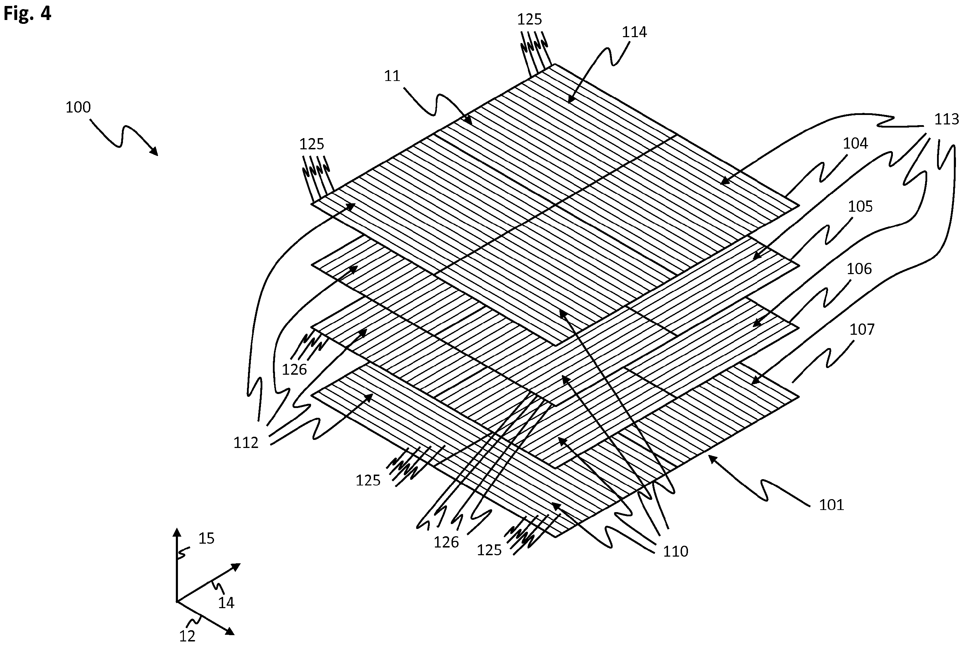

**Fig. 4** zeigt eine schematische perspektivische Darstellung einer Explosionsansicht der Statoreinheit 100 mit den einzelnen Statorlagen.

Die Statoreinheit 100 umfasst in der dritten Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet, wie es für die in Fig. 3 dargestellte erste Statorlage 104 an der Statorfläche 11 der Statoreinheit 100 beschrieben wird.

Die Statorsektoren 110, 112, 113, 114 umfassen in der vierten Statorlage 107, wie in der ersten Statorlage 104, entlang der ersten Richtung 12 länglich ausgedehnte und in der zu der ersten Richtung 12 senkrecht orientierten Richtung nebeneinander und aneinander anschließend angeordnete erste Spulenleiter 125. In der zweiten Statorlage 105 und in der dritten Statorlage 106 umfassen die Statorsektoren 110, 112, 113, 114 zweite Spulenleiter 126. Soweit im Folgenden keine Unterschiede beschrieben werden, sind die zweiten Spulenleiter 126 ausgebildet, wie es für die ersten Spulenleiter 125 in der ersten Statorlage 104 und in der vierten Statorlage 107 beschrieben wird. Anders als die ersten Spulenleiter 125 der ersten und vierten Statorlage 104, 107, sind die zweiten Spulenleiter 126 der zweiten und dritten Statorlage 105, 106 entlang der zweiten Richtung 14 länglich ausgedehnt und in der zu der zweiten Richtung 14 senkrecht orientierten Richtung nebeneinander und aneinander anschließend angeordnet.

Die Statorsektoren 110, 112, 113, 114 umfassen in der ersten und vierten Statorlage 104, 107 ausschließlich die entlang der ersten Richtung 12 länglich ausgedehnten ersten Spulenleiter 125 und nicht auch noch zusätzlich die entlang der zweiten Richtung 14 länglich ausgedehnten zweiten Spulenleiter 126. Ebenso umfassen die Statorsektoren 110, 112, 113, 114 in der zweiten und dritten Statorlage 105, 106 ausschließlich die entlang der zweiten Richtung 14 länglich ausgedehnten zweiten Spulenleiter 126 und nicht auch noch zusätzlich die entlang der ersten Richtung 12 länglich ausgedehnten ersten Spulenleiter 125.

Die Statorsektoren 110, 112, 113, 114 weisen in allen Statorlagen 104, 105, 106, 107 jeweils die gleichen Abmessungen auf. Insbesondere weisen die Statorsektoren 110, 112, 113, 114 in allen Statorlagen 104, 105, 106, 107 in der ersten Richtung 12 und in der zweiten Richtung 14 jeweils gleiche Abmessungen auf.

Die Anzahl und Anordnung der ersten Spulenleiter 125 ist in den einzelnen übereinanderliegenden Statorlagen 104, 107 mit ersten Spulenleitern 125, insbesondere in der ersten und vierten Statorlage 104, 107, identisch. Insbesondere sind die ersten Spulenleiter 125 in der dritten Richtung 15 übereinanderliegend angeordnet. Außerdem ist die Anzahl und Anordnung der zweiten Spulenleiter 126 in den einzelnen übereinanderliegenden Statorlagen 105, 106 mit zweiten Spulenleitern 126, insbesondere in der zweiten und dritten Statorlage 105, 106, identisch. Insbesondere sind die zweiten Spulenleiter 126 in der dritten Richtung 15 übereinanderliegend angeordnet.

Die Statorsektoren 110, 112, 113, 114 sind unabhängig voneinander bestrombar ausgebildet. Insbesondere sind die ersten Spulenleiter 125 und die zweiten Spulenleiter 126 der einzelnen Statorsektoren 110, 112, 113, 114 auf der Statoreinheit 100 elektrisch isoliert voneinander ausgebildet. Das heißt insbesondere, dass die Spulenleiter 125, 126 des ersten Statorsektors 110 elektrisch isoliert von den Spulenleitern 125, 126 des zweiten Statorsektors 112, von den Spulenleitern 125, 126 des dritten Statorsektors 113 und von den Spulenleitern 125, 126 des vierten Statorsektors 114 ausgebildet sind. Außerdem sind die Spulenleiter 125, 126 des zweiten Statorsektors 112 elektrisch isoliert von den Spulenleitern 125, 126 des ersten Statorsektors 110, von den Spulenleitern 125, 126 des dritten Statorsektors 113 und von den Spulenleitern 125, 126 des vierten Statorsektors 114 ausgebildet. Außerdem sind die Spulenleiter 125, 126 des dritten Statorsektors 113 elektrisch isoliert von den Spulenleitern 125, 126 des ersten Statorsektors 110, von den Spulenleitern 125, 126 des zweiten Statorsektors 112 und von den Spulenleitern 125, 126 des vierten Statorsektors 114 ausgebildet. Schließlich sind die Spulenleiter 125, 126 des vierten Statorsektors 114 elektrisch isoliert von den Spulenleitern 125, 126 des ersten Statorsektors 110, von den Spulenleitern 125, 126 des zweiten Statorsektors 112 und von den Spulenleitern 125, 126 des dritten Statorsektors 113 ausgebildet.

Während die Spulenleiter 125, 126 der einzelnen Statorsektoren 110, 112, 113, 114 auf der Statoreinheit 100 jeweils elektrisch isoliert von den Spulenleitern 125, 126 der übrigen Statorsektoren 110, 112, 113, 114 ausgebildet sind, können die Spulenleiter 125, 126 innerhalb der einzelnen Statorsektoren 110, 112, 113, 114 jeweils elektrisch leitend miteinander verbunden sein. Insbesondere können innerhalb der Statorsektoren 110, 112, 113, 114 jeweils alle in der dritten Richtung 15 übereinanderliegenden ersten Spulenleiter 125, insbesondere alle in der dritten Richtung 15 übereinanderliegenden ersten Spulenleiter 125 der ersten Statorlage 104 und der vierten Statorlage 107, elektrisch leitend miteinander verbunden sein. Dabei können alle in der dritten Richtung 15 übereinanderliegenden ersten Spulenleiter 125 jeweils derart elektrisch leitend miteinander verbunden sein, dass in den übereinanderliegenden ersten Spulenleitern 125 jeweils der gleiche Spulenstrom fließt. Beispielsweise können jeweils alle in der dritten Richtung 15 übereinanderliegenden ersten Spulenleiter 125 der Statorsektoren 110, 112, 113, 114 in Reihe geschaltet sein.

Ebenso können innerhalb der Statorsektoren 110, 112, 113, 114 jeweils alle in der dritten Richtung 15 übereinanderliegenden zweiten Spulenleiter 126, insbesondere alle in der dritten Richtung 15 übereinanderliegenden zweiten Spulenleiter 126 der zweiten Statorlage 105 und der dritten Statorlage 106, elektrisch leitend miteinander verbunden sein. Dabei können alle in der dritten Richtung 15 übereinanderliegenden zweiten Spulenleiter 126 jeweils derart elektrisch leitend miteinander verbunden sein, dass in den übereinanderliegenden zweiten Spulenleitern 126 jeweils der gleiche Spulenstrom fließt. Beispielsweise können innerhalb der einzelnen Statorsektoren 110, 112, 113, 114 jeweils alle übereinanderliegenden zweiten Spulenleiter 126 in Reihe geschaltet sein.

Die Spulenleiter 125, 126 der Statorsektoren 110, 112, 113, 114 sind innerhalb der Statorlagen 104, 105, 106, 107 jeweils zu Statorsegmenten zusammengefasst.

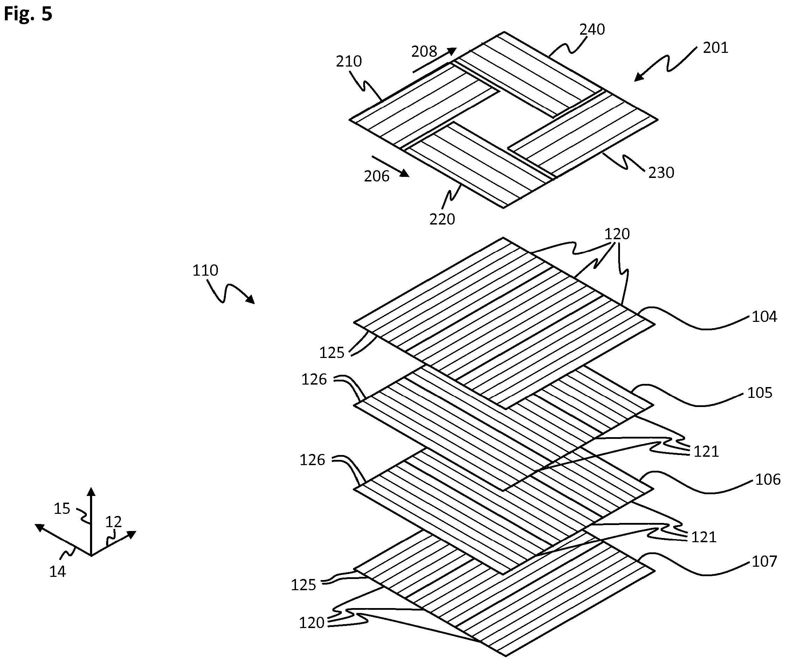

**Fig. 5** zeigt eine schematische Darstellung der Statorlagen 104, 105, 106, 107 des ersten Statorsektors 110 mit den einzelnen Statorsegmenten.

Die Spulenleiter 125, 126 des ersten Statorsektors 110 sind innerhalb der Statorlagen 104, 105, 106, 107 jeweils zu Statorsegmenten 120, 121 zusammengefasst. Der erste Statorsektor 110 umfasst in jeder Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Spulenleiter 125, 126. Der erste Statorsektor 110 umfasst in der ersten und vierten Statorlage 104, 107 jeweils drei erste Statorsegmente 120 und in der zweiten und dritten Statorlage 105, 106 jeweils drei zweite Statorsegmente 121. Die ersten Statorsegmente 120 umfassen jeweils sechs Nebeneinanderliegende der entlang der zweiten Richtung 14 nebeneinander angeordneten und entlang der ersten Richtung 12 länglich ausgedehnten ersten Spulenleiter 125. Die zweiten Statorsegmente 121 umfassen jeweils sechs Nebeneinanderliegende der entlang der ersten Richtung 12 nebeneinander angeordneten und entlang der zweiten Richtung 14 länglich ausgedehnten zweiten Spulenleiter 126.

Bei alternativen, nicht dargestellten Ausführungsformen der Statoreinheit 100 können die ersten Statorsegmente 120 und/oder die zweiten Statorsegmente 121 auch eine andere Anzahl nebeneinander angeordneter Spulenleiter 125, 126 umfassen. Insbesondere können die ersten Statorsegmente 120 und/oder die zweiten Statorsegmente 121 acht nebeneinander angeordnete Spulenleiter 125, 126 umfassen. Bei alternativen, nicht dargestellten Ausführungsformen der Statoreinheit 100 kann der erste Statorsektor 110 auch eine andere Anzahl nebeneinander und aneinander anschließend angeordneter Statorsegmente 120, 121 umfassen.

Der erste Statorsektor 110 der Statoreinheit 100 umfasst damit in der ersten Statorlage 104 und in der vierten Statorlage 107 ausschließlich erste Spulenleiter 125, die entlang der ersten Richtung 12 länglich ausgedehnt sind, und in der zweiten Statorlage 105 und in der dritten Statorlage 106 ausschließlich zweite Spulenleiter 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und vierten Statorlage 104, 107 des ersten Statorsektors 110 in der ersten Richtung 12 über die drei in der ersten Richtung 12 nebeneinander angeordneten zweiten Statorsegmente 121 der zweiten und dritten Statorlage 105, 106 des ersten Statorsektors 110 erstreckt. Außerdem erstrecken sich die zweiten Statorsegmente 121 der zweiten und dritten Statorlage 105, 106 des ersten Statorsektors 110 in der zweiten Richtung 14 über alle in der zweiten Richtung 14 nebeneinander angeordneten ersten Statorsegmente 120 der ersten und vierten Statorlage 104, 107 des ersten Statorsektors 110.

Die Anordnung der Spulenleiter 125, 126 in den Statorlagen 104, 105, 106, 107 des zweiten Statorsektors 112, des dritten Statorsektors 113 und des vierten Statorsektors 114 entspricht der in Fig. 5 dargestellten Anordnung der Spulenleiter 125, 126 in den Statorlagen 104, 105, 106, 107 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die ersten Spulenleiter 125 der ersten Statorsegmente 120 erzeugten Magnetfeld wechselwirken, um den Läufer 200 entlang der zweiten Richtung 14 anzutreiben. Die zweite Magneteinheit 220 und die vierte Magneteinheit 240 können im Betrieb mit dem durch die zweiten Spulenleiter 126 der zweiten Statorsegmente 121 erzeugten Magnetfeld wechselwirken, um den Läufer 200 entlang der ersten Richtung 12 anzutreiben.

Alternativ kann der Läufer 200, anders als in Fig. 5 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Läufers 200 in die erste Richtung 12 und die zweite und die vierte Magneteinheit 220, 240 mit dem Magnetfeld der ersten Statorsegmente 120 zum Antreiben des Läufers 200 in die zweite Richtung 14 zusammen.

Bei der Statoreinheit 100 sind die ersten Spulenleiter 125 damit dazu ausgebildet, mit den ersten Antriebsmagneten 211 des Läufers 200 wechselzuwirken, um den Läufer 200 in der zu der ersten Richtung 12 senkrechten Richtung anzutreiben. Die zweiten Spulenleiter 126 sind dazu ausgebildet, mit den zweiten Antriebsmagneten 221 des Läufers 200 wechselzuwirken, um den Läufer 200 in der zu der zweiten Richtung 14 senkrechten Richtung anzutreiben.

Die ersten Spulenleiter 125 sind räumlich in der zu der ersten Richtung 12 senkrechten Richtung um jeweils ein Drittel einer wirksamen ersten Wellenlänge der mit den ersten Spulenleitern 125 wechselwirkenden ersten Antriebsmagnete 211 der ersten und dritten Magneteinheit 210, 230 versetzt angeordnet. Die zweiten Spulenleiter 126 sind räumlich in der zu der zweiten Richtung 14 senkrechten Richtung um jeweils ein Drittel einer wirksamen zweiten Wellenlänge der mit den zweiten Spulenleitern 126 wechselwirkenden zweiten Antriebsmagnete 221 der zweiten und vierten Magneteinheit 220, 240 versetzt angeordnet.

Die Spulenleiter 125, 126 der einzelnen Statorsegmente 120, 121 sind jeweils unabhängig von den Spulenleitern 125, 126 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Spulenleiter 125, 126 eines der Statorsegmente 120, 121 mit Antriebsströmen beaufschlagt werden, während die Spulenleiter 125, 126 eines anderen, beispielsweise eines benachbarten, Statorsegments 120, 121 stromlos sind. Die Spulenleiter 125, 126 der einzelnen Statorsegmente 120, 121 sind auf der Statoreinheit 100 elektrisch isoliert von den Spulenleitern 125, 126 der übrigen Statorsegmente 120, 121 ausgeführt. Die Spulenleiter 125, 126 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Spulenleiter 125, 126 in den einzelnen Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Spulenleiter 125, 126 zu Dreiphasensystemen mit einem gemeinsamen Sternpunkt zusammengeschaltet sein. Die Dreiphasensysteme können jeweils sechs benachbarte erste Spulenleiter 125 oder sechs benachbarte zweite Spulenleiter 126 umfassen. Die Anzahl benachbarter Spulenleiter 125, 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Spulenleiter 125, 126 zu Mehrphasensystemen werden zur Bestromung der Spulenleiter 125, 126 weniger Kontakte benötigt als bei einer separaten Bestromung der einzelnen Spulenleiter 125, 126. Dadurch wird der für die Bestromung der erste Spulenleiter 125, 126 benötigte Hardwareaufwand, insbesondere die Anzahl der für die Bestromung benötigten Stromerzeugungseinheiten, reduziert.

Die Statorsektoren 110, 112, 113, 114 können, wie in den Fig. 4 und 5 dargestellt, in jeder Statorlage 104, 105, 106, 107 jeweils achtzehn Spulenleiter 125, 126 umfassen. Jeweils sechs benachbarte Spulenleiter 125, 126 können zu einem Dreiphasensystem verschaltet sein und die Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Spulenleiter 125, 126, die im Wesentlichen in der gleichen Richtung 12, 14 ausgedehnt sind und in den Statorlagen 104, 105, 106, 107 übereinanderliegen, in Serie zu einem gemeinsamen Dreiphasensystem verschaltet sein. Die Spulenleiter 125, 126 können dabei derart verschaltet sein, dass in der dritten Richtung 15 übereinanderliegende Spulenleiter 125, 126 jeweils mit dem gleichen Antriebsstrom beaufschlagt werden. Die Dreiphasensysteme weisen damit drei Phasen auf, die aus in den Statorlagen 104, 105, 106, 107 übereinanderliegenden Spulenleiter 125, 126 zusammengeschaltet sind.

Beispielsweise können in den einzelnen Statorlagen 104, 105, 106, 107 jeweils alle übereinanderliegenden und parallel ausgerichteten Spulenleiter 125, 126 in Serie geschaltet sein. Insbesondere können die ersten Spulenleiter 125 von übereinanderliegenden, insbesondere von in der ersten Statorlage 104 und in der vierten Statorlage 107 übereinanderliegenden Dreiphasensystemen, sowie die zweiten Spulenleiter 126 von übereinanderliegenden, insbesondere von in der zweiten Statorlage 105 und in der dritten Statorlage 106 übereinanderliegenden Dreiphasensystemen jeweils seriell zu einem gemeinsamen Dreiphasensystem verschaltet sein. Dabei können jeweils alle in der dritten Richtung 15 übereinanderliegenden und parallel orientierten Spulenleiter 125, 126 in Serie geschaltet sein.

Insbesondere sind bei der Statoreinheit 100 innerhalb der einzelnen ersten Statorsegmente 120 die entlang der ersten Richtung 12 länglich ausgedehnten ersten Spulenleiter 125 jeweils zu Mehrphasensystemen mit einem gemeinsamen Sternpunkt verschaltet. Dabei sind die einzelnen Mehrphasensysteme verschiedener erster Statorsegmente 120 jeweils unabhängig voneinander bestrombar. Ebenso sind alle zweiten Spulenleiter 126 der einzelnen zweiten Statorsegmente 121 jeweils zu weiteren Mehrphasensystemen verschaltet. Die einzelnen weiteren Mehrphasensysteme der zweiten Statorsegmente 121 sind jeweils unabhängig voneinander und unabhängig von den Mehrphasensystemen der ersten Statorsegmente 120 bestrombar. Insbesondere sind die ersten Spulenleiter 125 der ersten Statorsegmente 120 und die zweiten Spulenleiter 126 der zweiten Statorsegmente 121 jeweils zu Dreiphasensystemen verschaltet. Die ersten Spulenleiter 125 und die zweiten Spulenleiter 126 eines Statorsegments 120, 121 können jeweils mit einem dreiphasigen Antriebsstrom beaufschlagt werden. Die Antriebsströme umfassen jeweils eine erste Phase U, eine zweite Phase V und eine dritte Phase W, die untereinander jeweils einen Phasenversatz von 120° aufweisen.

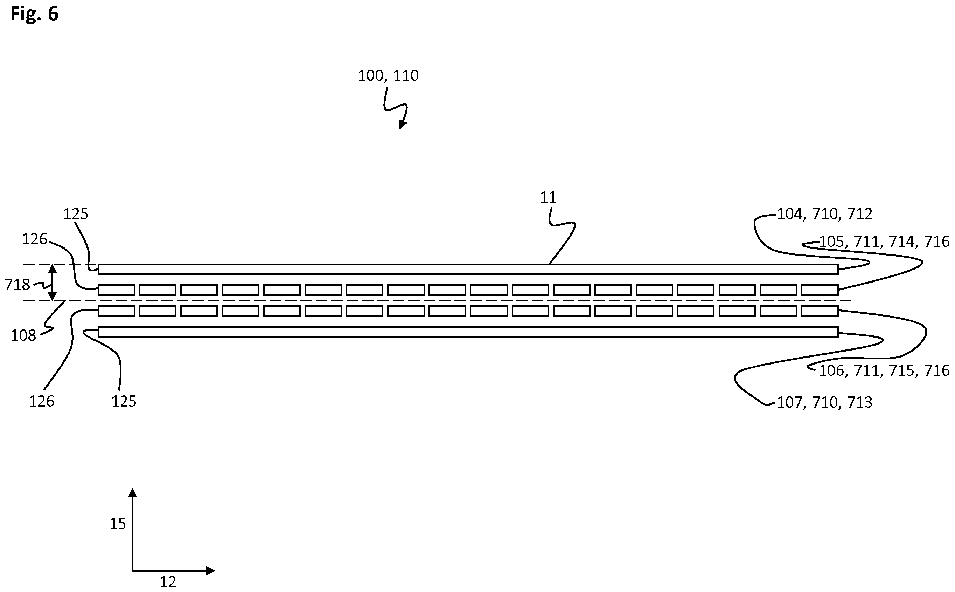

**Fig. 6** zeigt eine schematische, nicht maßstabsgetreue Darstellung der Statoreinheit 100 des Statormoduls 10 in einer Schnittansicht. Die Schnittebene ist dabei senkrecht zu der zweiten Richtung 14 orientiert. In Fig. 6 sind lediglich die Spulenleiter 125, 126 und Statorlagen 104, 105, 106, 107 des ersten Statorsektors 110 dargestellt. Die Spulenleiter 125, 126 und Statorlagen 104, 105, 106, 107 des zweiten, dritten und vierten Statorsektors 112, 113, 114 sind aufgebaut, wie es für die Spulenleiter 125, 126 und die Statorlagen 104, 105, 106, 107 des ersten Statorsektors 110 beschrieben wird.

Die Statoreinheit 100 weist eine erste Anordnung von Statorlängslagen 710 und eine zweite Anordnung von Statorschräg- oder -querlagen 711 auf. Die Statorlängslagen 710 werden von allen Statorlagen 104, 107 der Statoreinheit 100 gebildet, die die entlang der ersten Richtung 12 ausgedehnten ersten Spulenleiter 125 umfassen. Die Statorschräg- oder -querlagen 711 werden von allen Statorlagen 105, 106 der Statoreinheit 100 gebildet, die die entlang der zweiten Richtung 14 ausgedehnten zweiten Spulenleiter 126 umfassen. Die erste und die zweite Richtung 12, 14 sind dabei voneinander verschieden und können insbesondere, wie bei der Statoreinheit 100, senkrecht zueinander orientiert sein. Die erste und die zweite Richtung 12, 14 können auch einen anderen Winkel als 90°, beispielsweise einen Winkel von 45° zueinander aufweisen. Insbesondere müssen die in der ersten Richtung 12 länglich ausgedehnten ersten Spulenleiter 125 der Statorlängslagen 710 und die in der zweiten Richtung 14 länglich ausgedehnten zweiten Spulenleiter 126 der Statorschräg- oder -querlagen 711 nicht senkrecht zueinander ausgerichtet sein. Bei der ersten Statoreinheit 100 werden die Statorlängslagen 710 durch die erste Statorlage 104 und durch die vierte Statorlage 107 und die Statorschräg- oder -querlagen 711 durch die zweite Statorlage 105 und die dritte Statorlage 106 gebildet. Die Statorschräg- oder -querlagen 711 können allgemein auch als Statorquerlagen bezeichnet werden.

Bei der Statoreinheit 100 entspricht eine erste Gesamtzahl von Statorlängslagen 710 einer zweiten Gesamtzahl von Statorschräg- oder -querlagen 711. Insbesondere beträgt bei der Statoreinheit 100 die erste Gesamtzahl zwei und die zweite Gesamtzahl beträgt ebenfalls zwei. Die Statorlängslagen 710 und die Statorschräg- oder -querlagen 711 sind in der dritten Richtung 15 übereinander angeordnet. Außerdem sind die Statorlängslagen 710 und die Statorschräg- oder -querlagen 711 parallel zueinander und senkrecht zu der dritten Richtung 15 ausgerichtet.

Die erste Anordnung der Statorlängslagen 710 und die zweite Anordnung der Statorschräg- oder -querlagen 711 weisen eine gemeinsame Mittenebene 108 auf. Die gemeinsame Mittenebene 108 ist senkrecht zu der dritten Richtung 15 orientiert. Die Mittenebene 108 ist in der dritten Richtung 15 mittig zwischen der in der dritten Richtung 15 obersten Statorlage der ersten Anordnung von Statorlängslagen 710 und der in der dritten Richtung 15 untersten Statorlage der ersten Anordnung von Statorlängslagen 710 angeordnet. Insbesondere ist die Mittenebene 108 mittig zwischen der ersten Statorlage 104 und der vierten Statorlage 107 angeordnet. Außerdem ist die Mittenebene 108 in der dritten Richtung 15 mittig zwischen der obersten Statorlage der zweiten Anordnung von Statorschräg- oder -querlagen 711 und der untersten Statorlage der zweiten Anordnung von Statorschräg- oder -querlagen 711 angeordnet. Insbesondere ist die Mittenebene 108 mittig zwischen der zweiten Statorlage 105 und der dritten Statorlage 106 angeordnet.

Die erste Anordnung von Statorlängslagen 710 und die zweite Anordnung von Statorschräg- oder -querlagen 711 weisen einen gleichen mittleren Abstand 718 von der Statorfläche 11 der Statoreinheit 100 auf. Die Statorfläche 11 ist an der Oberseite der ersten Statorlage 104 angeordnet. Der mittlere Abstand 718 der Statorlängslagen 710 bezeichnet den Mittelwert der Abstände der einzelnen Statorlängslagen 710, also der ersten und vierten Statorlage 104, 107, von der Statorfläche 11. Der mittlere Abstand 718 der Statorschräg- oder -querlagen 711 bezeichnet den Mittelwert der Abstände der einzelnen Statorschräg- oder -querlagen 711, also der zweiten und dritten Statorlage 105, 106, von der Statorfläche 11. Bei der Statoreinheit 100 entspricht der mittlere Abstand 718 der Statorlängslagen 710 der Hälfte des Abstands zwischen den Oberflächen der ersten und vierten Statorlage 104, 107. Der mittlere Abstand der Statorschräg- oder - querlagen 711 entspricht der Hälfte des Abstands zwischen den Oberflächen der zweiten und dritten Statorlage 105, 106.

Die erste Anordnung von Statorlängslagen 710 ist in der dritten Richtung 15 symmetrisch zu der gemeinsamen Mittenebene 108 ausgebildet. Dies bedeutet, dass die Statorlängslagen 710 in der dritten Richtung 15 symmetrisch zu der Mittenebene 108 positioniert oder angeordnet sind. Insbesondere sind die in der dritten Richtung 15 oberhalb der Mittenebene 108 angeordneten Statorlängslagen 710 und die in der dritten Richtung 15 unterhalb der Mittenebene 108 angeordneten Statorlängslagen 710 in der dritten Richtung 15 paarweise einander gegenüberliegend angeordnet.

Die zweite Anordnung von Statorschräg- oder -querlagen 711 ist in der dritten Richtung 15 symmetrisch zu der gemeinsamen Mittenebene 108 ausgebildet. Dies bedeutet, dass die Statorschräg- oder -querlagen 711 in der dritten Richtung 15 symmetrisch zu der Mittenebene 108 positioniert oder angeordnet sind. Insbesondere sind die in der dritten Richtung 15 oberhalb der Mittenebene 108 angeordneten Statorschräg- oder -querlagen 711 und die in der dritten Richtung 15 unterhalb der Mittenebene 108 angeordneten Statorschräg- oder -querlagen 711 in der dritten Richtung 15 paarweise einander gegenüberliegend angeordnet. Bei der Statoreinheit 100 entspricht ein Abstand der gemeinsamen Mittenebene 108 von der Statorfläche 11 dem mittleren Abstand 718 der Statorlängslagen 710 und der Statorschräg- oder -querlagen 711 von der Statorfläche 11.

Während die erste Anordnung von Statorlängslagen 710 und die zweite Anordnung von Statorschräg- oder -querlagen 711 symmetrisch zu der Mittenebene 108 ist, müssen die Statorlängslagen 710 oder die Statorschräg- oder -querlagen 711 selbst nicht auch symmetrisch zu der Mittenebene 108 ausgebildet sein. Insbesondere können einander in der dritten Richtung 15 bezüglich der Mittenebene 108 gegenüberliegende Statorlängslagen 710 oder Statorschräg- oder -querlagen 711 verschieden voneinander ausgebildet sein. Insbesondere können die einander gegenüberliegenden Statorlängslagen 710 oder die einander gegenüberliegenden Statorschräg- oder -querlagen 711 jeweils verschiedene Anordnungen von Spulenleitern 125, 126, Horizontalverbindungsstrukturen und/oder Vertikalverbindungsstrukturen aufweisen.

Die Statoreinheit 100 umfasst eine oberste Statorlage 712 und eine unterste Statorlage 713. Die oberste Statorlage 712 liegt in der dritten Richtung 15 oberhalb aller übrigen Statorlagen 710, 711 und die unterste Statorlage 713 liegt in der dritten Richtung 15 unterhalb aller übrigen Statorlagen 710, 711. Alle übrigen Statorlagen 710, 711 der Statoreinheit 100 sind in der dritten Richtung 15 zwischen der obersten Statorlage 712 und der untersten Statorlage 713 angeordnet, so dass die oberste Statorlage 712 und die unterste Statorlage 713 die Außenlagen der Statoreinheit 100 bilden. Die oberste Statorlage 712 und die unterste Statorlage 713 sind jeweils als Statorlängslagen 710 mit ersten Spulenleitern 125 ausgebildet. Bei der Statoreinheit 100 wird die oberste Statorlage 712 durch die erste Statorlage 104 und die unterste Statorlage 713 durch die vierte Statorlage 107 gebildet. Alle Statorlagen, die zwischen der obersten Statorlage 712 und der untersten Statorlage 713 der Statoreinheit 100 angeordnet sind, insbesondere die zweite und dritte Statorlage 105, 106, bilden Innenlagen 716 der Statoreinheit 100.

Die Statoreinheit 100 umfasst außerdem eine zweitoberste Statorlage 714 und eine zweitunterste Statorlage 715. Die zweitoberste Statorlage 714 ist neben der obersten Statorlage 712 angeordnet und liegt in der dritten Richtung 15 unterhalb der obersten Statorlage 712. Die zweitunterste Statorlage 715 ist neben der untersten Statorlage 713 angeordnet und liegt in der dritten Richtung 15 oberhalb der untersten Statorlage 713. Die zweitoberste Statorlage 714 und die zweitunterste Statorlage 715 sind jeweils als Statorschräg- oder -querlagen 711 mit den zweiten Spulenleitern 126 ausgebildet. Bei der Statoreinheit 100 wird die zweitoberste Statorlage 714 durch die zweite Statorlage 105 und die zweitunterste Statorlage 715 durch die dritte Statorlage 106 gebildet.

Bei der Statoreinheit 100 sind die Statorlängslagen 710 in der dritten Richtung 15 höchstens auf einer Seite neben einer Statorschräg- oder -querlage 711 angeordnet. Insbesondere ist die als Statorlängslage 710 ausgebildete erste Statorlage 104 lediglich auf ihrer Unterseite neben einer Statorschräg- oder -querlage 711, nämlich neben der als Statorschräg- oder -querlage 711 ausgebildeten zweiten Statorlage 105, angeordnet. Außerdem ist die als Statorlängslage 710 ausgebildete vierte Statorlage 107 nur auf ihrer Oberseite neben einer Statorschräg- oder -querlage 711, nämlich neben der als Statorschräg- oder -querlage 711 ausgebildeten dritten Statorlage 106, angeordnet.

Bei der Statoreinheit 100 sind weiterhin die Statorschräg- oder -querlagen 711 in der dritten Richtung 15 höchstens auf einer Seite neben einer Statorlängslage 710 angeordnet. Insbesondere ist die als Statorschräg- oder -querlage 711 ausgebildete zweite Statorlage 105 lediglich an ihrer Oberseite neben einer Statorlängslage 710, nämlich neben der ersten Statorlage 104, angeordnet. Auf ihrer Unterseite ist die zweite Statorlage 105 neben einer Statorschräg- oder -querlage 711, nämlich neben der dritten Statorlage 106, angeordnet. Außerdem ist die als Statorschräg- oder -querlage 711 ausgebildete dritte Statorlage 106 lediglich auf ihrer Unterseite neben einer Statorlängslage 710, nämlich neben der vierten Statorlage 107, angeordnet. An ihrer Oberseite ist die dritte Statorlage 106 neben einer Statorschräg- oder -querlage 711, nämlich neben der zweiten Statorlage 105, angeordnet.

Damit ist bei der Statoreinheit 100 in der dritten Richtung 15 neben jeder Statorlängslage 710 genau eine Statorschräg- oder - querlage 711 und neben jeder Statorschräg- oder -querlage 711 genau eine Statorlängslage 710 angeordnet.

Die Innenlagen 716 der Statoreinheit 100 werden durch die zweite Statorlage 105 und die dritte Statorlage 106 gebildet. Die Innenlagen 716 sind zwischen der obersten Statorlage 712 und der untersten Statorlage 713 angeordnet. Die Innenlagen 716 der Statoreinheit 100 sind als zwei in der dritten Richtung 15 nebeneinander angeordnete Statorschräg- oder -querlagen 711 ausgebildet. Dabei sind die als Statorschräg- oder -querlagen 711 ausgebildeten Innenlagen 716 zwischen zwei Statorlängslagen 710 angeordnet. Bei der Statoreinheit 100 ist insbesondere in der dritten Richtung 15 neben jeder als Statorschräg- oder -querlage 711 ausgebildeten Innenlage 716 sowohl eine Statorschräg- oder - querlage 711, als auch eine Statorlängslage 710 angeordnet.

Bei der Statoreinheit 100 liegt jede Statorlage 105, 106 mit zweiten Spulenleitern 126, also die zweite Statorlage 105 und die dritte Statorlage 106, in der dritten Richtung 15 jeweils nur auf einer Seite neben einer Statorlage 104, 107 mit ersten Spulenleitern 125. Auf der anderen Seite liegen die Statorlagen 105, 106 mit zweiten Spulenleitern 126 jeweils neben einer Statorlage 105, 106 mit zweiten Spulenleitern 126. Außerdem liegt bei der Statoreinheit 100 jede Statorlage 104, 107 mit ersten Spulenleitern 125, also die erste Statorlage 104 und die vierte Statorlage 107, in der dritten Richtung 15 jeweils nur auf einer Seite neben einer Statorlage 105, 106 mit zweiten Spulenleitern 126.

Die Statoreinheit 100 kann als eine mehrlagige Einheit ausgebildet sein, wobei die Statorlagen 104, 105, 106, 107 mit den ersten und zweiten Spulenleitern 125, 126 jeweils über isolierende Zwischenschichten mechanisch miteinander verbunden sind. Die Statoreinheit 100 kann als eine gedruckte Schaltung bzw. Leiterplatte, auch *printed circuit board* (PCB) oder Platine genannt, ausgeführt sein. Insbesondere kann die Statoreinheit 100 als eine mehrlagige Leiterplatte ausgebildet sein, wobei die Statorlagen 104, 105, 106, 107 jeweils in unterschiedlichen Leiterbahnlagen der Leiterplatte angeordnet sind.

Die Statoreinheit 100 weist lediglich zwei Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Insbesondere weist die Statoreinheit 100 zwischen der obersten Statorlage 712 und der zweitobersten Statorlage 714 einen ersten Statorlagenwechsel, bei dem sich in der dritten Richtung 15 die Orientierung der Spulenleiter 125, 126 ändert, und zwischen der zweituntersten Statorlage 715 und der untersten Statorlage 713 einen zweiten Statorlagenwechsel, bei dem sich in der dritten Richtung 15 die Orientierung der Spulenleiter 125, 126 ändert, auf. Damit wechselt die Orientierung der Spulenleiter 125, 126 bei der Statoreinheit 100 in der dritten Richtung 15 auch nur zweimal. Dies hat zur Folge, dass die Kapazitanz der Statorlagenanordnung der Statoreinheit 100 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

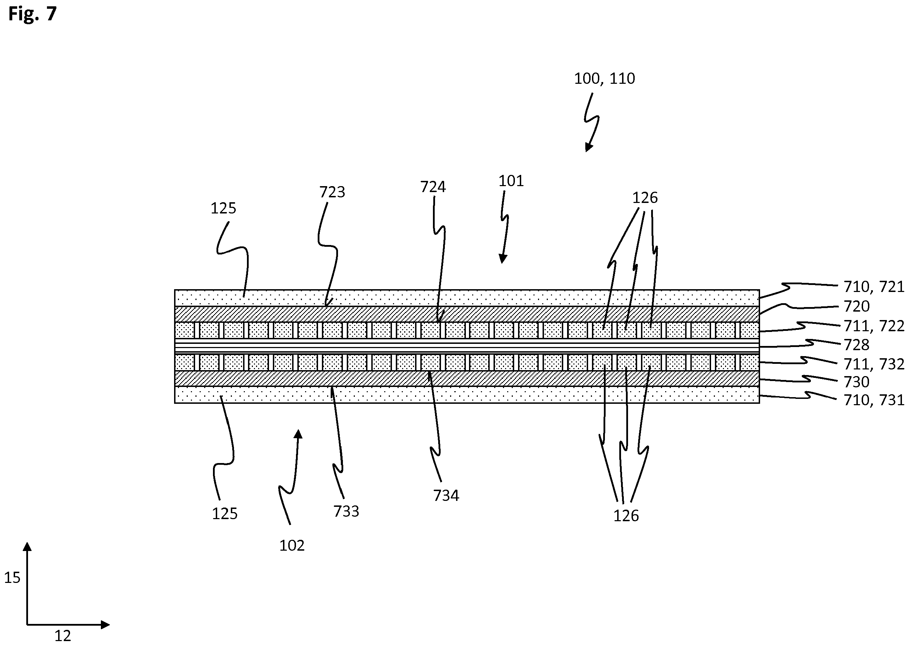

**Fig. 7** zeigt eine weitere schematische, nicht maßstabsgetreue Darstellung der Statoreinheit 100 in einer Schnittansicht, wobei die Schnittebene senkrecht zu der zweiten Richtung 14 orientiert ist. Die Statoreinheit 100 weist eine erste Trägerplatte 720 und eine zweite Trägerplatte 730 auf. Soweit keine Unterschiede beschrieben werden, ist die zweite Trägerplatte 730 ausgebildet, wie es für die erste Trägerplatte 720 beschrieben wird.

Die erste Trägerplatte 720 ist in der ersten Richtung 12 und in der zweiten Richtung 14 plattenförmig, insbesondere als eine in der ersten und zweiten Richtung 12, 14 ausgedehnte Platte, ausgebildet. Die erste Trägerplatte 720 ist in der ersten Richtung 12 und in der zweiten Richtung 14 ausgedehnt und weist in der dritten Richtung 15 eine geringere Ausdehnung auf als in der ersten Richtung 12 und in der zweiten Richtung 14. Die erste Trägerplatte 720 erstreckt sich in der ersten Richtung 12 zwischen den entlang der zweiten Richtung 14 orientierten Seitenflächen 32 der Statoreinheit 100. In der zweiten Richtung 14 erstreckt sich die erste Trägerplatte 720 zwischen den entlang der ersten Richtung 12 orientierten Seitenflächen 32 der Statoreinheit 100.

Die erste Trägerplatte 720 ist zweilagig ausgebildet, umfasst also zwei Statorlagen der Statoreinheit 100. Die erste Trägerplatte 720 weist eine erste Seite 723 und eine der ersten Seite 723 in der dritten Richtung 15 gegenüberliegende zweite Seite 724 auf. Auf der ersten Seite 723 der ersten Trägerplatte 720 ist eine als erste Statorlängslage 721 bezeichnete Statorlängslage 710 der Statoreinheit 100 mit ersten Spulenleitern 125 angeordnet. Auf der zweiten Seite 724 der ersten Trägerplatte 720 ist eine als erste Statorschräg- oder -querlage 722 bezeichnete Statorschräg- oder -querlage 711 der Statoreinheit 100 mit zweiten Spulenleitern 126 angeordnet. Die erste Seite 723 der ersten Trägerplatte 720 und die zweite Seite 724 der ersten Trägerplatte 720 sind jeweils eben ausgebildet und parallel zueinander angeordnet.

Die erste Trägerplatte 720 umfasst ein elektrisch isolierendes Material, beispielsweise eine Keramik, einen Kunststoff oder einen glasfaserverstärkten Kunststoff. Das elektrisch isolierende Material ist in der dritten Richtung 15 zwischen der ersten Statorlängslage 721 und der ersten Statorschräg- oder -querlage 722 angeordnet. Die erste Statorlängslage 721 mit den ersten Spulenleitern 125 und die erste Statorschräg- oder -querlage 722 mit den zweiten Spulenleitern 126 sind als in der dritten Richtung 15 flache und elektrisch leitfähige Schichten, beispielsweise metallische Schichten, ausgebildet.

Die erste Trägerplatte 720 kann als eine Leiterplatte, insbesondere als eine gedruckte Leiterplatte *(printed circuit board),* und die erste Statorlängslage 721 und die erste Statorschräg- oder -querlage 722 können als Leiterbahnlagen der Leiterplatte ausgebildet sein. Die ersten Spulenleiter 125 der ersten Statorlängslage 721 und die zweiten Spulenleiter 126 der ersten Statorschräg- oder -querlage 722 können auf den Seiten 723, 724 oder Lagen der ersten Trägerplatte 720 als länglich ausgedehnte Leiterstreifen mit einer Dicke zwischen 10pm und 500µm ausgebildet sein, insbesondere können die Leiterstreifen eine Dicke zwischen 50pm und 250µm aufweisen. Die ersten Spulenleiter 125 der ersten Statorlängslage 721 und die zweiten Spulenleiter 126 der zweiten Statorschräg- oder -querlage 722 können auch als Metallstreifen oder Metalldrähte ausgebildet sein.

Die zweite Trägerplatte 730 ist ausgebildet, wie es für die erste Trägerplatte 720 beschrieben wird. Insbesondere weist die zweite Trägerplatte 730 eine erste Seite 733 und eine der ersten Seite 733 der zweiten Trägerplatte 730 in der dritten Richtung 15 gegenüberliegende zweite Seite 734 auf. Auf der ersten Seite 733 der zweiten Trägerplatte 730 ist eine als zweite Statorlängslage 731 bezeichnete Statorlängslage 710 mit ersten Spulenleitern 125 und auf der zweiten Seite 734 der zweiten Trägerplatte 733 ist eine als zweite Statorschräg- oder -querlage 732 bezeichnete Statorschräg- oder -querlage 711 mit zweiten Spulenleitern 126 angeordnet. Analog zu der ersten Trägerplatte 720 kann die zweite Trägerplatte 730 als eine Leiterplatte, insbesondere als eine gedruckte Leiterplatte *(printed circuit board),* und die zweite Statorlängslage 731 und die erste Statorschräg- oder -querlage 732 können als Leiterbahnlagen der Leiterplatte ausgebildet sein.

Die erste Trägerplatte 720 ist derart ausgerichtet, dass die erste Seite 723 der ersten Trägerplatte 720 in der dritten Richtung 15 über der zweiten Seite 724 der ersten Trägerplatte 720 liegt. Damit bildet die erste Seite 723 der ersten Trägerplatte 720 in der dritten Richtung 15 die Oberseite der ersten Trägerplatte 720 und die zweite Seite 724 der ersten Trägerplatte 720 bildet in der dritten Richtung 15 die Unterseite der ersten Trägerplatte 720. Die zweite Trägerplatte 730 ist derart ausgerichtet, dass die erste Seite 733 der zweiten Trägerplatte 730 in der dritten Richtung 15 unter der zweiten Seite 734 der zweiten Trägerplatte 730 liegt. Damit bildet die erste Seite 733 der zweiten Trägerplatte 730 in der dritten Richtung 15 die Unterseite der zweiten Trägerplatte 730 und die zweite Seite 734 der zweiten Trägerplatte 730 bildet in der dritten Richtung 15 die Oberseite der zweiten Trägerplatte 730.

Die erste Trägerplatte 720 und die zweite Trägerplatte 730 der Statoreinheit 100 sind in der dritten Richtung 15 nebeneinander angeordnet. Die erste Trägerplatte 720 und die zweite Trägerplatte 730 sind parallel zueinander ausgerichtet. Die erste Trägerplatte 720 ist in der dritten Richtung 15 über der zweiten Trägerplatte 730 angeordnet. Insbesondere ist die zweite Seite 724 der ersten Trägerplatte 720 der zweiten Seite 734 der zweiten Trägerplatte 730 zugewandt angeordnet. Die erste Seite 723 der ersten Trägerplatte 720 bildet in der dritten Richtung 15 eine Oberseite 101 der Statoreinheit 100 und die erste Seite 733 der zweiten Trägerplatte 730 bildet in der dritten Richtung 15 eine Unterseite 102 der Statoreinheit 100.

Bei der Statoreinheit 100 bildet die erste Statorlängslage 721 die erste Statorlage 104 der Statoreinheit 100. Die erste Statorschräg- oder -querlage 722 bildet die zweite Statorlage 105, die zweite Statorschräg- oder -querlage 732 bildet die dritte Statorlage 106 und die zweite Statorlängslage 731 bildet die vierte Statorlage 107 der Statoreinheit 100.

Zwischen der ersten Trägerplatte 720 und der zweiten Trägerplatte 730 ist eine Isolierlage 728 angeordnet. Die Isolierlage 728 ist elektrisch isolierend ausgebildet. Die Isolierlage 728 kann beispielsweise einen Kunststoff oder eine Keramik aufweisen. Die Isolierlage 728 kann sich in der ersten Richtung 12 zwischen den entlang der zweiten Richtung 14 verlaufenden Seitenflächen 32 der Statoreinheit 100 und in der zweiten Richtung 14 zwischen den entlang der ersten Richtung 12 verlaufenden Seitenflächen 32 der Statoreinheit 100 erstrecken. Die Isolierlage 728 und die Trägerplatten 720, 730 können in der dritten Richtung 15 eine gleiche Dicke aufweisen. Die Dicke der Trägerplatten 720, 730 und der Isolierlage 728 kann in der dritten Richtung 15 beispielsweise zwischen 35pm und 200pm, insbesondere zwischen 50pm und 100pm, insbesondere 75pm betragen. Die Isolierlage 728 kann in der dritten Richtung 15 aber auch eine geringere oder eine größere Dicke als die Trägerplatten 720, 730 aufweisen.

Die Isolierlage 728 ist mit der ersten Trägerplatte 720 und mit der zweiten Trägerplatte 730 mechanisch fest verbunden. Beispielsweise kann die Isolierlage 728 mit den Trägerplatten 720, 730 verklebt sein. Alternativ oder zusätzlich kann in der dritten Richtung 15 ein Verbindungselement durch die Statoreinheit 100 verlaufen und die Trägerplatten 720, 730 und die Isolierlage 728 mechanisch miteinander verbinden. Das Verbindungselement kann beispielsweise von der Oberseite 101 der Statoreinheit 100 bis zu der Unterseite 102 der Statoreinheit 100 verlaufen. Das Verbindungselement kann beispielsweise von der ersten Seite 723 der ersten Trägerplatte 720 bis zu der ersten Seite 733 der zweiten Trägerplatte 730 verlaufen. Das Verbindungselement kann beispielsweise als ein Einpressverbinder ausgebildet sein. Neben dem Verbindungselement kann die Statoreinheit 100 weitere, identisch ausgebildete Verbindungselemente aufweisen.

Die Statoreinheit 100 umfasst insgesamt eine mehrlagige Statorlagenanordnung mit einer geraden Anzahl von Statorlagen 104, 105, 106, 107. Die Statoreinheit 100 umfasst insbesondere eine vierlagige Statorlagenanordnung. Die Statoreinheit 100 umfasst mehrere in der dritten Richtung 15 übereinander angeordnete zweilagige Trägerplatten 720, 730. Insbesondere umfasst die Statoreinheit 100 zwei in der dritten Richtung 15 übereinander angeordnete zweilagige Trägerplatten 720, 730.

Bei der Statoreinheit 100 ist in der dritten Richtung 15 neben jeder Statorlängslage 710 eine Statorschräg- oder -querlage 711 und neben jeder Statorschräg- oder -querlage 711 eine Statorlängslage 710 angeordnet. Dabei ist jede Statorlängslage 710 auf der ersten Seite 723, 733 und jede benachbart angeordnete Statorschräg- oder -querlage 711 auf der zweiten Seite 724, 734 der jeweils zweilagigen Trägerplatten 720, 730 angeordnet. Insbesondere umfasst die Statoreinheit 100 jeweils ausschließlich zweilagige Trägerplatten 720, 730, auf deren erster Seite 723, 733 eine Statorlängslage 710 und auf deren zweiter Seite 724, 734 eine Statorschräg- oder -querlage 711 angeordnet ist.

Die Statoreinheit 100 kann im Bereich der Statorsegmente 120, 121 jeweils Verbindungsstrukturen aufweisen. Die Verbindungsstrukturen können auf den Spulenleitern 125, 126 oder zwischen den Spulenleitern 125, 126 der Statorsegmente 120, 121 angeordnet sein.

Die Verbindungsstrukturen können als Horizontalverbindungsstrukturen oder als Vertikalverbindungsstrukturen ausgebildet sein. Die Horizontalverbindungsstrukturen sind in einer der Statorlagen 104, 105, 106, 107 angeordnet und erstrecken sich in der durch die erste und zweite Richtung 12, 14 aufgespannten Ebene. Die Horizontalverbindungsstrukturen können länglich ausgedehnt sein. Die Horizontalverbindungsstrukturen können, wie die Spulenleiter 125, 126, als Leiterbahnen oder Leiterbahnabschnitte einer Lage einer Leiterplatte der Statoreinheit 100 ausgebildet sein.

Die Horizontalverbindungsstrukturen können als Längsverbinder ausgebildet sein und parallel zu den Spulenleitern 125, 126 der Statorlage 104, 105, 106, 107, in der sie angeordnet sind, verlaufen. Beispielsweise sind als Längsverbinder ausgebildete und in den Statorlängslagen 710 mit ersten Spulenleitern 125 angeordnete Horizontalverbindungsstrukturen entlang der ersten Richtung 12 länglich ausgedehnt. Als Längsverbinder ausgebildete und in den Statorschräg- oder -querlagen 711 mit zweiten Spulenleitern 126 angeordnete Horizontalverbindungsstrukturen sind entsprechend entlang der zweiten Richtung 14 länglich ausgedehnt. Als Längsverbinder ausgebildete Horizontalverbindungsstrukturen können auch als Parallelverbinder bezeichnet werden.

Die Horizontalverbindungsstrukturen können auch als Querverbinder ausgebildet sein und senkrecht zu den Spulenleitern 125, 126 der Statorlage 104, 105, 106, 107, in der sie angeordnet sind, verlaufen. Beispielsweise sind als Querverbinder ausgebildete und in den Statorlängslagen 710 mit ersten Spulenleitern 125 angeordnete Horizontalverbindungsstrukturen entlang der zu der ersten Richtung 12 senkrechten Richtung, bei der Statoreinheit 100 entlang der zweiten Richtung 14, länglich ausgedehnt. Als Querverbinder ausgebildete und in den Statorschräg- oder -querlagen 711 mit zweiten Spulenleitern 126 angeordnete Horizontalverbindungsstrukturen sind entsprechend entlang der zu der zweiten Richtung 14 senkrechten Richtung, bei der Statoreinheit 100 entlang der ersten Richtung 12, länglich ausgedehnt.

Die Statorlagen 104, 105, 106, 107 können damit eine Mehrzahl von Leiterstrukturen umfassen. Die Leiterstrukturen umfassen die in der jeweiligen Statorlage 104, 105, 106, 107 angeordneten ersten oder zweiten Spulenleiter 125, 126, sowie die in der jeweiligen Statorlage 104, 105, 106, 107 angeordneten Horizontalverbindungsstrukturen, insbesondere die in der jeweiligen Statorlage 104, 105, 106, 107 angeordneten Längsverbinder und/oder Querverbinder.

Ein Teil der Verbindungstrukturen kann als Vertikalverbindungsstrukturen ausgebildet sein, welche Leiterstrukturen, insbesondere Spulenleiter 125, 126 oder Horizontalverbindungsstrukturen, die in den einzelnen Statorsegmenten 120, 121 in verschiedenen Statorlagen 104, 105, 106, 107 übereinander angeordnet sind, miteinander verbinden. Die Vertikalverbindungsstrukturen können als Durchkontaktierungen oder als Vias *(vertical interconnect access)* zwischen den einzelnen Statorlagen 104, 105, 106, 107 der Trägerplatten 710, 720 der Statoreinheit 100 ausgebildet sein.

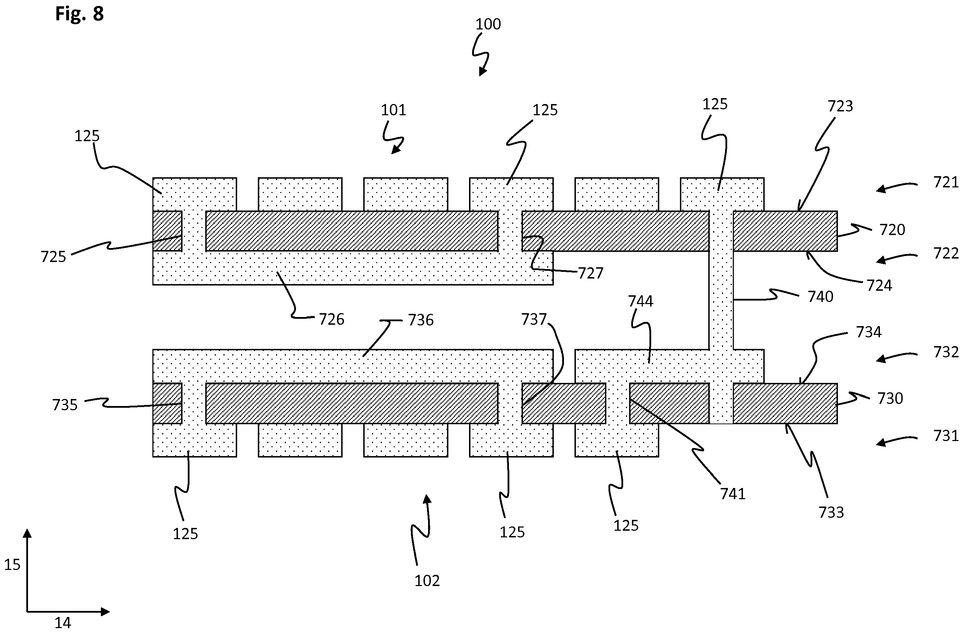

**Fig. 8** zeigt eine schematische, nicht maßstabsgetreue Darstellung eines Ausschnitts der Statoreinheit 100 in einer weiteren, vergrößerten Schnittansicht. Bei der in Fig. 8 dargestellten weiteren Schnittansicht ist die Schnittebene, anders als bei der in Fig. 7 dargestellten Schnittansicht, senkrecht zu der ersten Richtung 12 orientiert. Bei der schematischen Darstellung der Fig. 8 ist die zwischen der ersten Trägerplatte 720 und der zweiten Trägerplatte 730 angeordnete Isolierlage 728 nicht dargestellt.

Die erste Trägerplatte 720 umfasst eine erste Vertikalverbindungsstruktur 725. Die erste Vertikalverbindungsstruktur 725 ist parallel zu der dritten Richtung 15 ausgerichtet und verläuft in der dritten Richtung 15 durch die erste Trägerplatte 720. Die erste Vertikalverbindungsstruktur 725 erstreckt sich in der dritten Richtung 15 von der ersten Seite 723 der ersten Trägerplatte 720 bis zu der zweiten Seite 724 der ersten Trägerplatte 720. Insbesondere ragt die erste Vertikalverbindungsstruktur 725 in der dritten Richtung 15 nicht über die erste Trägerplatte 720 hinaus. Die erste Vertikalverbindungsstruktur 725 kann insbesondere in der dritten Richtung 15 auf der ersten Seite 723 der ersten Trägerplatte 720 und auf der zweiten Seite 724 der ersten Trägerplatte 720 enden.

Die erste Vertikalverbindungsstruktur 725 verbindet einen auf der ersten Seite 723 der ersten Trägerplatte 720 angeordneten ersten Spulenleiter 125 der ersten Statorlängslage 721 elektrisch leitend mit einer auf der zweiten Seite 724 der ersten Trägerplatte 720 angeordneten ersten Leiterstruktur 726. Die erste Leiterstruktur 726 kann auf der zweiten Seite 724 der ersten Trägerplatte 720 parallel zu den hier nicht dargestellten zweiten Spulenleitern 126 der ersten Statorschräg- oder -querlage 722 verlaufen. Die erste Leiterstruktur 726 kann eine erste Horizontalverbindungsstruktur, insbesondere ein erster Querverbinder oder ein erster Längsverbinder sein. Die erste Leiterstruktur 726 kann elektrisch isoliert von den zweiten Spulenleitern 126 der zweiten Seite 724 der ersten Trägerplatte 720 ausgebildet sein, so dass keine elektrische Verbindung zwischen den ersten Spulenleitern 125 auf der ersten Seite 723 der ersten Trägerplatte 720 und den zweiten Spulenleitern 126 auf der zweiten Seite 724 der ersten Trägerplatte 720 besteht.

Der erste Spulenleiter 125 der ersten Statorlängslage 721 kann direkt mit der ersten Vertikalverbindungsstruktur 725 elektrisch leitend verbunden sein. Der erste Spulenleiter 125 der ersten Statorlängslage 721 kann bei einer nicht dargestellten Ausführungsform aber auch über eine auf der ersten Statorlängslage 721 angeordnete Horizontalverbindungsstruktur, insbesondere über einen auf der ersten Statorlängslage 721 angeordneten Querverbinder oder über einen auf der ersten Statorlängslage 721 angeordneten Längsverbinder, mit der ersten Vertikalverbindungsstruktur 725 elektrisch leitend verbunden sein.

Neben der ersten Vertikalverbindungsstruktur 725 kann die erste Trägerplatte 720 weitere Vertikalverbindungsstrukturen umfassen, die ausgebildet sind, wie die erste Vertikalverbindungsstruktur 725. Beispielsweise kann die erste Trägerplatte 720, wie in Fig. 8 dargestellt, eine weitere erste Vertikalverbindungsstruktur 727 umfassen, die die auf der ersten Statorschräg- oder -querlage 722 angeordnete erste Leiterstruktur 726 mit einem weiteren ersten Spulenleiter 125 der ersten Statorlängslage 721 elektrisch leitend verbindet. Der weitere erste Spulenleiter 125 und die weitere erste Vertikalverbindungsstruktur 727 können dabei direkt oder über eine Horizontalverbindungsstruktur elektrisch leitend verbunden sein.

Die zweite Trägerplatte 730 umfasst eine zweite Vertikalverbindungsstruktur 735. Soweit keine Unterschiede beschrieben werden, ist die zweite Vertikalverbindungsstruktur 735 ausgebildet, wie es für die erste Vertikalverbindungsstruktur 725 beschrieben wird. Die zweite Vertikalverbindungsstruktur 735 ist parallel zu der dritten Richtung 15 ausgerichtet und verläuft in der dritten Richtung 15 durch die zweite Trägerplatte 730. Die zweite Vertikalverbindungsstruktur 735 erstreckt sich in der dritten Richtung 15 von der ersten Seite 733 der zweiten Trägerplatte 730 bis zu der zweiten Seite 734 der zweiten Trägerplatte 730. Insbesondere ragt die zweite Vertikalverbindungsstruktur 735 in der dritten Richtung 15 nicht über die zweite Trägerplatte 730 hinaus. Die zweite Vertikalverbindungsstruktur 735 kann insbesondere in der dritten Richtung 15 auf der ersten Seite 733 der zweiten Trägerplatte 730 und auf der zweiten Seite 734 der zweiten Trägerplatte 730 enden.

Die zweite Vertikalverbindungsstruktur 735 verbindet einen auf der ersten Seite 733 der zweiten Trägerplatte 730 angeordneten ersten Spulenleiter 125 der zweiten Statorlängslage 731 elektrisch leitend mit einer auf der zweiten Seite 734 der zweiten Trägerplatte 730 angeordneten zweiten Leiterstruktur 736. Soweit keine Unterschiede beschrieben werden, ist die zweite Leiterstruktur 736 ausgebildet, wie es für die erste Leiterstruktur 726 beschrieben wird. Die zweite Leiterstruktur 736 kann auf der zweiten Seite 734 der zweiten Trägerplatte 730 parallel zu den nicht dargestellten zweiten Spulenleitern 126 der zweiten Statorschräg- oder -querlage 732 verlaufen. Die zweite Leiterstruktur 736 kann eine zweite Horizontalverbindungsstruktur, insbesondere ein zweiter Querverbinder oder ein zweiter Längsverbinder sein. Die zweite Leiterstruktur 736 kann elektrisch isoliert von den zweiten Spulenleitern 126 der zweiten Seite 734 der zweiten Trägerplatte 730 ausgebildet sein, so dass keine elektrische Verbindung zwischen den ersten Spulenleitern 125 auf der ersten Seite 733 der zweiten Trägerplatte 730 und den zweiten Spulenleitern 126 auf der zweiten Seite 734 der zweiten Trägerplatte 730 besteht.

Der erste Spulenleiter 125 der zweiten Statorlängslage 731 kann direkt mit der zweiten Vertikalverbindungsstruktur 735 elektrisch leitend verbunden sein. Der erste Spulenleiter 125 der zweiten Statorlängslage 731 kann bei einer nicht dargestellten Ausführungsform aber auch über eine auf der zweiten Statorlängslage 731 angeordnete Horizontalverbindungsstruktur, insbesondere über einen auf der zweiten Statorlängslage 731 angeordneten Querverbinder oder über einen auf der zweiten Statorlängslage 731 angeordneten Längsverbinder, mit der zweiten Vertikalverbindungsstruktur 735 elektrisch leitend verbunden sein.

Neben der zweiten Vertikalverbindungsstruktur 735 kann die zweite Trägerplatte 730 weitere Vertikalverbindungsstrukturen umfassen, die ausgebildet sind, wie die zweite Vertikalverbindungsstruktur 735. Beispielsweise kann die zweite Trägerplatte 730, wie in Fig. 8 dargestellt, eine weitere zweite Vertikalverbindungsstruktur 737 umfassen, die die auf der zweiten Statorschräg- oder -querlage 732 angeordnete zweite Leiterstruktur 736 mit einem weiteren ersten Spulenleiter 125 der zweiten Statorlängslage 731 elektrisch leitend verbindet. Der weitere erste Spulenleiter 125 der zweiten Statorlängslage 731 und die weitere zweite Vertikalverbindungsstruktur 737 können dabei direkt oder über eine auf der zweiten Statorlängslage 731 angeordnete Horizontalverbindungsstruktur elektrisch leitend verbunden sein.

Die erste Vertikalverbindungsstruktur 725 und die zweite Vertikalverbindungsstruktur 735 sind in der dritten Richtung 15 übereinander angeordnet. Insbesondere liegen die erste Vertikalverbindungsstruktur 725 und die zweite Vertikalverbindungsstruktur 735 in der dritten Richtung 15 auf einer Linie. Die erste Vertikalverbindungsstruktur 725 und die zweite Vertikalverbindungsstruktur 735 sind durch die in Fig. 8 nicht dargestellte Isolierlage 728 elektrisch voneinander isoliert. Insbesondere erstreckt sich die erste Vertikalverbindungsstruktur 725 auf der zweiten Seite 724 der ersten Trägerplatte 720 nur bis zu der Isolierlage 728, insbesondere nur bis zu einer Oberseite der Isolierlage 728. Die zweite Vertikalverbindungsstruktur 735 erstreckt sich auf der zweiten Seite 734 der zweiten Trägerplatte 730 ebenfalls nur bis zu der Isolierlage 728, insbesondere nur bis zu einer Unterseite der Isolierlage 728.

Analog zu der ersten und zweiten Vertikalverbindungsstruktur 725, 735 können auch weitere Vertikalverbindungsstrukturen der ersten und zweiten Trägerplatte 720, 730 in der dritten Richtung 15 übereinander angeordnet sein. Insbesondere können die weitere erste Vertikalverbindungsstruktur 727 und die weitere zweite Vertikalverbindungsstruktur 737 analog zu der ersten und zweiten Vertikalverbindungsstruktur 725, 735 in der dritten Richtung 15 übereinander angeordnet sein.

Die Statoreinheit 100 umfasst eine dritte Vertikalverbindungsstruktur 740. Soweit keine Unterschiede beschrieben werden, ist die dritte Vertikalverbindungsstruktur 740 ausgebildet, wie es für die erste Vertikalverbindungsstruktur 725 beschrieben wird. Die dritte Verbindungsstruktur 740 verbindet einen auf der ersten Seite 723 der ersten Trägerplatte 720 angeordneten ersten Spulenleiter 125 elektrisch leitend mit einer auf der zweiten Seite 734 der zweiten Trägerplatte 730 angeordneten dritten Leiterstruktur 744. Die dritte Leiterstruktur 744 kann beispielsweise eine dritte Horizontalverbindungsstruktur, insbesondere ein dritter Längsverbinder oder ein dritter Querverbinder sein. Die dritte Leiterstruktur 740 kann elektrisch isoliert von den zweiten Spulenleitern 126 der zweiten Seite 734 der zweiten Trägerplatte 730 ausgebildet sein, so dass keine elektrische Verbindung zwischen den ersten Spulenleitern 125 auf der ersten Seite 723 der ersten Trägerplatte 720 und den zweiten Spulenleitern 126 auf der zweiten Seite 734 der zweiten Trägerplatte 730 besteht.

Die dritte Vertikalverbindungsstruktur 740 verläuft parallel zu der dritten Richtung 15. Die dritte Vertikalverbindungsstruktur 740 verläuft in der dritten Richtung 15 durch die erste Trägerplatte 720 und die in Fig. 8 nicht dargestellte Isolierlage 728. Die dritte Vertikalverbindungsstruktur 740 kann zudem durch die zweite Trägerplatte 730 verlaufen. Insbesondere kann sich die dritte Vertikalverbindungsstruktur 740 von der Oberseite 101 der Statoreinheit 100 bis zu der Unterseite 102 der Statoreinheit 100 und von der obersten Statorlage 712 bis zu der untersten Statorlage 713 erstrecken. Bei der in Fig. 8 dargestellten Statoreinheit 100 erstreckt sich die dritte Vertikalverbindungsstruktur 740 dann von der ersten Seite 723 der ersten Trägerplatte 720 bis zu der ersten Seite 733 der zweiten Trägerplatte 730.

Die dritte Vertikalverbindungsstruktur 740 berührt lediglich auf zwei Statorlagen 104, 105, 106, 107 der Statoreinheit 100 Leiterstrukturen der betreffenden Statorlage 104, 105, 106, 107. Auf den übrigen Statorlagen 104, 105, 106, 107 sind die Leiterstrukturen der betreffenden Statorlage 104, 105, 106, 107 beabstandet von der dritten Vertikalverbindungsstruktur 740 ausgebildet. Insbesondere können auf den übrigen Statorlagen 104, 105, 106, 107 zwischen der dritten Vertikalverbindungsstruktur 740 und den Leiterstrukturen der betreffenden Statorlage 104, 105, 106, 107 jeweils ringförmige isolierende Bereiche umlaufend um die dritte Vertikalverbindungsstruktur 740 angeordnet sein. Insbesondere berührt die dritte Vertikalverbindungsstruktur 740 lediglich Leiterstrukturen der ersten Statorlängslage 721 und Leiterstrukturen der zweiten Statorschräg- oder -querlage 732, so dass die dritte Vertikalverbindungsstruktur 740 eine elektrisch leitende Verbindung zwischen den Leiterstrukturen der ersten Statorschräg- oder -querlage 722 und den Leiterstrukturen der zweiten Statorlängslage 731 ausgebildet. Dabei ist die dritte Vertikalverbindungsstruktur 740 lediglich auf der ersten Statorlängslage 721 mit ersten Spulenleitern 125 elektrisch leitend verbunden und auf der zweiten Statorschräg- oder -querlage 732 elektrisch isoliert von den dort angeordneten zweiten Spulenleitern 126 ausgebildet, so dass keine elektrisch leitende Verbindung zwischen den ersten und den zweiten Spulenleitern 125, 126 besteht.

Die zweite Trägerplatte 730 umfasst eine vierte Vertikalverbindungsstruktur 741. Soweit keine Unterschiede beschrieben werden, ist die vierte Vertikalverbindungsstruktur 741 ausgebildet, wie es für die zweite Vertikalverbindungsstruktur 735 beschrieben wird. Die vierte Vertikalverbindungsstruktur 741 verbindet die als Horizontalverbindungsstruktur, insbesondere als Längsverbinder oder Querverbinder, ausgebildete dritte Leiterstruktur 744 der zweiten Statorschräg- oder -querlage 732 elektrisch leitend mit einem ersten Spulenleiter 125 der zweiten Statorlängslage 731. Die vierte Vertikalverbindungsstruktur 741 erstreckt sich, wie die zweite Vertikalverbindungsstruktur 735, von der ersten Seite 733 der zweiten Trägerplatte 730 bis zu der zweiten Seite 734 der zweiten Trägerplatte 730. Bei der Statoreinheit 100 ist ein erster Spulenleiter 125 der ersten Statorlängslage 721 über die dritte Vertikalverbindungsstruktur 740, die dritte Leiterstruktur 744 und die vierte Vertikalverbindungsstruktur 741 elektrisch leitend mit einem ersten Spulenleiter 125 der zweiten Statorlängslage 731 verbunden.

Anstatt der oder zusätzlich zu der dritten Vertikalverbindungsstruktur 740 kann die Statoreinheit 100 auch weitere Vertikalverbindungsstrukturen umfassen, welche sich, wie die dritte Vertikalverbindungsstruktur 740, von der Oberseite 101 der Statoreinheit 100 bis zu der Unterseite 102 der Statoreinheit 100 erstrecken. Derartige Vertikalverbindungsstrukturen können zwei Leiterstrukturen, die in anderen Statorlagen 722, 731 als der ersten Statorlängslage 721 und der zweiten Statorschräg- oder - querlage 732 angeordnet sind, berühren. Beispielsweise kann eine derartige Vertikalverbindungsstruktur eine Leiterstruktur auf der ersten Statorlängslage 721, beispielsweise einen ersten Spulenleiter 125, einen Längsverbinder oder einen Querverbinder der ersten Statorlängslage 721, mit einer Leiterstruktur der zweiten Statorlängslage 731, beispielsweise mit einem ersten Spulenleiter 125, einem Längsverbinder oder einem Querverbinder der zweiten Statorlängslage 731, elektrisch leitend verbinden. Eine derartige Vertikalverbindungsstruktur kann auch eine auf der ersten Statorschräg- oder -querlage 722 angeordnete Leiterstruktur mit einer auf der zweiten Statorlängslage 733 oder mit einer auf der zweiten Statorschräg- oder -querlage 734 angeordneten Leiterstruktur elektrisch leitend verbinden

Neben den ersten Vertikalverbindungsstrukturen 725, 727 kann die erste Trägerplatte 720 auch weitere Vertikalverbindungsstrukturen umfassen, welche analog zu den ersten Vertikalverbindungsstrukturen 725, 727 ausgebildet sind und auf der zweiten Seite 724 der ersten Trägerplatte 720 angeordnete zweite Spulenleiter 126 mit auf der ersten Seite 723 der ersten Trägerplatte 720 angeordneten Leiterstrukturen verbinden. Beispielsweise kann die erste Trägerplatte 720 eine Vertikalverbindungsstruktur umfassen, die einen auf der zweiten Seite 724 der ersten Trägerplatte 720 angeordneten zweiten Spulenleiter 126 mit einem auf der ersten Seite 723 der ersten Trägerplatte 720 angeordneten Längsverbinder elektrisch leitend verbindet.

Neben den zweiten Vertikalverbindungsstrukturen 735, 737 kann die zweite Trägerplatte 730 auch weitere Vertikalverbindungsstrukturen umfassen, welche analog zu den zweiten Vertikalverbindungsstrukturen 735, 737 ausgebildet sind und auf der zweiten Seite 734 der zweiten Trägerplatte 730 angeordnete zweite Spulenleiter 126 mit auf der ersten Seite 733 der zweiten Trägerplatte 730 angeordneten Leiterstrukturen verbinden. Beispielsweise kann die zweite Trägerplatte 730 eine Vertikalverbindungsstruktur umfassen, die einen auf der zweiten Seite 734 der zweiten Trägerplatte 730 angeordneten zweiten Spulenleiter 126 mit einem auf der ersten Seite 733 der zweiten Trägerplatte 730 angeordneten Längsverbinder elektrisch leitend verbindet.

Die ersten Vertikalverbindungsstrukturen 725, 727 der ersten Trägerplatte 720 können jeweils leitfähig beschichtete Durchgangsöffnungen durch die erste Trägerplatte 720 umfassen. Die zweiten Vertikalverbindungsstrukturen 735, 737 und die vierte Vertikalverbindungsstruktur 741 der zweiten Trägerplatte 730 können jeweils leitfähig beschichtete Durchgangsöffnungen durch die zweite Trägerplatte 730 umfassen.

Die Durchkontaktierungen der ersten Vertikalverbindungsstrukturen 725, 727 und die Durchkontaktierungen der zweiten Vertikalverbindungsstrukturen 735, 737 und der vierten Vertikalverbindungsstruktur 741 können sich dabei jeweils nur über diejenige Trägerplatte 720, 730 erstrecken, auf der die über die betreffende Durchkontaktierung verbundenen Statorlagen 721, 722, 731, 732 angeordnet sind, nicht jedoch über die gesamte Statoreinheit 100. Derartige Durchkontaktierungen einer aus mehreren zweilagigen Trägerplatten 720, 730 aufgebauten Statoreinheit 100 werden auch als *blind vias* oder *buried vias* bezeichnet.

Insbesondere erstrecken sich die als *blind vias* oder *buried vias* ausgebildeten Vertikalverbindungsstrukturen 725, 727 durch die erste Trägerplatte 720 von der ersten Seite 723 der ersten Trägerplatte 720 bis zu der zweiten Seite 724 der ersten Trägerplatte 720. Insbesondere erstrecken sich die als *blind vias* oder *buried vias* ausgebildeten Vertikalverbindungsstrukturen 735, 737, 741 durch die zweite Trägerplatte 730 von der ersten Seite 733 der zweiten Trägerplatte 730 bis zu der zweiten Seite 734 der zweiten Trägerplatte 730. Damit sind die Leiterstrukturen der Statorlängslagen 710 und die Leiterstrukturen der Statorschräg- oder -querlagen 711 der einzelnen Trägerplatten 720, 730 unter anderem jeweils mittels ausschließlich auf der betreffenden Trägerplatte 720, 730 ausgeführten Vertikalverbindungsstrukturen 725, 727, 735, 737, 741 elektrisch leitend miteinander verbunden.

Dabei sind die ersten Spulenleiter 125 der Statorlängslage 710 und die zweiten Spulenleiter 126 der Statorschräg- oder -querlagen 711 der einzelnen Trägerplatten 720, 730 jeweils elektrisch isoliert voneinander ausgebildet. Die ausschließlich auf der ersten Trägerplatte 720 ausgeführten Vertikalverbindungsstrukturen 725, 727 verbinden jeweils einen ersten Spulenleiter 125 auf der ersten Seite 723 der ersten Trägerplatte 720 elektrisch leitend mit einer Horizontalverbindungsstruktur, insbesondere mit einem Längsverbinder oder einem Querverbinder, auf der zweiten Seite 724 der ersten Trägerplatte 720 oder einen zweiten Spulenleiter 126 auf der zweiten Seite 724 der ersten Trägerplatte 720 elektrisch leitend mit einer Horizontalverbindungsstruktur, insbesondere einem Längsverbinder oder einem Querverbinder, auf der ersten Seite 723 der ersten Trägerplatte 720. Analog verbinden die ausschließlich auf der zweiten Trägerplatte 730 ausgeführten Vertikalverbindungsstrukturen 735, 737, 741 jeweils einen ersten Spulenleiter 125 auf der ersten Seite 733 der zweiten Trägerplatte 730 mit einer Horizontalverbindungsstruktur, insbesondere mit einem Längsverbinder oder einem Querverbinder, auf der zweiten Seite 734 der zweiten Trägerplatte 730 oder einen zweiten Spulenleiter 126 auf der zweiten Seite 734 der zweiten Trägerplatte 730 mit einer Horizontalverbindungsstruktur, insbesondere einem Längsverbinder oder einem Querverbinder, auf der ersten Seite 733 der zweiten Trägerplatte 720.

Die dritte Vertikalverbindungsstruktur 740 kann eine leitfähig beschichtete Durchgangsöffnung durch die gesamte Statoreinheit 100 aufweisen, die sich in der dritten Richtung 15 über die gesamte Statoreinheit 100 erstreckt. Insbesondere kann sich die Durchgangsöffnung der dritten Vertikalverbindungsstruktur 740 in der dritten Richtung 15 von der Oberseite 101 der Statoreinheit 100 bis zu der Unterseite 102 der Statoreinheit 100 erstrecken. Derartige Durchkontaktierungen werden auch als *through vias* oder *through hole vias* bezeichnet.

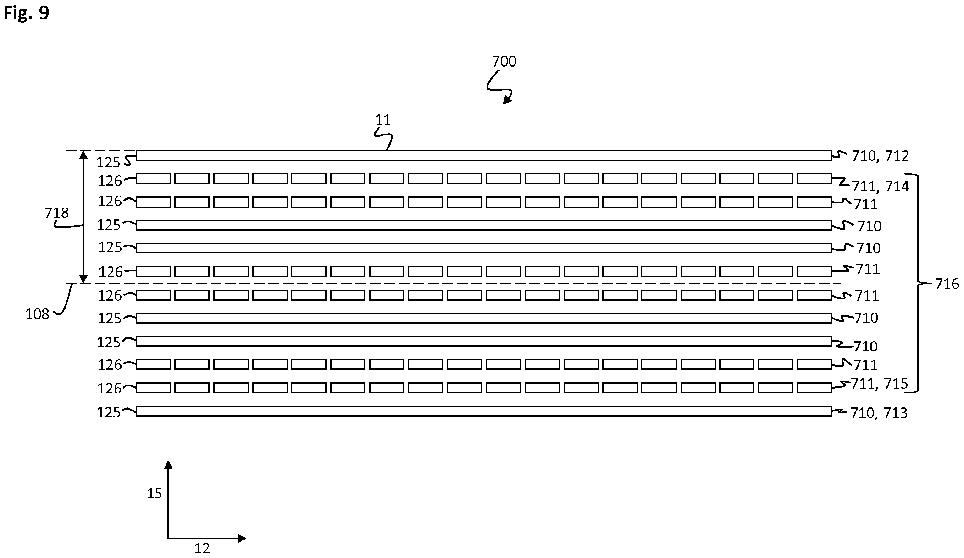

**Fig. 9** zeigt eine schematische, nicht maßstabsgetreue Darstellung einer ersten weiteren Statoreinheit 700 des Statormoduls 10 in einer Schnittansicht, bei der die Schnittebene senkrecht zu der zweiten Richtung 14 orientiert ist. Soweit keine Unterschiede beschrieben werden, ist die erste weitere Statoreinheit 700 ausgebildet, wie es für die Statoreinheit 100 beschrieben wird. Bei der ersten weiteren Statoreinheit 700 ist insbesondere die erste Richtung 12 senkrecht zu der zweiten Richtung 14 orientiert.

Die erste weitere Statoreinheit 700 weist eine erste Anordnung von insgesamt sechs Statorlängslagen 710 und eine zweite Anordnung von insgesamt sechs Statorschräg- oder -querlagen 711 auf. Damit entspricht die erste Gesamtzahl von Statorlängslagen 710 der zweiten Gesamtzahl von Statorschräg- oder -querlagen 711.

Zwischen der obersten Statorlage 712 und der untersten Statorlage 713 weist die erste Statoreinheit 700 Innenlagen 716 auf, die in der dritten Richtung 15 jeweils abwechselnd als zwei nebeneinanderliegende Statorschräg- oder -querlagen 711 und als zwei nebeneinanderliegende Statorlängslagen 710 ausgebildet sind.

Die erste weitere Statoreinheit 700 weist in der dritten Richtung 15 unter einer obersten Statorlage 712 der Reihe nach zwei benachbarte Statorschräg- oder -querlagen 711, zwei benachbarte Statorlängslagen 710, zwei benachbarte Statorschräg- oder -querlagen 711, zwei benachbarte Statorlängslagen 710, zwei benachbarte Statorschräg- oder -querlagen 711 und eine als Statorlängslage 710 ausgebildete unterste Statorlage 713 auf.

Die oberste Statorlage 712 der ersten weiteren Statoreinheit 700 und die unterste Statorlage 713 der ersten weiteren Statoreinheit 700 sind als Statorlängslagen 710 und eine zweitoberste Statorlage 714 und eine zweitunterste Statorlage 715 sind als Statorschräg- oder -querlagen 711 ausgebildet. Die Statorlängslagen 710 sind in der dritten Richtung 15 höchstens auf einer Seite neben einer Statorschräg- oder -querlage 711 und die Statorschräg- oder -querlagen 711 sind in der dritten Richtung 15 höchstens auf einer Seite neben einer Statorlängslage 710 angeordnet. Insbesondere ist die als Statorlängslage 710 ausgebildete oberste Statorlage 712 lediglich auf ihrer Unterseite neben einer Statorschräg- oder -querlage 711, nämlich neben der als Statorschräg- oder -querlage 711 ausgebildeten zweitobersten Statorlage 714, angeordnet. Außerdem ist die als Statorlängslage 710 ausgebildete unterste Statorlage 113 nur auf ihrer Oberseite neben einer Statorschräg- oder -querlage 711, nämlich neben der als Statorschräg- oder -querlage 711 ausgebildeten zweituntersten Statorlage 715, angeordnet.

Als Statorlängslagen 710 ausgebildeten Innenlagen 716 der ersten weiteren Statoreinheit 700 sind jeweils auf einer Seite neben einer Statorlängslage 710 und auf der anderen Seite neben einer Statorschräg- oder -querlage 711 angeordnet. Als Statorschrägoder -querlagen 711 ausgebildeten Innenlagen 716 der ersten weiteren Statoreinheit 700 sind jeweils auf einer Seite neben einer Statorschräg- oder -querlage 711 und auf der anderen Seite neben einer Statorlängslage 710 angeordnet. Damit ist bei der ersten weiteren Statoreinheit 700 in der dritten Richtung 15 neben jeder Statorlängslage 710 genau eine Statorschräg- oder -querlage 711 und neben jeder Statorschräg- oder -querlage 711 genau eine Statorlängslage 710 angeordnet.

Bei der ersten weiteren Statoreinheit 700 weisen die erste Anordnung der Statorlängslagen 710 und die zweite Anordnung der Statorschräg- oder -querlagen 711 eine gemeinsame Mittenebene 108 auf, welche in der dritten Richtung 15 mittig zwischen der obersten Statorlage 712 und der untersten Statorlage 713 der ersten weiteren Statoreinheit 700 angeordnet ist. Die erste Anordnung von Statorlängslagen 710 und die zweite Anordnung von Statorschräg- oder -querlagen 711 weisen einen gleichen mittleren Abstand 718 von der Statorfläche 11 der ersten weiteren Statoreinheit 700 auf. Bei der ersten weiteren Statoreinheit 700 sind die erste Anordnung von Statorlängslagen 710 und die zweite Anordnung von Statorschräg- oder -querlagen 711 in der dritten Richtung 15 symmetrisch zu der gemeinsamen Mittenebene 108 ausgebildet. Bei der ersten weiteren Statoreinheit 700 entspricht ein Abstand der gemeinsamen Mittenebene 108 von der Statorfläche 11 dem mittleren Abstand 718 der Statorlängslagen 710 und der Statorschräg- oder -querlagen 711 von der Statorfläche 11.

Die erste weitere Statoreinheit 700 weist lediglich sechs Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Damit wechselt die Orientierung der Spulenleiter 125, 126 bei der ersten weiteren Statoreinheit 700 in der dritten Richtung 15 auch nur sechs Mal. Dies hat zur Folge, dass die Kapazitanz der Statorlagenanordnung der ersten weiteren Statoreinheit 700 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

Wie die Statoreinheit 100, kann auch die erste weitere Statoreinheit 700 in der dritten Richtung 15 übereinander angeordnete zweilagige Trägerplatten umfassen, auf deren erster Seite jeweils eine Statorlängslage 710 und auf deren zweiter Seite jeweils eine Statorschräg- oder -querlage 711 angeordnet ist.

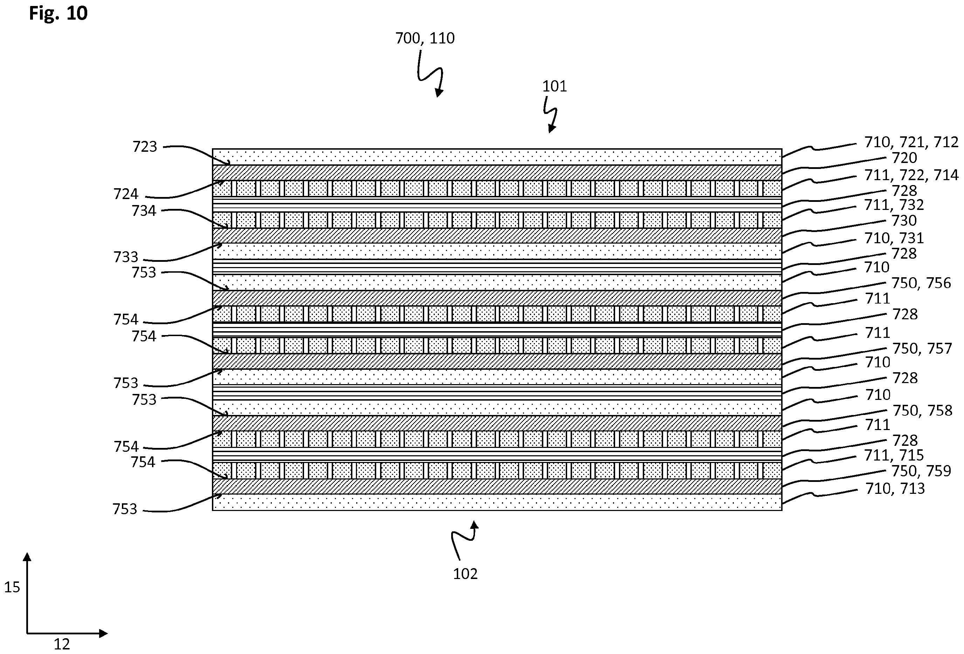

**Fig. 10** zeigt eine weitere schematische, nicht maßstabsgetreue Darstellung der ersten weiteren Statoreinheit 700 in einer Schnittansicht, wobei die Schnittebene senkrecht zu der zweiten Richtung 14 orientiert ist.

Wie die Statoreinheit 100, weist auch die erste weitere Statoreinheit 700 eine erste Trägerplatte 720 und eine zweite Trägerplatte 730 auf. Die erste Trägerplatte 720 der ersten weiteren Statoreinheit 700 ist ausgebildet, wie es für die erste Trägerplatte 720 der Statoreinheit 100 beschrieben wird. Die zweite Trägerplatte 730 der ersten weiteren Statoreinheit 700 ist ausgebildet, wie es für die zweite Trägerplatte 730 der Statoreinheit 100 beschrieben wird. Insbesondere ist auf einer ersten Seite 723 der ersten Trägerplatte 720 eine als erste Statorlängslage 721 bezeichnete Statorlängslage 710, auf einer der ersten Seite 723 in der dritten Richtung 15 gegenüberliegenden zweiten Seite 724 der ersten Trägerplatte 720 eine als erste Statorschräg- oder -querlage 722 bezeichnete Statorschräg- oder -querlage 711, auf einer ersten Seite 733 der zweiten Trägerplatte 730 eine als zweite Statorlängslage 731 bezeichnete Statorlängslage 710 und auf einer der ersten Seite 733 in der dritten Richtung 15 gegenüberliegenden zweiten Seite 734 der zweiten Trägerplatte 720 eine als zweite Statorschräg- oder - querlage 732 bezeichnete Statorschräg- oder -querlage 711 angeordnet.

Die erste Seite 723 der ersten Trägerplatte 720 ist in der dritten Richtung 15 über der zweiten Seite 724 der ersten Trägerplatte 720 angeordnet. Die erste Seite 733 der zweiten Trägerplatte 730 ist in der dritten Richtung 15 unter der zweiten Seite 734 der zweiten Trägerplatte 730 angeordnet. Die erste Trägerplatte 720 und die zweite Trägerplatte 730 sind in der dritten Richtung 15 nebeneinander angeordnet, wobei die erste Trägerplatte 720 über der zweiten Trägerplatte 730 angeordnet ist. Die zweite Seite 724 der ersten Trägerplatte 720 ist der zweiten Seite 734 der zweiten Trägerplatte 730 zugewandt angeordnet.

Die erste weitere Statoreinheit 700 umfasst neben der ersten und der zweiten Trägerplatte 720, 730 noch vier weitere Trägerplatten 750. Soweit keine Unterschiede beschrieben werden, sind die weiteren Trägerplatten 750 ausgebildet und angeordnet, wie es für die erste und zweite Trägerplatte 720, 730 beschrieben wird. Insbesondere weisen die weiteren Trägerplatten 750 jeweils eine erste Seite 753 mit einer Statorlängslage 710 und eine zweite Seite 754 mit einer Statorschräg- oder -querlage 711 auf. Die Trägerplatten 720, 730, 750 der ersten weiteren Statoreinheit 700 sind in der dritten Richtung 15 übereinander und parallel zueinander ausgerichtet angeordnet. Dabei sind einander zugewandte Seiten nebeneinander angeordneter Trägerplatten 720, 730, 750 in der dritten Richtung 15 abwechselnd als einander zugewandte erste Seiten 723, 733, 753 oder als einander zugewandte zweite Seiten 724, 734, 754 ausgebildet.

Bei der ersten weiteren Statoreinheit 700 ist die erste Trägerplatte 720 als oberste Trägerplatte in der dritten Richtung 15 über allen übrigen Trägerplatten 730, 750 angeordnet. Die erste Statorlängslage 721 bildet die oberste Statorlage 712 und die erste Statorschräg- oder -querlage 722 bildet die zweitoberste Statorlage 714 der ersten weiteren Statoreinheit 700. Die erste Seite 723 der ersten Trägerplatte 720 bildet eine Oberseite 101 der ersten weiteren Statoreinheit 700.

In der dritten Richtung 15 unter der ersten Trägerplatte 720 sind der Reihe nach die zweite Trägerplatte 730, eine erste weitere Trägerplatte 756, eine zweite weitere Trägerplatte 757, eine dritte weitere Trägerplatte 758 und eine vierte weitere Trägerplatte 759 angeordnet. Die erste Seite 733 der zweiten Trägerplatte 730 ist der ersten Seite 753 der ersten weiteren Trägerplatte 756, die zweite Seite 754 der ersten weiteren Trägerplatte 756 ist der zweiten Seite 754 der zweiten weiteren Trägerplatte 757, die erste Seite 753 der zweiten weiteren Trägerplatte 757 ist der ersten Seite 753 der dritten weiteren Trägerplatte 758 und die zweite Seite 754 der dritten weiteren Trägerplatte 758 ist der zweiten Seite 754 der vierten weiteren Trägerplatte 759 zugewandt angeordnet. Die erste Seite 753 der vierten weiteren Trägerplatte 759 bildet die Unterseite 102 der ersten weiteren Statoreinheit 700.

Zwischen den Trägerplatten 720, 730, 750 ist jeweils eine Isolierlage 728 angeordnet, die ausgebildet ist, wie die Isolierlage 728 der Statoreinheit 100.

Die erste weitere Statoreinheit 700 umfasst insgesamt eine mehrlagige Statorlagenanordnung mit einer geraden Anzahl von Statorlagen. Die erste weitere Statoreinheit 700 umfasst insbesondere eine zwölflagige Statorlagenanordnung. Die erste weitere Statoreinheit 700 umfasst mehrere in der dritten Richtung 15 übereinander angeordnete zweilagige Trägerplatten 720, 730, 750. Insbesondere umfasst die erste weitere Statoreinheit 700 sechs in der dritten Richtung 15 übereinander angeordnete zweilagige Trägerplatten 720, 730, 750.

Bei der ersten weiteren Statoreinheit 700 ist im Inneren der Statoreinheit 700, also abgesehen von der obersten Statorlage 712 und der untersten Statorlage 713, in der dritten Richtung 15 neben jeder Statorlängslage 710 eine Statorschräg- oder -querlage 711 und neben jeder Statorschräg- oder -querlage 711 eine Statorlängslage 710 angeordnet. Dabei ist jede Statorlängslage 710 auf der ersten Seite 723, 733, 753 und jede benachbart angeordnete Statorschräg- oder -querlage 711 auf der zweiten Seite 724, 734, 754 der jeweils zweilagigen Trägerplatten 720, 730, 750 angeordnet. Insbesondere umfasst die erste weitere Statoreinheit 700 jeweils ausschließlich zweilagige Trägerplatten 720, 730, 750 auf deren erster Seite 723, 733, 753 eine Statorlängslage 710 und auf deren zweiter Seite 724, 734, 754 eine Statorschräg- oder -querlage 711 angeordnet ist.

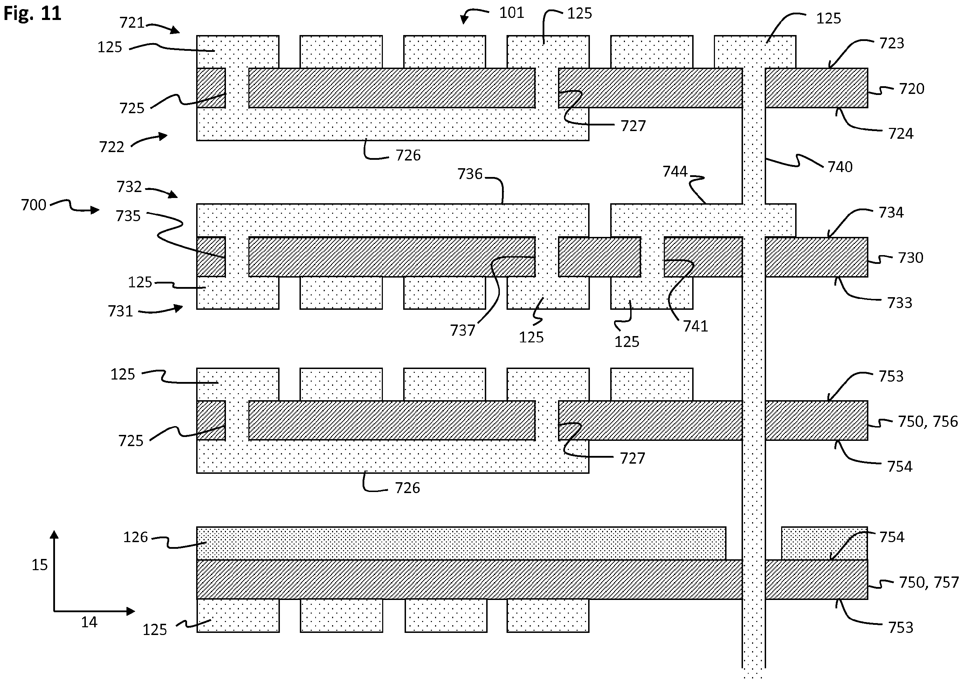

**Fig. 11** zeigt eine schematische, nicht maßstabsgetreue Darstellung eines Ausschnitts der ersten weiteren Statoreinheit 700 in einer weiteren, vergrößerten Schnittansicht. Bei der in Fig. 11 dargestellten weiteren Schnittansicht ist die Schnittebene, anders als bei der in Fig. 10 dargestellten Schnittansicht, senkrecht zu der ersten Richtung 12 orientiert. Bei der schematischen Darstellung der Fig. 11 sind die zwischen den Trägerplatten 720, 730, 750 angeordneten Isolierlagen 728 nicht dargestellt.

Wie die Statoreinheit 100, umfasst auch die erste weitere Statoreinheit 700 Verbindungsstrukturen. Soweit keine Unterschiede beschrieben werden, sind die Verbindungsstrukturen der ersten weiteren Statoreinheit 700 ausgebildet, wie es für die Verbindungsstrukturen der Statoreinheit 100 beschrieben wird. Insbesondere umfasst die erste weitere Statoreinheit 700 die im Zusammenhang mit der Statoreinheit 100 beschriebene erste Vertikalverbindungsstruktur 725, weitere erste Vertikalverbindungsstruktur 727, zweite Vertikalverbindungsstruktur 735, weitere zweite Vertikalverbindungsstruktur 737 und vierte Vertikalverbindungsstruktur 741.

Die erste weitere Statoreinheit 700 umfasst eine dritte Vertikalverbindungsstruktur 740, die, soweit keine Unterschiede beschrieben werden, ausgebildet ist wie die dritte Vertikalverbindungsstruktur 740 der Statoreinheit 100. Insbesondere erstreckt sich die dritte Vertikalverbindungsstruktur 740 der ersten weiteren Statoreinheit 700 in der dritten Richtung 15 von der Oberseite 101 der ersten weiteren Statoreinheit 700 bis zu der Unterseite 102 der ersten weiteren Statoreinheit 700. Insbesondere kann sich die dritte Vertikalverbindungsstruktur 740 durch alle Trägerplatten 720, 730, 750 und alle Isolierlagen 728 der ersten weiteren Statoreinheit 700 erstrecken. Die dritte Vertikalverbindungsstruktur 740 kann eine leitfähig beschichtete Durchgangsöffnung durch die erste weitere Statoreinheit 700 umfassen.

Die dritte Vertikalverbindungsstruktur 740 kann nur Leiterstrukturen von zweien der zwölf Statorlagen der ersten weiteren Statoreinheit 700 berühren und beabstandet von den Leiterstrukturen aller übrigen Statorlagen der ersten weiteren Statoreinheit 700 ausgebildet sein. Insbesondere kann die dritte Vertikalverbindungsstruktur 740, wie in Fig. 11 dargestellt, Leiterstrukturen der ersten Statorlängslage 721 und Leiterstrukturen der zweiten Statorschräg- oder -querlage 732 berühren und so eine elektrisch leitende Verbindung zwischen den Leiterstrukturen der ersten Statorlängslage 721 und den Leiterstrukturen der zweiten Statorschräg- oder -querlage 732 herstellen. Dabei ist die dritte Vertikalverbindungsstruktur 740 entweder auf der ersten Statorlängslage 721 mit als erste Spulenleiter 725 ausgebildeten Leiterstrukturen, oder auf der zweiten Statorschräg- oder -querlage 732 mit als zweite Spulenleiter 126 ausgebildeten Leiterstrukturen elektrisch leitend verbunden und auf der jeweilig anderen Statorlage 721, 732 elektrisch isoliert von den dort angeordneten Spulenleitern 125, 126 ausgebildet, so dass die ersten Spulenleiter 125 elektrisch isoliert von den zweiten Spulenleitern 126 ausgebildet sind.

Die weiteren Trägerplatten 750 der ersten weiteren Statoreinheit 700 können ebenfalls Vertikalverbindungsstrukturen umfassen, die ausgebildet sind, wie die erste Vertikalverbindungsstruktur 725, die weitere erste Vertikalverbindungsstruktur 727, die zweite Vertikalverbindungsstruktur 735, die weitere zweite Vertikalverbindungsstruktur 737 oder die vierte Vertikalverbindungsstruktur 741. Insbesondere können die weiteren Trägerplatten 750 jeweils Vertikalverbindungsstrukturen aufweisen, die sich jeweils von der ersten Seite 753 bis zu der zweiten Seite 754 der betreffenden weiteren Trägerplatte 750 erstrecken und jeweils an der ersten und zweiten Seite 753, 754 der betreffenden Trägerplatte enden. Dabei können Vertikalverbindungsstrukturen von zweien, von mehreren oder von jeder Trägerplatten 720, 730, 750 in der dritten Richtung 15 übereinander angeordnet und jeweils durch die Isolierlagen 728 elektrisch isoliert voneinander sein.

Alternative Ausführungsformen der ersten weiteren Statoreinheit 700 können auch eine geringere Zahl oder eine größere Zahl von Statorlagen oder von zweilagigen Trägerplatten aufweisen.

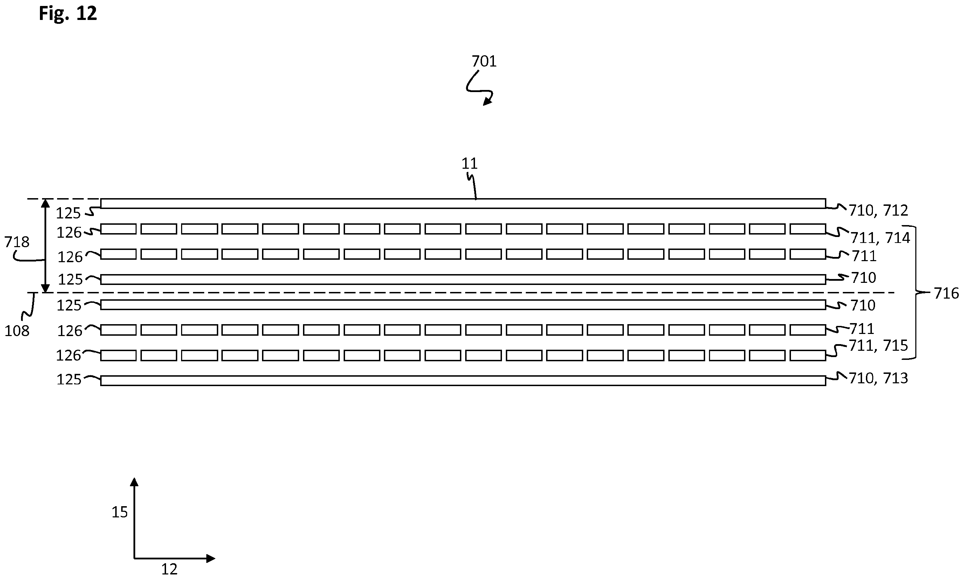

**Fig. 12** zeigt eine schematische, nicht maßstabsgetreue Darstellung einer zweiten weiteren Statoreinheit 701 in einer Schnittansicht, wobei die Schnittebene senkrecht zu der zweiten Richtung 14 orientiert ist. Soweit keine Unterschiede beschrieben werden, ist die zweite weitere Statoreinheit 701 ausgebildet, wie es für die erste weitere Statoreinheit 700 beschrieben wird.

Die zweite weitere Statoreinheit 701 umfasst insgesamt eine mehrlagige Statorlagenanordnung mit einer geraden Anzahl von Statorlagen 710, 711. Die zweite weitere Statoreinheit 701 weist insgesamt acht Statorlagen auf, wobei vier Statorlagen als Statorlängslagen 710 und vier Statorlagen als Statorschräg- oder -querlagen 711 ausgebildet sind. Neben jeder Statorlängslage 710 ist höchstens eine Statorschräg- oder -querlage 711 und neben jeder Statorschräg- oder -querlage 711 ist höchstens eine Statorlängslage 710 angeordnet. Die Anordnung der Statorlängslagen 710 und der Statorschräg- oder -querlagen 711 ist symmetrisch zu einer gemeinsamen Mittenebene 108 der Statorlängslagen 710 und der Statorschräg- oder -querlagen 711. Außerdem weisen die Statorlängslagen 710 und die Statorschräg- oder -querlagen 711 den gleichen mittleren Abstand 718 von der Statorfläche 11 der zweiten weiteren Statoreinheit 701 auf.

Die zweite weitere Statoreinheit 701 kann mehrere in der dritten Richtung 15 übereinander angeordnete und in Fig. 12 nicht dargestellte zweilagige Trägerplatten umfassen. Insbesondere kann die zweite weitere Statoreinheit 701 vier in der dritten Richtung 15 übereinander angeordnete zweilagige Trägerplatten umfassen. Die Trägerplatten können ausgebildet und angeordnet sein, wie es für die erste und zweite Trägerplatte 720, 730 der Statoreinheit 100 und die weiteren Trägerplatten 750 der ersten weiteren Statoreinheit 700 beschrieben wird.

Bei der zweiten weiteren Statoreinheit 701 ist in der dritten Richtung 15 neben jeder Statorlängslage 710 eine Statorschrägoder -querlage 711 und neben jeder Statorschräg- oder -querlage 711 eine Statorlängslage 710 angeordnet. Dabei kann jede Statorlängslage 710 auf der ersten Seite und jede benachbart angeordnete Statorschräg- oder -querlage 711 auf der zweiten Seite der jeweils zweilagigen Trägerplatte angeordnet sein. Insbesondere kann die zweite weitere Statoreinheit 701 jeweils ausschließlich zweilagige Trägerplatten umfassen, auf deren erster Seite eine Statorlängslage 710 und auf deren zweiter Seite eine Statorschräg- oder -querlage 711 angeordnet ist.

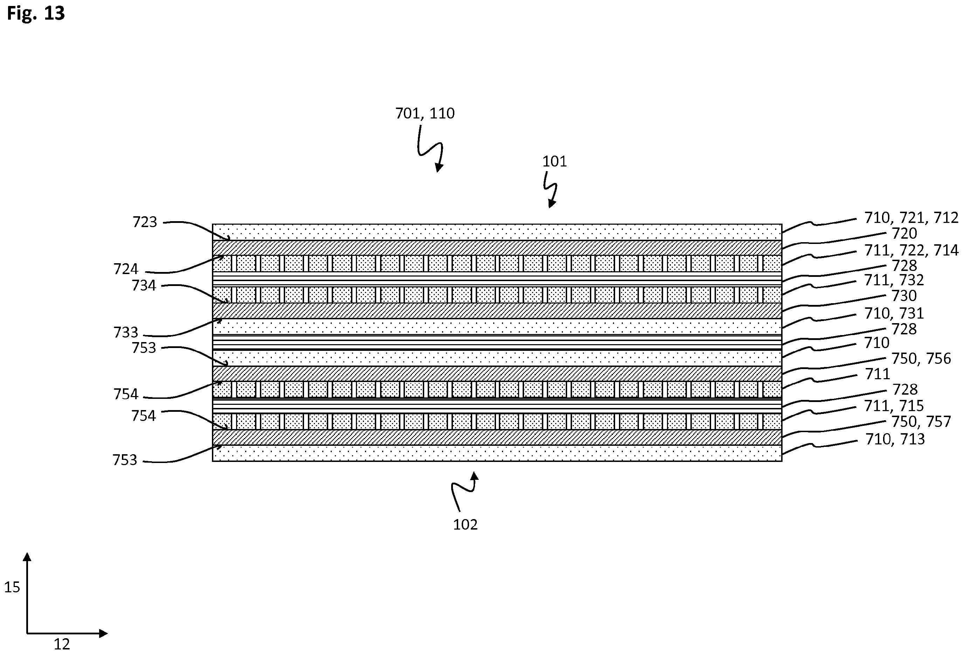

Die zweite weitere Statoreinheit 701 kann insbesondere vier zweilagige Trägerplatten umfassen, auf deren erster Seite jeweils eine Statorlängslage 710 und auf deren zweiter Seite jeweils eine Statorschräg- oder -querlage 711 angeordnet ist. Insbesondere kann die zweite weitere Statoreinheit 701, wie in **Fig. 13** dargestellt ist, die im Zusammenhang mit der ersten weiteren Statoreinheit 701 beschriebene erste Trägerplatte 720, zweite Trägerplatte 730, erste weitere Trägerplatte 756 und zweite weitere Trägerplatte 757 umfassen. Dabei kann die erste Seite 723 der ersten Trägerplatte 720 eine Oberseite 101 und die erste Seite 753 der zweiten weiteren Trägerplatte 757 eine Unterseite 102 der zweiten weiteren Statoreinheit 701 bilden. Die zweilagigen Trägerplatten 720, 730, 756, 757 der zweiten weiteren Statoreinheit 701 können dabei in der dritten Richtung 15 übereinander angeordnet sein, wobei einander zugewandte Seiten nebeneinander angeordneter Trägerplatten 720, 730, 750 in der dritten Richtung 15 abwechselnd als einander zugewandte erste Seiten 723, 733, 753 oder als einander zugewandte zweite Seiten 724, 734, 754 ausgebildet sind.

Die zweite weitere Statoreinheit 701 weist lediglich vier Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Damit wechselt die Orientierung der Spulenleiter 125, 126 bei der zweiten weiteren Statoreinheit 701 in der dritten Richtung 15 auch nur vier Mal. Dies hat zur Folge, dass die Kapazitanz der Statorlagenanordnung der zweiten weiteren Statoreinheit 701 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

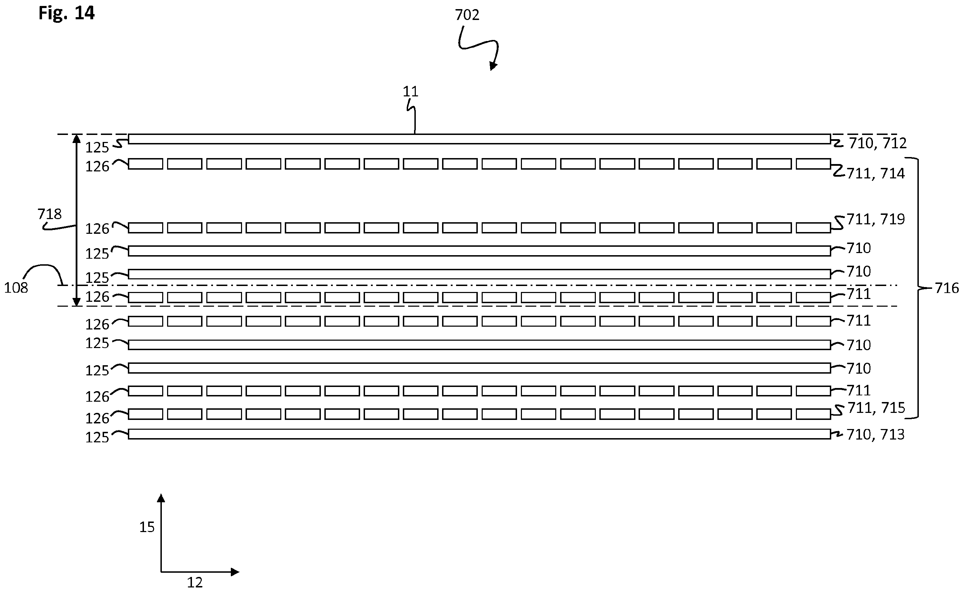

**Fig. 14** zeigt eine schematische, nicht maßstabsgetreue Darstellung einer dritten weiteren Statoreinheit 702 in einer Schnittansicht, wobei die Schnittebene senkrecht zu der zweiten Richtung 14 orientiert ist. Soweit keine Unterscheide beschrieben werden, ist die dritte weitere Statoreinheit 702 ausgebildet, wie es für die erste weitere Statoreinheit 700 beschrieben wird.

Anders als bei der Statoreinheit 100, der ersten weiteren Statoreinheit 700 und der zweiten weiteren Statoreinheit 701 weisen bei der dritten weiteren Statoreinheit 702 nicht alle Statorlagen in der dritten Richtung 15 einen gleichen Abstand voneinander auf. Bei der dritten weiteren Statoreinheit 702 ist ein Abstand zwischen der zweitobersten Statorlage 714 und einer unter der zweitobersten Statorlage 714 angeordneten nächstunteren Statorlage 719 größer als der Abstand zwischen den übrigen Statorlagen der dritten weiteren Statoreinheit 702. Bei der dritten weiteren Statoreinheit 702 weisen die erste Anordnung von Statorlängslagen 710 und die zweite Anordnung von Statorschräg- oder -querlagen 711 einen gleichen mittleren Abstand 718 von einer Statorfläche 11 der dritten weiteren Statoreinheit 702 auf. Der mittlere Abstand 718 entspricht dabei jedoch nicht dem Abstand der Mittenebene 108 von der Statorfläche 11.

Die dritte weitere Statoreinheit 702 weist insgesamt zwölf Statorlagen auf, wobei sechs Statorlagen als Statorlängslagen 710 und sechs Statorlagen als Statorschräg- oder -querlagen 711 ausgebildet sind. Neben jeder Statorlängslage 710 ist in der dritten Richtung 15 höchstens eine Statorschräg- oder -querlage 711 und neben jeder Statorschräg- oder -querlage 711 ist in der dritten Richtung 15 höchstens eine Statorlängslage 710 angeordnet. Insbesondere ist neben jeder Statorlängslage 710 in der dritten Richtung 15 genau eine Statorschräg- oder -querlage 711 und neben jeder Statorschräg- oder -querlage 711 ist in der dritten Richtung 15 genau eine Statorlängslage 710 angeordnet.

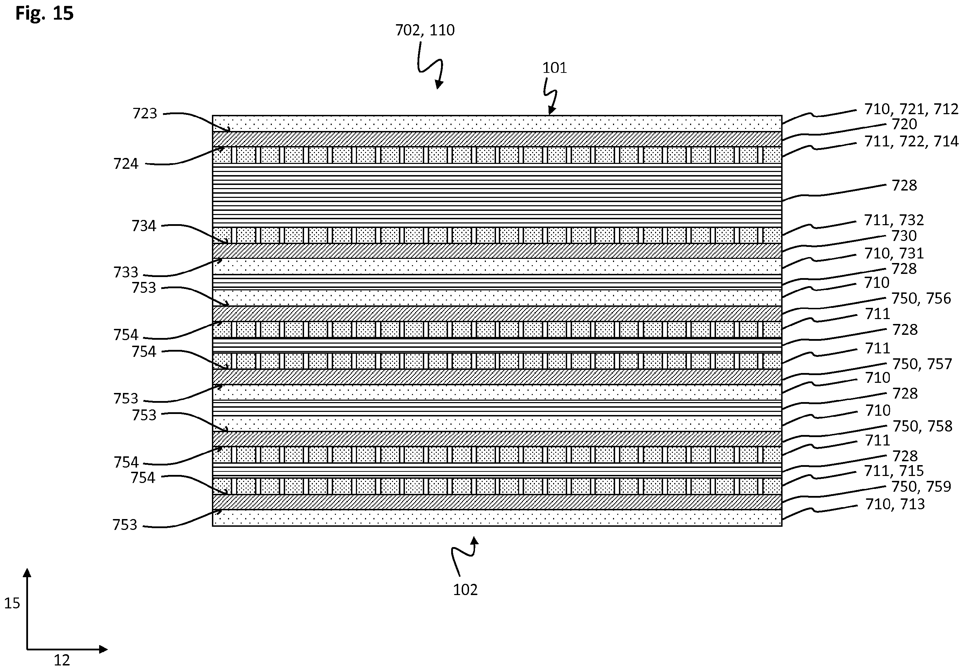

Die dritte weitere Statoreinheit 702 kann, wie die erste weitere Statoreinheit 700, insgesamt sechs zweilagige Trägerplatten umfassen, auf deren erster Seite jeweils eine Statorlängslage 710 und auf deren zweiter Seite jeweils eine Statorschräg- oder - querlage 711 angeordnet ist. Insbesondere kann die dritte weitere Statoreinheit 702, wie in **Fig. 15** dargestellt ist, die erste Trägerplatte 720, die zweite Trägerplatte 730 und die weiteren Trägerplatten 750 umfassen. Die zweilagigen Trägerplatten 720, 730, 750 können dabei in der dritten Richtung 15 übereinander angeordnet sein, wobei einander zugewandte Seiten nebeneinander angeordneter Trägerplatten 720, 730, 750 in der dritten Richtung 15 abwechselnd als einander zugewandte erste Seiten 723, 733, 753 oder als einander zugewandte zweite Seiten 724, 734, 754 ausgebildet sind. Die erste Trägerplatte 720 kann auf ihrer ersten Seite 723 die oberste Statorlage 712 und auf ihrer zweiten Seite 724 die zweitoberste Statorlage 714 umfassen. Die zweite Trägerplatte 730 kann auf ihrer zweiten Seite 734 die nächstuntere Statorlage 719 und auf ihrer ersten Seite 733 die unter der nächstunteren Statorlage 719 liegende Statorlängslage 710 umfassen. Die erste Trägerplatte 720 und die zweite Trägerplatte 730 der dritten weiteren Statoreinheit 702 können ausgebildet und angeordnet sein, wie es für die erste und zweite Trägerplatte 720, 730 der ersten weiteren Statoreinheit 700 beschrieben wird.

Die weiteren zweilagigen Trägerplatten 750 der dritten weiteren Statoreinheit 702 können ausgebildet sein, wie es für die weiteren Trägerplatten 750 der ersten weiteren Statoreinheit 700 beschrieben wird. Ein Abstand zwischen der ersten und zweiten Trägerplatte 720, 730 der dritten weiteren Statoreinheit 702 kann in der dritten Richtung 15 größer sein, als der Abstand zwischen den übrigen Trägerplatten 730, 750 der dritten weiteren Statoreinheit 702.

Die dritte weitere Statoreinheit 702 weist lediglich sechs Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Damit wechselt die Orientierung der Spulenleiter 125, 126 bei der zweiten weiteren Statoreinheit 702 in der dritten Richtung 15 auch nur sechs Mal. Dies hat zur Folge, dass die Kapazitanz der Statorlagenanordnung der dritten weiteren Statoreinheit 702 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

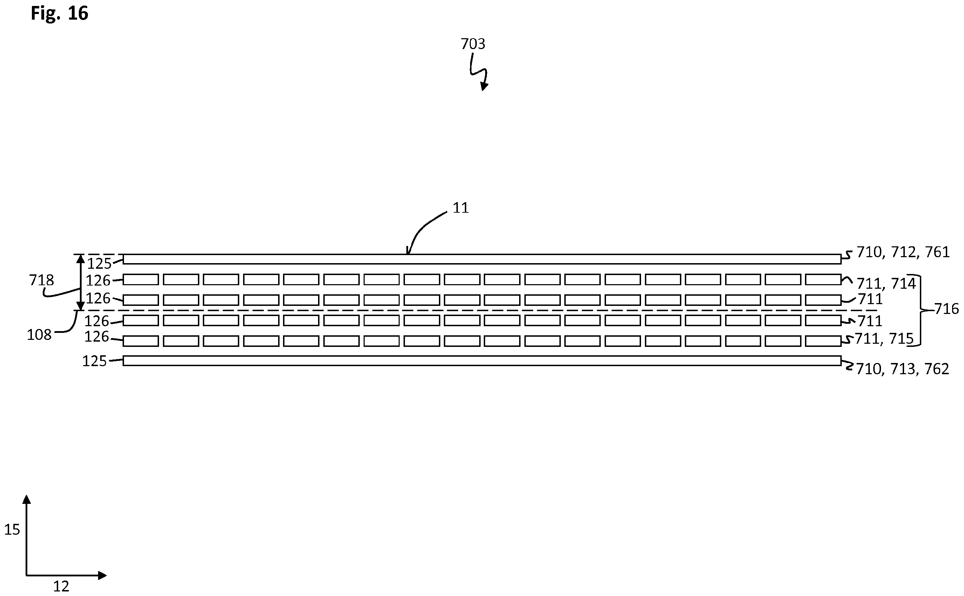

Fig. 16 zeigt eine schematische, nicht maßstabsgetreue Darstellung einer vierten weiteren Statoreinheit 703 in einer Schnittansicht, wobei die Schnittebene senkrecht zu der zweiten Richtung 14 orientiert ist. Soweit keine Unterscheide beschrieben werden, ist die vierte weitere Statoreinheit 703 ausgebildet, wie es für die Statoreinheit 100 beschrieben wird.

Die vierte weitere Statoreinheit 703 weist mindestens zwei Statorlängslagen 710 und mindestens drei Statorschräg- oder - querlagen 711 auf. Eine oberste Statorlage 712 und eine unterste Statorlage 713 der vierten weiteren Statoreinheit 703 sind jeweils als Statorlängslage 710 ausgebildet.

Die vierte weitere Statoreinheit 703 weist insbesondere insgesamt sechs Statorlagen 710, 711 auf. Die vierte weitere Statoreinheit 703 umfasst vier in der dritten Richtung 15 zwischen der obersten und der untersten Statorlage 712, 713 liegende Innenlagen 716, die als Statorschräg- oder -querlagen 711 ausgebildet sind. Eine zweitoberste Statorlage 714 und eine zweitunterste Statorlage 715 der vierten weiteren Statoreinheit 703 sind jeweils als Statorschräg- oder -querlage 711 ausgebildet. In der dritten Richtung 15 sind bei der vierten weiteren Statoreinheit 703 der Reihe nach eine Statorlängslage 710, vier Statorschräg- oder -querlagen 711 und eine Statorlängslage 710 nebeneinander angeordnet.

Bei der vierten weiteren Statoreinheit 703 sind die Statorlängslagen 710 in der dritten Richtung 15 auf höchstens einer Seite neben einer Statorschräg- oder -querlage 711 und die Statorschräg- oder -querlagen 711 sind in der dritten Richtung 15 auf höchstens einer Seite neben einer Statorlängslage 710 angeordnet. Insbesondere sind bei der vierten weiteren Statoreinheit 703 lediglich zwei Statorlängslagen 710 in der dritten Richtung 15 neben einer Statorschräg- oder -querlage 711 angeordnet. Außerdem sind lediglich zwei Statorschräg- oder -querlagen 711 in der dritten Richtung 15 neben einer Statorlängslage 710 angeordnet.

Bei der vierten weiteren Statoreinheit 703 sind alle Statorschräg- oder -querlagen 711 in der dritten Richtung 15 unmittelbar nebeneinander angeordnet. Insbesondere ist zwischen den Statorschräg- oder -querlagen 711 keine der Statorlängslagen 710 angeordnet. Bei der vierten weiteren Statoreinheit 703 ist ein erster Teil 761 der Statorlängslagen 710 in der dritten Richtung 15 über den Statorschräg- oder -querlagen 711 und ein zweiter Teil 762 der Statorlängslagen 710 in der dritten Richtung 15 unter den Statorschräg- oder -querlagen 711 angeordnet.

Der erste Teil 761 und der zweite Teil 762 der Statorlängslagen 710 umfasst jeweils eine gleiche Anzahl von Statorlängslagen 710. Bei der vierten weiteren Statoreinheit 703 umfassen der erste Teil 761 und der zweite Teil 762 jeweils eine Statorlängslage 710.

Die Statorlängslagen 710 und die Statorschräg- oder -querlagen 711 der vierten weiteren Statoreinheit 703 weisen in der dritten Richtung 15 einen gleichen mittleren Abstand 718 von einer Statorfläche 11 der vierten weiteren Statoreinheit 703 auf. Die Anordnung der Statorlängslagen 710 und der Statorschräg- oder - querlagen 711 ist bei der vierten weiteren Statoreinheit 703 symmetrisch zu einer gemeinsamen Mittenebene 108 der Statorlängslagen 710 und der Statorschräg- oder -querlagen 711.

Die vierte weitere Statoreinheit 703 weist lediglich zwei Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Insbesondere weist die vierte weitere Statoreinheit 703 zwischen der obersten Statorlage 712 und der zweitobersten Statorlage 714 einen ersten Statorlagenwechsel, bei dem sich in der dritten Richtung 15 die Orientierung der Spulenleiter 125, 126 ändert, und zwischen der zweituntersten Statorlage 715 und der untersten Statorlage 713 einen zweiten Statorlagenwechsel, bei dem sich in der dritten Richtung 15 die Orientierung der Spulenleiter 125, 126 ändert, auf. Damit wechselt die Orientierung der Spulenleiter 125, 126 bei der vierten weiteren Statoreinheit 703 in der dritten Richtung 15 auch nur zweimal. Dies hat zur Folge, dass die Kapazitanz der Statorlagenanordnung der vierten weiteren Statoreinheit 703 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

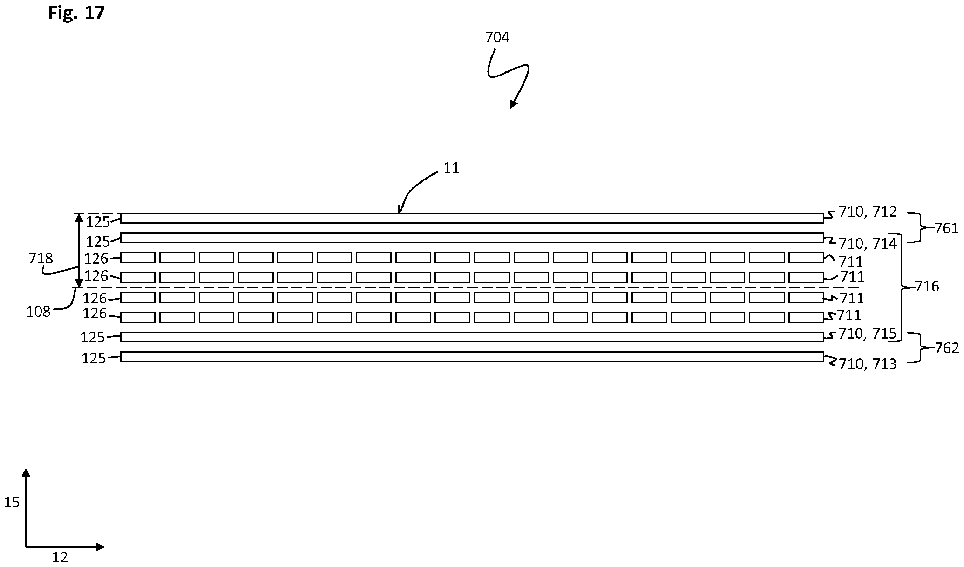

Fig. 17 zeigt eine schematische, nicht maßstabsgetreue Darstellung einer fünften weiteren Statoreinheit 704 in einer Schnittansicht, wobei die Schnittebene senkrecht zu der zweiten Richtung 14 orientiert ist. Soweit keine Unterscheide beschrieben werden, ist die fünfte weitere Statoreinheit 704 ausgebildet, wie es für die Statoreinheit 100 beschrieben wird.

Die fünfte weitere Statoreinheit 704 weist mindestens zwei Statorlängslagen 710 und mindestens drei Statorschräg- oder - querlagen 711 auf. Eine oberste Statorlage 712 und eine unterste Statorlage 713 der fünften weiteren Statoreinheit 704 sind jeweils als Statorlängslage 710 ausgebildet.

Die fünfte weitere Statoreinheit 704 weist insgesamt acht Statorlagen 710, 711 auf. Die fünfte weitere Statoreinheit 704 umfasst sechs in der dritten Richtung 15 zwischen der obersten und der untersten Statorlage 712, 713 liegende Innenlagen 716. Eine zweitoberste Statorlage 714 und eine zweitunterste Statorlage 715 der fünften weiteren Statoreinheit 704 sind jeweils als Statorlängslagen 710 ausgebildet, die übrigen Innenlagen 716 sind als Statorschräg- oder -querlagen 711 ausgebildet. In der dritten Richtung 15 sind bei der fünften weiteren Statoreinheit 704 der Reihe nach zwei Statorlängslagen 710, vier Statorschrägoder -querlagen 711 und zwei Statorlängslagen 710 nebeneinander angeordnet.

Bei der fünften weiteren Statoreinheit 704 sind die Statorlängslagen 710 in der dritten Richtung 15 auf höchstens einer Seite neben einer Statorschräg- oder -querlage 711 und die Statorschräg- oder -querlagen 711 sind in der dritten Richtung 15 auf höchstens einer Seite neben einer Statorlängslage 710 angeordnet. Insbesondere sind bei der fünften weiteren Statoreinheit 704 lediglich zwei Statorlängslagen 710 in der dritten Richtung 15 neben einer Statorschräg- oder -querlage 711 angeordnet. Außerdem sind lediglich zwei Statorschräg- oder -querlagen 711 in der dritten Richtung 15 neben einer Statorlängslage 710 angeordnet.

Bei der fünften weiteren Statoreinheit 704 sind alle Statorschräg- oder -querlagen 711 in der dritten Richtung 15 unmittelbar nebeneinander angeordnet. Insbesondere ist zwischen den Statorschräg- oder -querlagen 711 keine der Statorlängslagen 710 angeordnet. Bei der fünften weiteren Statoreinheit 704 ist ein erster Teil 761 der Statorlängslagen 710 in der dritten Richtung 15 über den Statorschräg- oder -querlagen 711 und ein zweiter Teil 762 der Statorlängslagen 710 in der dritten Richtung 15 unter den Statorschräg- oder -querlagen 711 angeordnet.

Der erste Teil 761 und der zweite Teil 762 der Statorlängslagen 710 umfasst jeweils eine gleiche Anzahl von Statorlängslagen 710. Bei der fünften weiteren Statoreinheit 704 umfassen der erste Teil 761 und der zweite Teil 762 jeweils zwei Statorlängslagen 710.

Die Statorlängslagen 710 und die Statorschräg- oder -querlagen 711 der fünften weiteren Statoreinheit 704 weisen in der dritten Richtung 15 einen gleichen mittleren Abstand 718 von einer Statorfläche 11 der fünften weiteren Statoreinheit 704 auf. Die Anordnung der Statorlängslagen 710 und der Statorschräg- oder - querlagen 711 ist bei der fünften weiteren Statoreinheit 704 symmetrisch zu einer gemeinsamen Mittenebene 108 der Statorlängslagen 710 und der Statorschräg- oder -querlagen 711.

Alternative Ausführungsformen der vierten oder fünften weiteren Statoreinheit 703, 704 können auch eine größere oder kleinere Anzahl unmittelbar nebeneinander angeordneter Statorschräg- oder -querlagen 711 und/oder eine größere oder kleinere Anzahl von Statorlängslagen 710 umfassen. Dabei kann der erste Teil 761 und der zweite Teil 762 der Statorlängslagen 710 eine gleiche Anzahl von Statorlängslagen 710 umfassen. Der erste Teil 761 und der zweite Teil 762 der Statorlängslagen 710 kann aber auch eine ungleiche Anzahl von Statorlängslagen 710 umfassen.

Die fünfte weitere Statoreinheit 704 weist lediglich zwei Statorlagenwechsel auf, bei denen sich in der dritten Richtung 15 die Orientierung der Spulenleiter 125, 126 ändert und bei denen in der ersten Richtung 12 ausgedehnte erste Spulenleiter 125 neben in der zweiten Richtung 14 ausgedehnten zweiten Spulenleitern 126 angeordnet sind. Damit wechselt die Orientierung der Spulenleiter 125, 126 bei der fünften weiteren Statoreinheit 704 in der dritten Richtung 15 auch nur zweimal. Dies hat zur Folge, dass die Kapazitanz der Statorlagenanordnung der fünften weiteren Statoreinheit 704 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

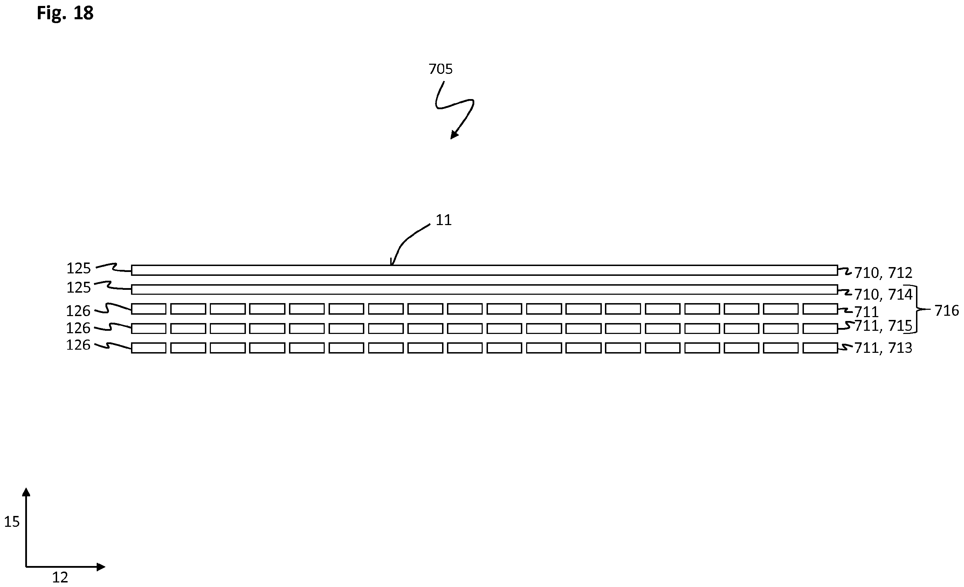

**Fig. 18** zeigt eine schematische, nicht maßstabsgetreue Darstellung einer sechsten weiteren Statoreinheit 705 in einer Schnittansicht, wobei die Schnittebene senkrecht zu der zweiten Richtung 14 orientiert ist. Soweit keine Unterscheide beschrieben werden, ist die sechste weitere Statoreinheit 705 ausgebildet, wie es für die Statoreinheit 100 beschrieben wird.

Die sechste weitere Statoreinheit 705 umfasst mindestens zwei Statorlängslagen 710 und mindestens drei Statorschräg- oder - querlagen 711. Soweit keine Unterscheide beschrieben werden, sind die Statorlängslage 710 und die Statorschräg- oder -querlagen 711 der sechsten weiteren Statoreinheit 705 ausgebildet, wie es für die Statorlängslagen 710 und die Statorschräg- oder - querlagen 711 der Statoreinheit 100 beschrieben wird.

Die Statorlängslagen 710 sind in der dritten Richtung 15 übereinander angeordnet. Die Statorschräg- oder -querlagen 711 sind in der dritten Richtung 15 übereinander angeordnet. Bei der sechsten weiteren Statoreinheit 705 sind alle Statorlängslagen 710 in der dritten Richtung 15 nebeneinander angeordnet. Außerdem sind alle Statorschräg- oder -querlagen 711 in der dritten Richtung 15 nebeneinander angeordnet. Bei der sechsten weiteren Statoreinheit 705 sind die Statorlängslagen 710 höchstens auf einer Seite neben einer Statorschräg- oder -querlage 711 und die Statorschräg- oder -querlagen 711 sind höchstens auf einer Seite neben einer Statorlängslage 710 angeordnet. Insbesondere ist bei der sechsten weiteren Statoreinheit 705 nur eine der Statorlängslagen 710 neben einer der Statorschräg- oder -querlage 711 und nur eine der Statorschräg- oder -querlagen 711 neben einer der Statorlängslagen 710 angeordnet.

Die sechste Statoreinheit 705 umfasst zwei Statorlängslagen 710 und drei Statorschräg- oder -querlagen 711. Die Statorlängslagen 710 sind in der dritten Richtung 15 über den Statorschräg- oder -querlagen 711 angeordnet. Alternative Ausführungsformen der sechsten weiteren Statoreinheit 705 können auch eine größere Anzahl von Statorlängslagen 710 und/oder eine größere Anzahl von Statorschräg- oder -querlagen 711 umfassen. Insbesondere können die alternativen Ausführungsformen der sechsten Statoreinheit 705 eine gleiche Anzahl an Statorlängslagen 710 und Statorschräg- oder -querlagen 711 umfassen.

Die sechste weitere Statoreinheit 705 weist lediglich einen Statorlagenwechsel auf, bei dem sich in der dritten Richtung 15 die Orientierung der Spulenleiter 125, 126 ändert und bei dem in der ersten Richtung 12 ausgedehnte erste Spulenleiter 125 neben in der zweiten Richtung 14 ausgedehnten zweiten Spulenleitern 126 angeordnet sind. Damit wechselt die Orientierung der Spulenleiter 125, 126 bei der sechsten weiteren Statoreinheit 705 in der dritten Richtung 15 auch nur einmal. Dies hat zur Folge, dass die Kapazitanz der Statorlagenanordnung der sechsten weiteren Statoreinheit 705 besonders niedrig ist. Insbesondere ist die Kapazitanz niedriger als bei einer Statorlagenanordnung, bei der in der dritten Richtung 15 jeweils abwechselnd Statorlängslagen 710 und Statorschräg- oder -querlagen 711 angeordnet sind.

Die schematischen Darstellungen der vorangegangenen Figuren zeigen die Spulenleiter 125, 126 der Statoreinheit 100 jeweils als rechteckig ausgebildete und sich über die gesamten Statorsektoren 110, 112, 113, 114 erstreckende Leiterstreifen. Die Spulenleiter 125, 126 können in von den Verbindungsstrukturen entfernten Bereichen der Statoreinheit 100 ausgebildet sein, wie es in den vorangegangenen Figuren schematisch dargestellt ist. Insbesondere im Bereich der Verbindungsstrukturen kann die Form der Spulenleiter 125, 126 jedoch auch von den schematischen Darstellungen der vorangegangenen Figuren abweichen. Insbesondere können die ersten Spulenleiter 125 im Bereich der Verbindungsstrukturen in der zu der ersten Richtung 12 senkrechten Richtung, bei der Statoreinheit 100 in der zweiten Richtung 14, schmaler ausgebildet sein als in den von den Verbindungsstrukturen entfernten Bereichen. Ebenso können die zweiten Spulenleiter 126 im Bereich der Verbindungsstrukturen in der zu der zweiten Richtung 14 senkrechten Richtung, bei der Statoreinheit 100 in der ersten Richtung 12, schmaler ausgebildet sein als in den von den Verbindungsstrukturen entfernten Bereichen.

Die ersten Spulenleiter 125 können in der ersten Richtung 12 auch kürzer ausgebildet sein, als es in den vorangegangenen Figuren schematisch dargestellt ist. Die zweiten Spulenleiter 126 können in der zweiten Richtung 14 auch kürzer ausgebildet sein, als es in den vorangegangenen Figuren schematisch dargestellt ist. Insbesondere müssen sich die ersten Spulenleiter 125 der einzelnen ersten Statorsegmente 120 in der ersten Richtung 12 nicht jeweils vollständig über die ersten Statorsegmente 120 erstrecken und die zweiten Spulenleiter 126 der einzelnen zweiten Statorsegmente 121 müssen sich in der ersten Richtung 12 nicht jeweils vollständig über die zweiten Statorsegmente 121 erstrecken. In den sich dadurch ergebenden Freiräumen können Horizontalverbindungsstrukturen und/oder Vertikalverbindungsstrukturen angeordnet sein.

Allen anhand der Figuren zuvor beschriebenen Statoreinheiten 100, 700, 701, 702, 703, 704, 705 ist gemein, dass die ersten Spulenleiter 125 in der dritten Richtung 15 übereinanderliegend angeordnet sind. Außerdem sind die ersten Spulenleiter 125 parallel zueinander angeordnet. Die Außenkanten übereinanderliegender erster Spulenleiter 125 sind in der zu der ersten Richtung 12 senkrechten Richtung, bei den Statoreinheiten 100, 700, 701, 702, 703, 704, 705 in der zweiten Richtung 14, fluchtend übereinander angeordnet. Ebenso sind die zweiten Spulenleiter 126 der Statoreinheiten 100, 700, 701, 702, 703, 704, 705 in der dritten Richtung 15 übereinander angeordnet. Die zweiten Spulenleiter 126 sind außerdem parallel zueinander angeordnet. Insbesondere sind die Außenkanten übereinanderliegender zweiter Spulenleiter 126 in der zu der zweiten Richtung 14 senkrechten Richtung, bei den Statoreinheiten 100, 700, 701, 702, 703, 704, 705 in der ersten Richtung 12, fluchtend übereinander angeordnet.

Die jeweils übereinanderliegenden ersten Spulenleiter 125 der Statoreinheiten 100, 700, 701, 702, 703, 704, 705 sind derart elektrisch leitend miteinander verbunden, dass in den jeweils übereinanderliegenden ersten Spulenleitern 125 jeweils ein gleicher Spulenstrom fließt. Der Spulenstrom in den jeweils übereinanderliegenden ersten Spulenleitern 125 weist insbesondere die gleiche Richtung und die gleiche Stromstärke auf. Dadurch liegen die jeweils übereinanderliegenden ersten Spulenleiter 125 im Betrieb der Statoreinheiten 100, 700, 701, 702, 703, 704, 705 auf dem gleichen elektrischen Potential. Insbesondere können die jeweils übereinanderliegenden ersten Spulenleiter 125 in Reihe geschaltet sein. Dabei können die übereinanderliegenden ersten Spulenleiter 125 jeweils getrennt von allen anderen ersten Spulenleitern 125 in Reihe geschaltet sein. Es können aber auch zwei oder mehr Gruppen übereinanderliegender erster Spulenleiter 125 in Reihe geschaltet sein, wobei die ersten Spulenleiter 125 einer oder mehrerer der Gruppen Hinleiter bilden, in denen der Spulenstrom in eine Längsrichtung, beispielsweise in die erste Richtung 12, fließt, und wobei die ersten Spulenleiter 125 einer weiterer oder mehrerer weiterer der Gruppen Rückleiter bilden, in denen der Spulenstrom zwar mit gleicher Stromstärke, aber in die entgegengesetzte Längsrichtung, beispielsweise entgegen der ersten Richtung 12, fließt.

Die jeweils übereinanderliegenden zweiten Spulenleiter 126 der Statoreinheiten 100, 700, 701, 702, 703, 704, 705 sind derart elektrisch leitend miteinander verbunden, dass in den übereinanderliegenden zweiten Spulenleitern 126 jeweils ein gleicher Spulenstrom fließt. Der Spulenstrom in den jeweils übereinanderliegenden zweiten Spulenleitern 126 weist insbesondere die gleiche Richtung und die gleiche Stromstärke auf. Dadurch liegen die jeweils übereinanderliegenden zweiten Spulenleiter 126 im Betrieb der Statoreinheiten 100, 700, 701, 702, 703, 704, 705 auf dem gleichen elektrischen Potential. Insbesondere können die jeweils übereinanderliegenden zweiten Spulenleiter 126 in Reihe geschaltet sein. Dabei können die jeweils übereinanderliegenden zweiten Spulenleiter 126 jeweils getrennt von allen anderen zweiten Spulenleitern 126 in Reihe geschaltet sein. Es können aber auch zwei oder mehr Gruppen übereinanderliegender zweiter Spulenleiter 126 in Reihe geschaltet sein, wobei die zweiten Spulenleiter 126 einer oder mehrerer der Gruppen Hinleiter bilden, in denen der Spulenstrom in eine Längsrichtung, beispielsweise in die zweite Richtung 14, fließt, und wobei die zweiten Spulenleiter 126 einer weiterer oder mehrerer weiterer der Gruppen Rückleiter bilden, in denen der Spulenstrom zwar mit gleicher Stromstärke, aber in die entgegengesetzte Längsrichtung, beispielsweise entgegen der zweiten Richtung 14, fließt.

In allen übereinanderliegenden ersten Spulenleitern 125 fließt der Spulenstrom entweder jeweils in die erste Richtung 12 oder entgegengesetzt der ersten Richtung 12. In allen übereinanderliegenden zweiten Spulenleitern 126 fließt der Spulenstrom jeweils entweder in der zweiten Richtung 14 oder entgegengesetzt der zweiten Richtung 14. Die Spulenströme in nicht elektrisch leitend miteinander verbundenen Gruppen von übereinanderliegenden ersten Spulenleitern 125 können verschieden sein. Ebenso können die Spulenströme in nicht elektrisch leitend miteinander verbundenen Gruppen von übereinanderliegenden zweiten Spulenleitern 126 verschieden sein.

Bei den Statoreinheiten 100, 700, 701, 702, 703, 704, 705 liegt eine besonders geringe Anzahl von Statorlängslagen 710 in der dritten Richtung 15 neben einer Statorschräg- oder -querlage 711. Außerdem liegt eine besonders geringe Anzahl von Statorschräg- oder -querlagen 711 in der dritten Richtung 15 neben einer Statorlängslage 710. Dadurch weisen die Statorlagenanordnungen der Statoreinheiten 100, 700, 701, 702, 703, 704, 705 eine besonders niedrige Kapazitanz auf.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: dritte Richtung
- 18: Anschlussleitung
- 19: Modulgehäuse
- 30: Außenkante der Statorfläche
- 32: Seitenfläche der Statoreinheit
- 100: Statoreinheit
- 101: Oberseite der Statoreinheit
- 102: Unterseite der Statoreinheit
- 104: erste Statorlage
- 105: zweite Statorlage
- 106: dritte Statorlage
- 107: vierte Statorlage
- 108: Mittenebene
- 110: erster Statorsektor
- 112: zweiter Statorsektor
- 113: dritter Statorsektor
- 114: vierter Statorsektor
- 120: erste Statorsegmente
- 121: zweite Statorsegmente
- 125: erste Spulenleiter
- 126: zweite Spulenleiter
- 200: Läufer
- 201: Magnetanordnung
- 206: erste Läuferrichtung
- 208: zweite Läuferrichtung
- 210: erste Magneteinheit
- 211: erster Antriebsmagnet
- 220: zweite Magneteinheit
- 221: zweiter Antriebsmagnet
- 230: dritte Magneteinheit
- 240: vierte Magneteinheit

- 700: erste weitere Statoreinheit
- 701: zweite weitere Statoreinheit
- 702: dritte weitere Statoreinheit
- 703: vierte weitere Statoreinheit
- 704: fünfte weitere Statoreinheit
- 705: sechste weitere Statoreinheit
- 710: Statorlängslage
- 711: Statorschräg- oder -querlage
- 712: oberste Statorlage
- 713: unterste Statorlage
- 714: zweitoberste Statorlage
- 715: zweitunterste Statorlage
- 716: Innenlagen
- 718: mittlerer Abstand
- 719: nächstuntere Statorlage
- 720: erste Trägerplatte
- 721: erste Statorlängslage
- 722: erste Statorschräg- oder -querlage
- 723: erste Seite der ersten Trägerplatte
- 724: zweite Seite der ersten Trägerplatte
- 725: erste Vertikalverbindungsstruktur
- 726: erste Leiterstruktur
- 727: weitere erste Vertikalverbindungsstruktur
- 728: Isolierlage
- 730: zweite Trägerplatte
- 731: zweite Statorlängslage
- 732: zweite Statorschräg- oder -querlage
- 733: erste Seite der zweiten Trägerplatte
- 734: zweite Seite der zweiten Trägerplatte
- 735: zweite Vertikalverbindungsstruktur
- 736: zweite Leiterstruktur
- 737: weitere zweite Vertikalverbindungsstruktur
- 740: dritte Vertikalverbindungsstruktur
- 741: vierte Vertikalverbindungsstruktur
- 742: Durchgangsöffnung
- 744: dritte Leiterstruktur
- 750: weitere Trägerplatte
- 753: erste Seite der weiteren Trägerplatte
- 754: zweite Seite der weiteren Trägerplatte
- 756: erste weitere Trägerplatte
- 757: zweite weitere Trägerplatte
- 758: dritte weitere Trägerplatte
- 759: vierte weitere Trägerplatte
- 761: erster Teil von Statorlängslagen
- 762: zweiter Teil von Statorlängslagen

## Patentansprüche

1. Statoreinheit (100, 700, 701, 702, 703, 704, 705) zum Antreiben eines Läufers (200) eines elektrischen Planarmotors,
wobei die Statoreinheit (100, 700, 701, 702, 703, 704, 705) Statorlängslagen (710) mit ersten Spulenleitern (125) zur Wechselwirkung mit ersten Antriebsmagneten (211) des Läufers (200) und Statorschräg- oder -querlagen (711) mit zweiten Spulenleitern (126) zur Wechselwirkung mit zweiten Antriebsmagneten (221) des Läufers (200) umfasst,
wobei die ersten Spulenleiter (125) in einer ersten Richtung (12) länglich ausgedehnt sind,
wobei die zweiten Spulenleiter (126) in einer von der ersten Richtung (12) verschiedenen zweiten Richtung (14) länglich ausgedehnt sind,
wobei die Statorlängslagen (710) und die Statorschräg- oder -querlagen (711) in einer zu der ersten und zweiten Richtung (12, 14) senkrecht orientierten dritten Richtung (15) übereinander angeordnet sind,
**dadurch gekennzeichnet, dass** die oberste Statorlage (712) der Statoreinheit (100, 700, 701, 702, 703, 704, 705) und die unterste Statorlage (713) der Statoreinheit (100, 700, 701, 702, 703, 704, 705) jeweils als Statorlängslage (710) mit ersten Spulenleitern (125) ausgebildet ist,
wobei die Statorlängslagen (710) in der dritten Richtung (15) höchstens auf einer Seite neben einer Statorschräg- oder -querlage (711) angeordnet sind,
wobei die Statorschräg- oder -querlagen (711) in der dritten Richtung (15) höchstens auf einer Seite neben einer Statorlängslage (710) angeordnet sind.

2. Statoreinheit (100, 700, 701, 702, 703, 704, 705) nach Anspruch 1,
wobei die zweitoberste Statorlage (714) der Statoreinheit (100, 700, 701, 702, 703, 704, 705) und die zweitunterste Statorlage (715) der Statoreinheit (100, 700, 701, 702, 703, 704, 705) jeweils als Statorschräg- oder -querlagen (711) mit zweiten Spulenleitern (126) ausgebildet sind.

3. Statoreinheit (100, 700, 701, 702, 703, 704, 705) nach einem der vorhergehenden Ansprüche,
wobei die Statoreinheit (100, 700, 701, 702, 703, 704, 705) eine erste Statorlängslage (721) und eine zweite Statorlängslage (731), sowie eine erste Statorschräg- oder -querlage (722) und eine zweite Statorschräg- oder -querlage (732) umfasst,
wobei die Statoreinheit (100, 700, 701, 702, 703, 704, 705) eine in der ersten und zweiten Richtung (12, 14) ausgedehnte erste Trägerplatte (720) und eine in der ersten und zweiten Richtung (12, 14) ausgedehnte zweite Trägerplatte (730) umfasst,
wobei auf einer ersten Seite (723) der ersten Trägerplatte (720) die erste Statorlängslage (721) und auf einer der ersten Seite (723) der ersten Trägerplatte (720) in der dritten Richtung (15) gegenüberliegenden zweiten Seite (724) der ersten Trägerplatte (720) die erste Statorschrägoder -querlage (722) angeordnet ist,
wobei auf einer ersten Seite (733) der zweiten Trägerplatte (730) die zweite Statorlängslage (731) und auf einer der ersten Seite (733) der zweiten Trägerplatte (730) in der dritten Richtung (15) gegenüberliegenden zweiten Seite (734) der zweiten Trägerplatte (730) die zweite Statorschräg- oder -querlage (732) angeordnet ist,
wobei die zweite Trägerplatte (730) in der dritten Richtung (15) neben der ersten Trägerplatte (720) angeordnet und parallel zu der ersten Trägerplatte (720) ausgerichtet ist, wobei die zweite Seite (724) der ersten Trägerplatte (720) der zweiten Seite (734) der zweiten Trägerplatte (730) zugewandt angeordnet ist.

4. Statoreinheit (100, 700, 701, 702, 703, 704, 705) nach Anspruch 3,
wobei die erste Trägerplatte (720) eine erste Vertikalverbindungsstruktur (725) und die zweite Trägerplatte (730) eine zweite Vertikalverbindungsstruktur (735) umfasst,
wobei sich die erste Vertikalverbindungsstruktur (725) in der dritten Richtung (15) von der ersten Seite (723) der ersten Trägerplatte (720) bis zu der zweiten Seite (724) der ersten Trägerplatte (720) erstreckt und einen auf der ersten Seite (723) der ersten Trägerplatte (720) angeordneten ersten Spulenleiter (125) mit einer auf der zweiten Seite (724) der ersten Trägerplatte (720) angeordneten ersten Leiterstruktur (726) elektrisch leitend verbindet,
wobei sich die zweite Vertikalverbindungsstruktur (735) in der dritten Richtung (15) von der zweiten Seite (734) der zweiten Trägerplatte (730) bis zu der ersten Seite (733) der zweiten Trägerplatte (730) erstreckt und einen auf der ersten Seite (733) der zweiten Trägerplatte (730) angeordneten ersten Spulenleiter (125) mit einer auf der zweiten Seite (734) der zweiten Trägerplatte (730) angeordneten zweiten Leiterstruktur (736) elektrisch leitend verbindet.

5. Statoreinheit (100, 700, 701, 702, 703, 704, 705) nach Anspruch 4,
wobei die Statoreinheit (100, 700, 701, 702, 703, 704, 705) eine dritte Vertikalverbindungsstruktur (740) umfasst, wobei die dritte Vertikalverbindungsstruktur (740) einen auf der ersten Seite (723) der ersten Trägerplatte (720) angeordneten ersten Spulenleiter (125) mit einer auf der zweiten Seite (734) der zweiten Trägerplatte (730) angeordneten dritten Leiterstruktur (740) elektrisch leitend verbindet.

6. Statoreinheit (100, 700, 701, 702, 703, 704, 705) nach Anspruch 5,
wobei die dritte Vertikalverbindungsstruktur (740) eine Durchgangsöffnung umfasst, die sich in der dritten Richtung (15) von einer Oberseite (101) der Statoreinheit (100, 700, 701, 702, 703, 704, 705) bis zu einer Unterseite (102) der Statoreinheit (100, 700, 701, 702, 703, 704, 705) erstreckt.

7. Statoreinheit (100, 700, 701, 702, 703, 704, 705) nach einem der Ansprüche 4 bis 6,
wobei die Statoreinheit (100, 700, 701, 702, 703, 704, 705) in der ersten und zweiten Richtung (12, 14) ausgedehnte weitere Trägerplatten (750) umfasst,
wobei die weiteren Trägerplatten (750) jeweils eine erste Seite (753) und eine der ersten Seite (753) in der dritten Richtung (15) gegenüberliegende zweite Seite (754) aufweisen,
wobei an der ersten Seite (753) der weiteren Trägerplatten (750) jeweils eine Statorlängslage (710) und an der zweiten Seite (754) der weiteren Trägerplatten (750) jeweils eine Statorschräg- oder -querlage (711) angeordnet ist,
wobei die erste Trägerplatte (720), die zweite Trägerplatte (730) und die weiteren Trägerplatten (750) in der dritten Richtung (15) nebeneinander angeordnet und parallel zueinander ausgerichtet sind,
wobei einander zugewandte Seiten nebeneinander angeordneter Trägerplatten (720, 730, 750) in der dritten Richtung (15) abwechselnd als einander zugewandte erste Seiten (723, 733, 753) oder als einander zugewandte zweite Seiten (724, 734, 754) ausgebildet sind.

8. Statoreinheit (100, 700, 701, 702, 703, 704, 705) nach einem der Ansprüche 1 bis 6,
wobei die Statoreinheit (100, 700, 701, 702, 703, 704, 705) mindestens zwei Statorlängslagen (710) mit ersten Spulenleitern (125) und mindestens drei Statorschräg- oder -querlagen (711) mit zweiten Spulenleitern (126) umfasst, wobei alle Statorschräg- oder -querlagen (711) in der dritten Richtung (15) nebeneinander angeordnet sind,
wobei ein erster Teil (761) der Statorlängslagen (710) in der dritten Richtung (15) nebeneinander und oberhalb der Statorschräg- oder -querlagen (711) und ein zweiter Teil (762) der Statorlängslagen (710) in der dritten Richtung (15) nebeneinander unterhalb der Statorschräg- oder -querlagen (711) angeordnet ist, wobei der erste Teil (761) der Statorlängslagen (710) und der zweite Teil (762) der Statorlängslagen (710) vorzugsweise eine gleiche Anzahl von Statorlängslagen (710) umfasst.

9. Statoreinheit (100, 700, 701, 702, 703, 704, 705) nach einem der vorhergehenden Ansprüche,
wobei die erste Richtung (12) und die zweite Richtung (14) senkrecht zueinander orientiert sind.

10. Statoreinheit (100, 700, 701, 702, 703, 704, 705) nach einem der vorhergehenden Ansprüche,
wobei die Statorlängslagen (710) und die Statorschräg- oder -querlagen (711) in der dritten Richtung (15) den gleichen mittleren Abstand (718) von einer Statorfläche (11) der Statoreinheit (100, 700, 701, 702, 703, 704, 705) aufweisen.

11. Statoreinheit (100, 700, 701, 702, 703, 704, 705) nach einem der vorhergehenden Ansprüche,
wobei eine erste Gesamtzahl von Statorlängslagen (710) einer zweiten Gesamtzahl von Statorschräg- oder -querlagen (711) entspricht.

12. Statoreinheit (100, 700, 701, 702, 703, 704, 705) nach einem der vorhergehenden Ansprüche,
wobei die ersten Spulenleiter (125) in der dritten Richtung (15) übereinanderliegend und parallel zueinander angeordnet sind,
wobei die zweiten Spulenleiter (126) in der dritten Richtung (15) übereinanderliegend und parallel zueinander angeordnet sind.

13. Statoreinheit (100, 700, 701, 702, 703, 704, 705) nach Anspruch 12,
wobei in der dritten Richtung (15) übereinanderliegende erste Spulenleiter (125) jeweils derart miteinander elektrisch leitend verbunden sind, dass in den übereinanderliegenden ersten Spulenleitern (125) jeweils ein gleicher Spulenstrom fließt,
wobei in der dritten Richtung (15) übereinanderliegende zweite Spulenleiter (126) jeweils derart miteinander elektrisch leitend verbunden sind, dass in den übereinanderliegenden zweiten Spulenleitern (126) jeweils ein gleicher Spulenstrom fließt.

14. Statoreinheit (100, 700, 701, 702, 703, 704, 705) nach Anspruch 13,
wobei die übereinanderliegenden ersten Spulenleiter (125) jeweils elektrisch in Reihe geschaltet sind,
wobei die übereinanderliegenden zweiten Spulenleiter (126) jeweils elektrisch in Reihe geschaltet sind.

15. Statoreinheit (100, 700, 701, 702, 703, 704, 705) zum Antreiben eines Läufers (200) eines elektrischen Planarmotors,
wobei die Statoreinheit (100, 700, 701, 702, 703, 704, 705) mindestens zwei Statorlängslagen (710) mit ersten Spulenleitern (125) zur Wechselwirkung mit ersten Antriebsmagneten (211) des Läufers (200) und mindestens drei Statorschräg- oder -querlagen (711) mit zweiten Spulenleitern (126) zur Wechselwirkung mit zweiten Antriebsmagneten (221) des Läufers (200) umfasst,
wobei die ersten Spulenleiter (125) in einer ersten Richtung (12) länglich ausgedehnt sind,
wobei die zweiten Spulenleiter (126) in einer von der ersten Richtung (12) verschiedenen zweiten Richtung (14) länglich ausgedehnt sind,
wobei die Statorlängslagen (710) und die Statorschräg- oder -querlagen (711) in einer zu der ersten und zweiten Richtung (12, 14) senkrecht orientierten dritten Richtung (15) übereinander angeordnet sind,
**dadurch gekennzeichnet, dass** alle Statorlängslagen (710) in der dritten Richtung (15) nebeneinander angeordnet sind,
wobei alle Statorschräg- oder -querlagen (711) in der dritten Richtung (15) nebeneinander angeordnet sind,
so dass jede Statorschräg- oder -querlage (711) in der dritten Richtung (15) höchstens auf einer Seite neben einer Statorlängslage (710) und jede Statorlängslage (710) in der dritten Richtung (15) höchstens auf einer Seite neben einer Statorschräg- oder -querlage (711) angeordnet ist.

## Claims

1. Stator unit (100, 700, 701, 702, 703, 704, 705) for driving a rotor (200) of an electrical planar motor, wherein the stator unit (100, 700, 701, 702, 703, 704, 705) comprises stator longitudinal layers (710) with first coil conductors (125) for interacting with first drive magnets (211) of the rotor (200) and stator oblique or transverse layers (711) with second coil conductors (126) for interacting with second drive magnets (221) of the rotor (200), wherein the first coil conductors (125) are extended in an elongated manner in a first direction (12), wherein the second coil conductors (126) are extended in an elongated manner in a second direction (14) different from the first direction (12),
wherein the stator longitudinal layers (710) and the stator oblique or transverse layers (711) are arranged one above another in a third direction (15) oriented perpendicularly to the first and second directions (12, 14),
**characterized in that** the uppermost stator layer (712) of the stator unit (100, 700, 701, 702, 703, 704, 705) and the lowermost stator layer (713) of the stator unit (100, 700, 701, 702, 703, 704, 705) are each formed as a stator longitudinal layer (710) with first coil conductors (125),
wherein the stator longitudinal layers (710) are arranged in the third direction (15) at most on one side next to a stator oblique or transverse layer (711),
wherein the stator oblique or transverse layers (711) are arranged in the third direction (15) at most on one side next to a stator longitudinal layer (710) .

2. Stator unit (100, 700, 701, 702, 703, 704, 705) according to Claim 1,
wherein the second uppermost stator layer (714) of the stator unit (100, 700, 701, 702, 703, 704, 705) and the second lowermost stator layer (715) of the stator unit (100, 700, 701, 702, 703, 704, 705) are each formed as stator oblique or transverse layers (711) with second coil conductors (126).

3. Stator unit (100, 700, 701, 702, 703, 704, 705) according to any one of the preceding claims, wherein the stator unit (100, 700, 701, 702, 703, 704, 705) comprises a first stator longitudinal layer (721) and a second stator longitudinal layer (731), and a first stator oblique or transverse layer (722) and a second stator oblique or transverse layer (732),
wherein the stator unit (100, 700, 701, 702, 703, 704, 705) comprises a first carrier plate (720) which is extended in the first and second directions (12, 14) and a second carrier plate (730) which is extended in the first and second directions (12, 14),
wherein the first stator longitudinal layer (721) is arranged on a first side (723) of the first carrier plate (720) and the first stator oblique or transverse layer (722) is arranged on a second side (724) of the first carrier plate (720) opposite the first side (723) of the first carrier plate (720) in the third direction (15),
wherein the second stator longitudinal layer (731) is arranged on a first side (733) of the second carrier plate (730) and the second stator oblique or transverse layer (732) is arranged on a second side (734) of the second carrier plate (730) opposite the first side (733) of the second carrier plate (730) in the third direction (15),
wherein the second carrier plate (730) is arranged in the third direction (15) next to the first carrier plate (720) and is oriented parallel to the first carrier plate (720),
wherein the second side (724) of the first carrier plate (720) is arranged facing the second side (734) of the second carrier plate (730).

4. Stator unit (100, 700, 701, 702, 703, 704, 705) according to Claim 3,
wherein the first carrier plate (720) comprises a first vertical connecting structure (725) and the second carrier plate (730) comprises a second vertical connecting structure (735),
wherein the first vertical connecting structure (725) extends in the third direction (15) from the first side (723) of the first carrier plate (720) as far as the second side (724) of the first carrier plate (720) and electrically conductively connects a first coil conductor (125) arranged on the first side (723) of the first carrier plate (720) to a first conductor structure (726) arranged on the second side (724) of the first carrier plate (720),
wherein the second vertical connecting structure (735) extends in the third direction (15) from the second side (734) of the second carrier plate (730) as far as the first side (733) of the second carrier plate (730) and electrically conductively connects a first coil conductor (125) arranged on the first side (733) of the second carrier plate (730) to a second conductor structure (736) arranged on the second side (734) of the second carrier plate (730).

5. Stator unit (100, 700, 701, 702, 703, 704, 705) according to Claim 4,
wherein the stator unit (100, 700, 701, 702, 703, 704, 705) comprises a third vertical connecting structure (740),
wherein the third vertical connecting structure (740) electrically conductively connects a first coil conductor (125) arranged on the first side (723) of the first carrier plate (720) to a third conductor structure (740) arranged on the second side (734) of the second carrier plate (730).

6. Stator unit (100, 700, 701, 702, 703, 704, 705) according to Claim 5,
wherein the third vertical connecting structure (740) comprises a passage opening which extends in the third direction (15) from an upper side (101) of the stator unit (100, 700, 701, 702, 703, 704, 705) as far as a lower side (102) of the stator unit (100, 700, 701, 702, 703, 704, 705).

7. Stator unit (100, 700, 701, 702, 703, 704, 705) according to any one of Claims 4 to 6,
wherein the stator unit (100, 700, 701, 702, 703, 704, 705) comprises further carrier plates (750) extended in the first and second directions (12, 14),
wherein the further carrier plates (750) each have a first side (753) and a second side (754) opposite the first side (753) in the third direction (15), wherein in each case one stator longitudinal layer (710) is arranged on the first side (753) of the further carrier plates (750) and in each case one stator oblique or transverse layer (711) is arranged on the second side (754) of the further carrier plates (750),
wherein the first carrier plate (720), the second carrier plate (730) and the further carrier plates (750) are arranged next to one another in the third direction (15) and are oriented parallel to one another,
wherein mutually facing sides of carrier plates (720, 730, 750) arranged next to one another in the third direction (15) are formed in an alternating manner as mutually facing first sides (723, 733, 753) or as mutually facing second sides (724, 734, 754) .

8. Stator unit (100, 700, 701, 702, 703, 704, 705) according to any one of Claims 1 to 6,
wherein the stator unit (100, 700, 701, 702, 703, 704, 705) comprises at least two stator longitudinal layers (710) with first coil conductors (125) and at least three stator oblique or transverse layers (711) with second coil conductors (126),
wherein all the stator oblique or transverse layers (711) are arranged next to one another in the third direction (15),
wherein a first part (761) of the stator longitudinal layers (710) is arranged next to one another in the third direction (15) and above the stator oblique or transverse layers (711) and a second part (762) of the stator longitudinal layers (710) is arranged next to one another in the third direction (15) below the stator oblique or transverse layers (711), wherein the first part (761) of the stator longitudinal layers (710) and the second part (762) of the stator longitudinal layers (710) preferably comprise an equal number of stator longitudinal layers (710).

9. Stator unit (100, 700, 701, 702, 703, 704, 705) according to any one of the preceding claims, wherein the first direction (12) and the second direction (14) are oriented perpendicularly to each other.

10. Stator unit (100, 700, 701, 702, 703, 704, 705) according to any one of the preceding claims, wherein the stator longitudinal layers (710) and the stator oblique or transverse layers (711) in the third direction (15) are at the same average distance (718) from a stator surface (11) of the stator unit (100, 700, 701, 702, 703, 704, 705).

11. Stator unit (100, 700, 701, 702, 703, 704, 705) according to any one of the preceding claims, wherein a first total number of stator longitudinal layers (710) corresponds to a second total number of stator oblique or transverse layers (711).

12. Stator unit (100, 700, 701, 702, 703, 704, 705) according to any one of the preceding claims, wherein the first coil conductors (125) are arranged lying one above another and parallel to one another in the third direction (15),
wherein the second coil conductors (126) are arranged lying one above another and parallel to one another in the third direction (15).

13. Stator unit (100, 700, 701, 702, 703, 704, 705) according to Claim 12,
wherein first coil conductors (125) lying one above another in the third direction (15) are in each case electrically conductively connected to one another in such a manner that in each case an identical coil current flows in the first coil conductors (125) lying one above another,
wherein second coil conductors (126) lying one above another in the third direction (15) are in each case electrically conductively connected to one another in such a manner that in each case an identical coil current flows in the second coil conductors (126) lying one above another.

14. Stator unit (100, 700, 701, 702, 703, 704, 705) according to Claim 13,
wherein the first coil conductors (125) lying one above another are in each case electrically connected in series,
wherein the second coil conductors (126) lying one above another are in each case electrically connected in series.

15. Stator unit (100, 700, 701, 702, 703, 704, 705) for driving a rotor (200) of an electrical planar motor, wherein the stator unit (100, 700, 701, 702, 703, 704, 705) comprises at least two stator longitudinal layers (710) with first coil conductors (125) for interacting with first drive magnets (211) of the rotor (200) and at least three stator oblique or transverse layers (711) with second coil conductors (126) for interacting with second drive magnets (221) of the rotor (200),
wherein the first coil conductors (125) are extended in an elongated manner in a first direction (12), wherein the second coil conductors (126) are extended in an elongated manner in a second direction (14) different from the first direction (12),
wherein the stator longitudinal layers (710) and the stator oblique or transverse layers (711) are arranged one above another in a third direction (15) oriented perpendicularly to the first and second directions (12, 14),
**characterized in that** all the stator longitudinal layers (710) are arranged next to one another in the third direction (15),
wherein all the stator oblique or transverse layers (711) are arranged next to one another in the third direction (15),
such that each stator oblique or transverse layer (711) is arranged in the third direction (15) at most on one side next to a stator longitudinal layer (710) and each stator longitudinal layer (710) is arranged in the third direction (15) at most on one side next to a stator oblique or transverse layer (711) .

## Revendications

1. Unité de stator (100, 700, 701, 702, 703, 704, 705) permettant d'entraîner un rotor (200) d'un moteur planaire électrique,
l'unité de stator (100, 700, 701, 702, 703, 704, 705) comprenant des couches de stator longitudinales (710) avec des premiers conducteurs de bobine (125) pour une interaction avec des premiers aimants d'entraînement (211) du rotor (200) et des couches de stator diagonales ou transversales (711) avec des deuxièmes conducteurs de bobine (126) pour une interaction avec des deuxièmes aimants d'entraînement (221) du rotor (200),
les premiers conducteurs de bobine (125) étant allongés dans une première direction (12),
les deuxièmes conducteurs de bobine (126) étant allongés dans une deuxième direction (14) différente de la première direction (12),
les couches de stator longitudinales (710) et les couches de stator diagonales ou transversales (711) étant disposées les unes au-dessus des autres dans une troisième direction (15) orientée perpendiculairement à la première et à la deuxième direction (12, 14),
**caractérisée en ce que** la couche de stator la plus haute (712) de l'unité de stator (100, 700, 701, 702, 703, 704, 705) et la couche de stator la plus basse (713) de l'unité de stator (100, 700, 701, 702, 703, 704, 705) sont respectivement réalisées sous la forme d'une couche de stator longitudinale (710) avec les premiers conducteurs de bobine (125),
les couches de stator longitudinales (710) étant disposées dans la troisième direction (15) au maximum sur une face à côté d'une couche de stator diagonale ou transversale (711),
les couches de stator diagonales ou transversales (711) étant disposées dans la troisième direction (15) au maximum sur une face à côté d'une couche de stator longitudinale (710).

2. Unité de stator (100, 700, 701, 702, 703, 704, 705) selon la revendication 1, dans laquelle la deuxième plus haute couche de stator (714) de l'unité de stator (100, 700, 701, 702, 703, 704, 705) et la deuxième plus basse couche de stator (715) de l'unité de stator (100, 700, 701, 702, 703, 704, 705) sont respectivement réalisées sous la forme de couches de stator diagonales ou transversales (711) avec des deuxièmes conducteurs de bobine (126).

3. Unité de stator (100, 700, 701, 702, 703, 704, 705) selon l'une quelconque des revendications précédentes,
l'unité de stator (100, 700, 701, 702, 703, 704, 705) comprenant une première couche de stator longitudinale (721) et une deuxième couche de stator longitudinale (731), ainsi qu'une première couche de stator diagonale ou transversale (722) et une deuxième couche de stator diagonale ou transversale (732),
l'unité de stator (100, 700, 701, 702, 703, 704, 705) comprenant une première plaque de support (720) s'étendant dans la première et la deuxième direction (12, 14) et une deuxième plaque de support (730) s'étendant dans la première et la deuxième direction (12, 14),
la première couche de stator longitudinale (721) étant disposée sur une première face (723) de la première plaque de support (720), et la première couche de stator diagonale ou transversale (722) étant disposée sur une deuxième face (724) de la première plaque de support (720), opposée à la première face (723) de la première plaque de support (720) dans la troisième direction (15),
la deuxième couche de stator longitudinale (731) étant disposée sur une première face (733) de la deuxième plaque de support (730), et la deuxième couche de stator diagonale ou transversale (732) étant disposée sur une deuxième face (734) de la deuxième plaque de support (730), opposée à la première face (733) de la deuxième plaque de support (730) dans la troisième direction (15),
la deuxième plaque de support (730) étant disposée dans la troisième direction (15) à côté de la première plaque de support (720) et alignée en parallèle à la première plaque de support (720),
la deuxième face (724) de la première plaque de support (720) étant disposée en étant tournée vers la deuxième face (734) de la deuxième plaque de support (730) .

4. Unité de stator (100, 700, 701, 702, 703, 704, 705) selon la revendication 3,
la première plaque de support (720) comprenant une première structure de liaison verticale (725), et la deuxième plaque de support (730) comprenant une deuxième structure de liaison verticale (735),
la première structure de liaison verticale (725) s'étendant dans la troisième direction (15) de la première face (723) de la première plaque de support (720) à la deuxième face (724) de la première plaque de support (720), et reliant de manière électriquement conductrice un premier conducteur de bobine (125) disposé sur la première face (723) de la première plaque de support (720) à une première structure conductrice (726) disposée sur la deuxième face (724) de la première plaque de support (720),
la deuxième structure de liaison verticale (735) s'étendant dans la troisième direction (15) de la deuxième face (734) de la deuxième plaque de support (730) à la première face (733) de la deuxième plaque de support (730), et reliant de manière électriquement conductrice un premier conducteur de bobine (125) disposé sur la première face (733) de la deuxième plaque de support (730) à une deuxième structure conductrice (736) disposée sur la deuxième face (734) de la deuxième plaque de support (730).

5. Unité de stator (100, 700, 701, 702, 703, 704, 705) selon la revendication 4,
l'unité de stator (100, 700, 701, 702, 703, 704, 705) comprenant une troisième structure de liaison verticale (740),
la troisième structure de liaison verticale (740) reliant de manière électriquement conductrice un premier conducteur de bobine (125) disposé sur la première face (723) de la première plaque de support (720) à une troisième structure conductrice (740) disposée sur la deuxième face (734) de la deuxième plaque de support (730).

6. Unité de stator (100, 700, 701, 702, 703, 704, 705) selon la revendication 5,
la troisième structure de liaison verticale (740) comprenant une ouverture traversante qui s'étend dans la troisième direction (15) d'une face supérieure (101) de l'unité de stator (100, 700, 701, 702, 703, 704, 705) à une face inférieure (102) de l'unité de stator (100, 700, 701, 702, 703, 704, 705).

7. Unité de stator (100, 700, 701, 702, 703, 704, 705) selon l'une quelconque des revendications 4 à 6,
l'unité de stator (100, 700, 701, 702, 703, 704, 705) comprenant d'autres plaques de support (750) s'étendant dans la première et la deuxième direction (12, 14),
les autres plaques de support (750) présentant respectivement une première face (753) et une deuxième face (754) opposée à la première face (753) dans la troisième direction (15),
respectivement une couche de stator longitudinale (710) étant disposée sur la première face (753) des autres plaques de support (750), et respectivement une couche de stator diagonale ou transversale (711) étant disposée sur la deuxième face (754) des autres plaques de support (750),
la première plaque de support (720), la deuxième plaque de support (730) et les autres plaques de support (750) étant disposées côte à côte dans la troisième direction (15) et alignées en parallèle les unes aux autres,
des faces tournées les unes vers les autres de plaques de support (720, 730, 750) disposées côte à côte dans la troisième direction (15) étant réalisées en alternance sous la forme de premières faces (723, 733, 753) tournées les unes vers les autres ou de deuxièmes faces tournées les unes vers les autres (724, 734, 754).

8. Unité de stator (100, 700, 701, 702, 703, 704, 705) selon l'une quelconque des revendications 1 à 6, l'unité de stator (100, 700, 701, 702, 703, 704, 705) comprenant au moins deux couches de stator longitudinales (710) avec des premiers conducteurs de bobine (125) et au moins trois couches de stator diagonales ou transversales (711) avec des deuxièmes conducteurs de bobine (126),
toutes les couches de stator diagonales ou transversales (711) étant disposées côte à côte dans la troisième direction (15),
une première partie (761) des couches de stator longitudinales (710) étant disposée côte à côte dans la troisième direction (15) et au-dessus des couches de stator diagonales ou transversales (711), et une deuxième partie (762) des couches de stator longitudinales (710) étant disposée côte à côte dans la troisième direction (15) au-dessous des couches de stator diagonales ou transversales (711), la première partie (761) des couches de stator longitudinales (710) et la deuxième partie (762) des couches de stator longitudinales (710) comprenant de préférence un même nombre de couches de stator longitudinales (710).

9. Unité de stator (100, 700, 701, 702, 703, 704, 705) selon l'une quelconque des revendications précédentes,
la première direction (12) et la deuxième direction (14) étant orientées perpendiculairement l'une à l'autre.

10. Unité de stator (100, 700, 701, 702, 703, 704, 705) selon l'une quelconque des revendications précédentes,
les couches de stator longitudinales (710) et les couches de stator diagonales ou transversales (711) présentant dans la troisième direction (15) la même distance moyenne (718) par rapport à une surface de stator (11) de l'unité de stator (100, 700, 701, 702, 703, 704, 705).

11. Unité de stator (100, 700, 701, 702, 703, 704, 705) selon l'une quelconque des revendications précédentes,
un premier nombre total de couches de stator longitudinales (710) correspondant à un deuxième nombre total de couches de stator diagonales ou transversales (711) .

12. Unité de stator (100, 700, 701, 702, 703, 704, 705) selon l'une quelconque des revendications précédentes,
les premiers conducteurs de bobine (125) étant disposés dans la troisième direction (15) de manière superposée et en parallèle les uns aux autres,
les deuxièmes conducteurs de bobine (126) étant disposés dans la troisième direction (15) de manière superposée et en parallèle les uns aux autres.

13. Unité de stator (100, 700, 701, 702, 703, 704, 705) selon la revendication 12,
des premiers conducteurs de bobine (125) superposés dans la troisième direction (15) étant respectivement reliés les uns aux autres de manière électriquement conductrice de telle sorte qu'un même courant de bobine circule respectivement dans les premiers conducteurs de bobine (125) superposés,
des deuxièmes conducteurs de bobine (126) superposés dans la troisième direction (15) étant respectivement reliés les uns aux autres de manière électriquement conductrice de telle sorte qu'un même courant de bobine circule respectivement dans les deuxièmes conducteurs de bobine (126) superposés.

14. Unité de stator (100, 700, 701, 702, 703, 704, 705) selon la revendication 13,
les premiers conducteurs de bobine (125) superposés étant respectivement connectés électriquement en série,
les deuxièmes conducteurs de bobine (126) superposés étant respectivement connectés électriquement en série.

15. Unité de stator (100, 700, 701, 702, 703, 704, 705) permettant d'entraîner un rotor (200) d'un moteur planaire électrique,
l'unité de stator (100, 700, 701, 702, 703, 704, 705) comprenant au moins deux couches de stator longitudinales (710) avec des premiers conducteurs de bobine (125) pour une interaction avec des premiers aimants d'entraînement (211) du rotor (200) et au moins trois couches de stator diagonales ou transversales (711) avec des deuxièmes conducteurs de bobine (126) pour une interaction avec des deuxièmes aimants d'entraînement (221) du rotor (200),
les premiers conducteurs de bobine (125) étant allongés dans une première direction (12),
les deuxièmes conducteurs de bobine (126) étant allongés dans une deuxième direction (14) différente de la première direction (12),
les couches de stator longitudinales (710) et les couches de stator diagonales ou transversales (711) étant disposées les unes au-dessus des autres dans une troisième direction (15) orientée perpendiculairement à la première et à la deuxième direction (12, 14),
**caractérisée en ce que** toutes les couches de stator longitudinales (710) sont disposées côte à côte dans la troisième direction (15),
toutes les couches de stator diagonales ou transversales (711) étant disposées côte à côte dans la troisième direction (15),
de sorte que chaque couche de stator diagonale ou transversale (711) est disposée dans la troisième direction (15) au maximum sur une face à côté d'une couche de stator longitudinale (710), et chaque couche de stator longitudinale (710) est disposée dans la troisième direction (15) au maximum sur une face à côté d'une couche de stator diagonale ou transversale (711).
